# EUROPEAN PATENT APPLICATION

(11) **EP 4 822 493 A1**
(43) Date of publication of application: **14.10.2026**
(21) Application number: 24917286.7
(22) Date of filing: 19.11.2024
(51) Int. Cl.: G06F 3/01, G06N 3/0475, G06F 40/109, G02B 27/01, G06F 3/04842, G06F 3/00, G06F 40/20

(54) **ELECTRONIC DEVICE AND METHOD FOR GENERATING CONTENT**

(30) Priority: 14.01.2024 KR 20240005760; 05.03.2024 KR 20240031517; 02.09.2024 KR 20240118860
(71) Applicant: Samsung Electronics Co., Ltd., Suwon-si, Gyeonggi-do 16677 (KR)
(72) Inventor: LIM, Kwangyong, Suwon-si, Gyeonggi-do 16677 (KR); KIM, Sooryuh, Suwon-si, Gyeonggi-do 16677 (KR); SON, Dongil, Suwon-si, Gyeonggi-do 16677 (KR); SON, Chaeyeon, Suwon-si, Gyeonggi-do 16677 (KR); AHN, Sunggeun, Suwon-si, Gyeonggi-do 16677 (KR); CHOI, Bokun, Suwon-si, Gyeonggi-do 16677 (KR)
(74) Representative: Gulde & Partner
(86) International application number: PCT/KR2024/018296
(87) International publication number: WO 2025/150689

(57) **Abstract**

An electronic device according to one embodiment comprises: a processor; a memory for storing instructions; and a display. When executed by the processor, the instructions cause the electronic device to: display, on the display, a screen including a plurality of first keywords and first candidate content; add a second keyword into the screen on the basis of receiving of a first user input for adding the second keyword; remove, from the screen, at least one keyword from among the plurality of first keywords on the basis of receiving of a second user input for removing the at least one keyword from among the plurality of first keywords; and change the first candidate content to second candidate content based on one or more keywords included in the screen.

## Description

### [Technical Field]

The disclosure relates to an electronic device and a method for generating content.

### [Background Art]

Electronic devices may include a smartphone, a laptop, a computer, and a wearable device used while being worn on a user's body. For example, the wearable device may be an electronic device that provides an augmented reality (AR) service displaying information generated by the wearable device or an external electronic device in association with an external object in the real-world in order to provide an enhanced user experience. For example, the wearable device may include AR glasses and/or a head-mounted device (HMD)

The above information may be presented as related art only to assist with an understanding of the disclosure. No determination has been made, and no assertion is made, as to whether any of the above might be applicable as prior art with regard to the disclosure.

### [Detailed Description of Invention]

### [Technical Solution]

An electronic device is provided. The electronic device may include a processor including processing circuitry. The electronic device may include memory storing instructions. The electronic device may include a display. The instructions, when executed by the processor individually or collectively, may cause the electronic device to display, on the display, a screen including a plurality of first keywords and first candidate content based on the plurality of first keywords. The instructions, when executed by the processor individually or collectively, may cause the electronic device to, while displaying the screen on the display, add a second keyword within the screen based on receiving a first user input for adding the second keyword, or remove at least one keyword from the plurality of first keywords in the screen based on receiving a second user input for removing the at least one keyword from the plurality of first keywords, and change the first candidate content to a second candidate content based on one or more keywords included in the screen.

An electronic device is provided. The electronic device may include a processor including processing circuitry. The electronic device may include memory storing instructions. The electronic device may include a display. The instructions, when executed individually or collectively by the processor, may cause the electronic device to, while first content is displayed via the display, obtain a first prompt corresponding to the first content from the first content. The instructions, when executed individually or collectively by the processor, may cause the electronic device to display the first prompt via the display. The instructions, when executed individually or collectively by the processor, may cause the electronic device to receive a first user input for selecting at least a portion of the first content or one or more words included in the first prompt. The instructions, when executed individually or collectively by the processor, may cause the electronic device to provide a visual effect representing the at least the portion of the first content or the one or more words, corresponding to the first user input.

A method performed by an electronic device including a display is provided. The method may include obtaining, from first content, a first prompt corresponding to the first content, while the first content is displayed via the display. The method may include displaying the first prompt via the display. The method may include receiving a first user input for selecting at least a portion of the first content or one or more words included in the first prompt. The method may include providing, based on the first user input, a visual effect corresponding to the at least the portion of the first content or the one or more words.

### [Brief Description of Drawings]

FIG. 1 is a block diagram of an electronic device in a network environment according to various embodiments.
FIG. 2 is a block diagram illustrating components of an example electronic device.
FIG. 3 is a flowchart illustrating an operation in which an example electronic device generates third content.
FIG. 4A illustrates an example screen showing a user input for displaying content via a display.
FIG. 4B illustrates an example screen showing a first user input.
FIG. 4C illustrates an example screen showing a second user input.
FIG. 4D schematically illustrates a process of generating third content.
FIG. 4E illustrates an example screen for adjusting a degree of modification.
FIG. 5 is a flowchart illustrating operations of an example electronic device for generating a description of first content.
FIG. 6 is a diagram illustrating exemplary operations for analyzing original content of first content.
FIG. 7 is a flowchart illustrating operations of an example electronic device for extracting and updating a first prompt.
FIG. 8 illustrates operations for updating a first prompt.
FIG. 9 is a diagram for explaining a tuned-up first prompt.
FIG. 10A illustrates an example screen for applying a first prompt to content displayed via another electronic device located in an external environment.
FIG. 10B illustrates an example screen in which content displayed via another electronic device is changed.
FIG. 11 illustrates an example screen for representing an object related to a first prompt.
FIG. 12 illustrates an example screen for extracting a first prompt for a partial area of first content.
FIG. 13 illustrates an example screen for extracting a first prompt from one or more user-preferred contents.
FIG. 14A illustrates an example screen for extracting a first prompt for one of frames constituting video content.
FIG. 14B illustrates an example screen in which a first prompt for one of frames constituting video content is applied to second content.
FIG. 14C illustrates an example screen in which second content is displayed.
FIG. 15A illustrates an example screen for providing a first prompt based on a user history.
FIG. 15B is a flowchart illustrating an operation for providing a prompt based on content modified by a plurality of external electronic devices.
FIG. 15C illustrates an example screen for providing a prompt based on content modified by a plurality of external electronic devices.
FIG. 16 illustrates an example screen provided when use of first content is restricted.
FIG. 17A illustrates a perspective view of a wearable device according to an example embodiment.
FIG. 17B illustrates one or more hardware components disposed in a wearable device according to an example embodiment.
FIGS. 18A and 18B illustrate an external appearance of a wearable device according to an example embodiment.
FIGS. 19A and 19B illustrate a process in which an electronic device changes second content according to an embodiment.
FIG. 20 is a flowchart illustrating an operation for providing candidate content of an electronic device according to an example embodiment.
FIGS. 21, 22, 23, and 24 illustrate processes of changing first candidate content to second candidate content according to a first user input.
FIG. 25 is a flowchart illustrating an operation for providing candidate content of an electronic device according to an example embodiment.
FIGS. 26, 27, and 28 illustrate processes of changing first candidate content to second candidate content according to a second user input.
FIG. 29 is a flowchart illustrating an operation in which an electronic device changes second content using a plurality of first keywords from first content, according to an example embodiment.
FIGS. 30, 31, 32, and 33 illustrate processes of changing first candidate content to second candidate content according to a second user input.
FIG. 34 is a flowchart illustrating operations in which an electronic device provides a recommended keyword according to an example embodiment.
FIGS. 35, 36, and 37 illustrate processes in which an electronic device changes first candidate content to second candidate content according to a recommended keyword, according to an example embodiment.
FIG. 38 is a flowchart illustrating an operation in which an electronic device provides candidate content based on a conversation history of a messenger application, according to an example embodiment.
FIGS. 39, 40A, 40B, 40C, and 40D illustrate processes in which an electronic device provides a plurality of first keywords and first candidate content according to first history information, according to an example embodiment.
FIG. 41 is a flowchart illustrating an operation in which an electronic device provides candidate content based on a search history of a virtual keyboard application, according to an example embodiment.
FIGS. 42 and 43 illustrate processes in which an electronic device provides a plurality of first keywords and first candidate content according to second history information, according to an example embodiment.

### [Mode for Carrying out the Invention]

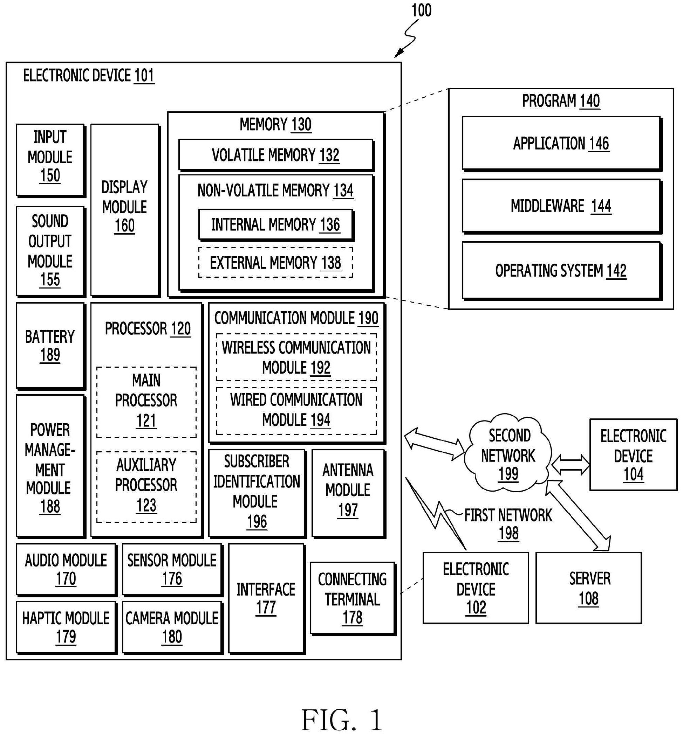

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may, for example, control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but the disclosure is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In an embodiment, the external electronic device 104 may include an internetof-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart card, or health care) based on 5G communication technology and IoT-related technology.

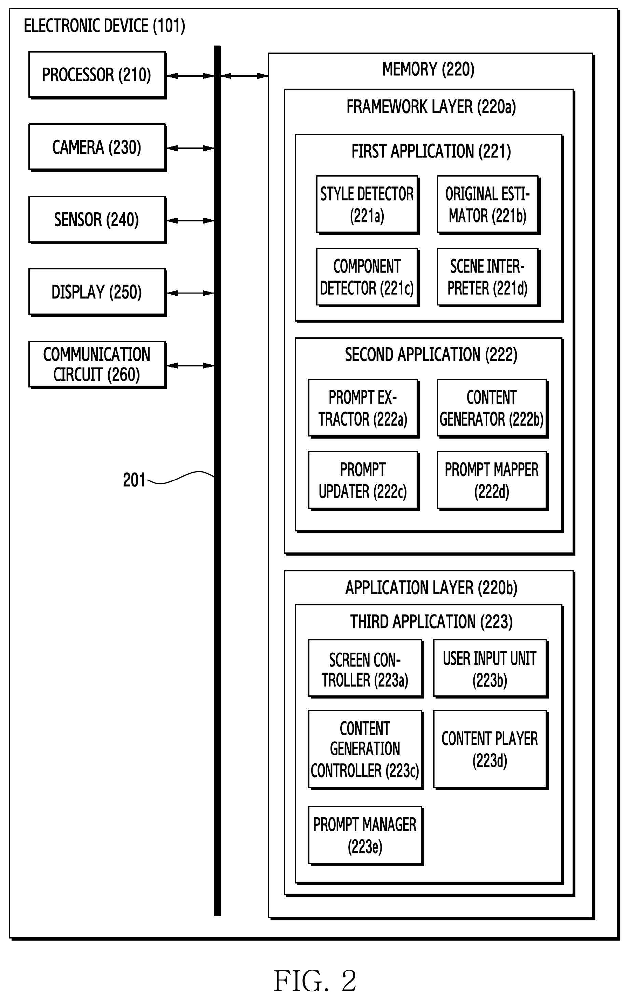

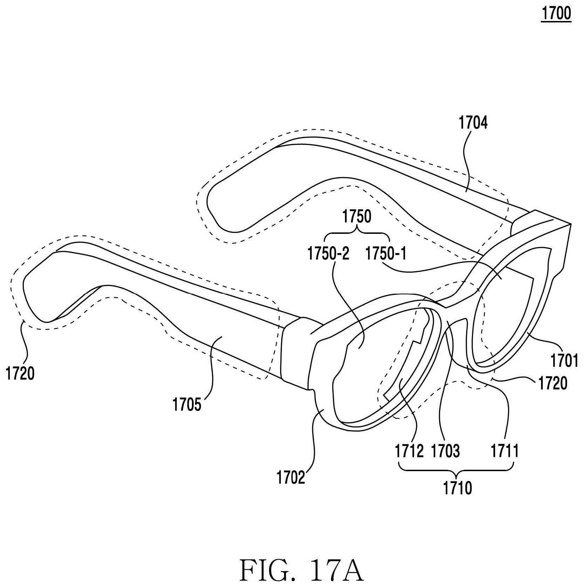

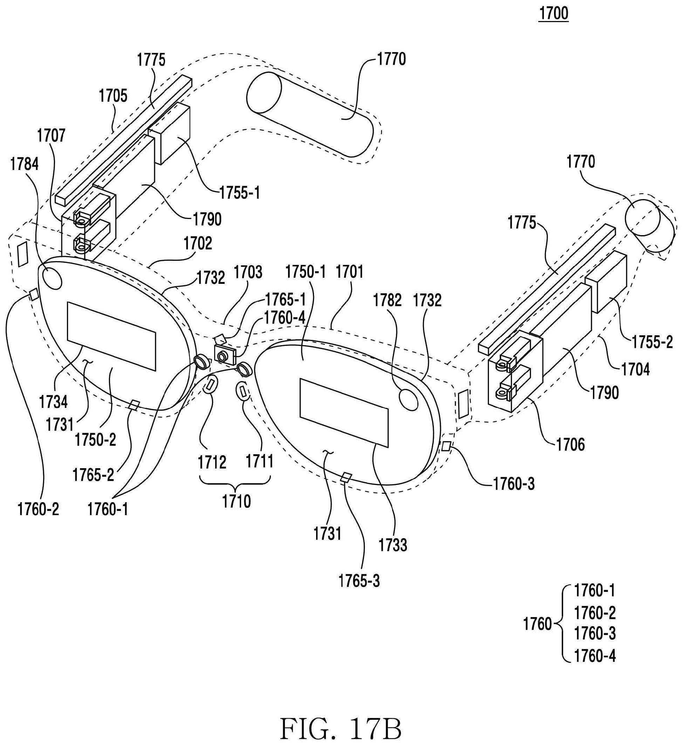

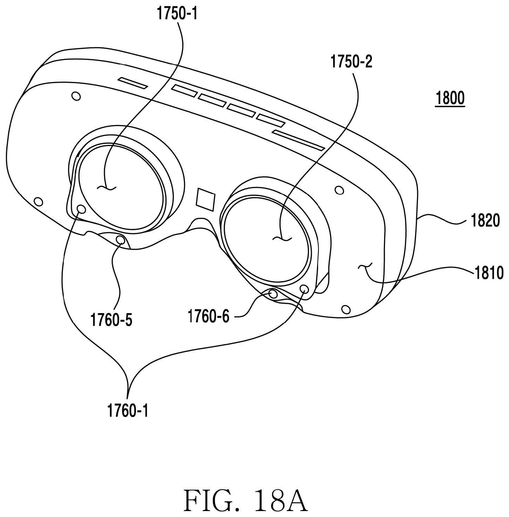

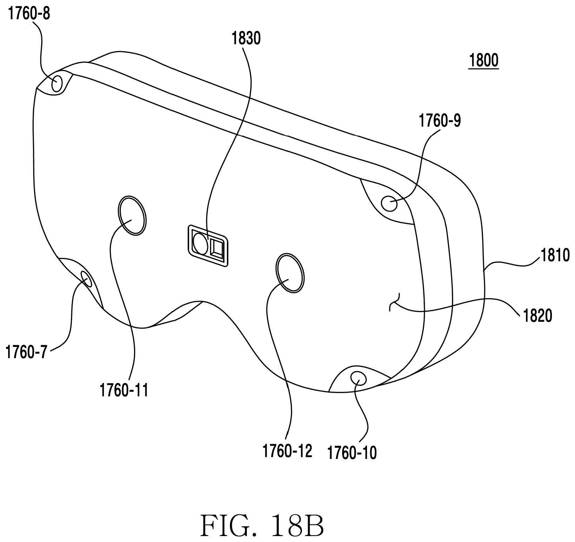

The electronic device 101 according to an example embodiment may include a wearable device. For example, the electronic device 101 may include a head-mounted display (HMD) wearable on a user's head. The electronic device 101 may refer to an HMD device, a headgear electronic device, a glasses-type (or goggle-type) electronic device, a video see-through or visible see-through (VST) device, an extended reality (XR) device, a virtual reality (VR) device, and/or an augmented reality (AR) device. For example, the electronic device 101 may include an accessory (e.g., a strap) for being attached to the user's head. An example of a hardware configuration included in the electronic device 101 will be described later with reference to FIG. 2. Although a wearable device 1700 illustrated in FIGS. 17A and 17B illustrates an external appearance of a wearable device having the form of glasses, the embodiments are not limited thereto. An example of a structure of a wearable device 1800 wearable on a user's head will be described later with reference to FIGS. 18A and 18B.

The electronic device 101 according to an example embodiment may execute functions related to augmented reality (AR) and/or mixed reality (MR). For example, the electronic device 101 may include at least one lens disposed adjacent to a user's eyes while being worn by the user. The electronic device 101 may combine light emitted from a display (e.g., a display 250 of FIG. 2) with ambient light passing through the lens. A display area of the display 250 may be formed within the lens through which the ambient light passes. Since the electronic device 101 combines the ambient light and the light emitted from the display 250, the user may view a mixed image of a real object perceived by the ambient light and a virtual object formed by the light emitted from the display 250. The above-described augmented reality, mixed reality, and/or virtual reality may refer to extended reality (XR). The electronic device 101 according to an example embodiment may execute functions related to the video see-through (VST) and/or the virtual reality (VR).

FIG. 2 is a block diagram illustrating components of an example electronic device.

Referring to FIG. 2, an electronic device 101 according to an example embodiment may include a camera 230 (e.g., the camera module 180 of FIG. 1), a sensor 240 (e.g., the sensor module 176 of FIG. 1), a memory 220 (e.g., the memory 130 of FIG. 1), a processor 210 (e.g., the processor 120 of FIG. 1), a display 250 (e.g., the display module 160 of FIG. 1), and/or a communication circuit 260 (e.g., the communication module 190 of FIG. 1). The camera 230, the sensor 240, the memory 220, the processor 210, the display 250, and/or the communication circuit 260 may be electronically and/or operably coupled with each other by an electronical component such as a communication bus 201. The type and/or number of hardware components included in the electronic device 101 are not limited to those illustrated in FIG. 2. For example, the electronic device 101 may include only some of the hardware components illustrated in FIG. 2, or may include hardware components not illustrated in FIG. 2 (e.g., the battery 189 of FIG. 1).

According to an example embodiment, the processor 210 may control an operation of the electronic device 101. The processor 210 may include a hardware component for processing data based on instructions. The hardware component for processing data may include, for example, an arithmetic and logic unit (ALU), a field programmable gate array (FPGA), a central processing unit (CPU), and/or an application processor (AP). In an example embodiment, the electronic device 101 may include one or more processors. The processor 210 may have a structure of a multi-core processor such as a dual core, a quad core, a hexa core, and/or an octa core. The multi-core processor structure of the processor 210 may include a structure based on multiple core circuits (e.g., a big.LITTLE structure) distinguished by power consumption, clock, and/or an amount of calculation per unit time. In an embodiment including a processor having a multi-core processor structure, the operations and/or functions of the disclosure may be collectively performed by one or more cores included in the processor 210.

Any function or operation described herein may be processed by the processor 210. The processor 210 may include processing circuitry. The processor 210 may include an application processor (AP) (e.g., central processing unit (CPU)) and/or a communication processor (CP) (e.g., modem) but is not limited thereto. The processor 210 may include a graphic processing unit (GPU), a neural processing unit (NPU) (e.g., an artificial intelligence (AI) chip), a wireless-fidelity (Wi-Fi) chip, a Bluetooth chip^{®}, a global positioning system (GPS) chip, a near field communication (NFC) chip, connectivity chips, a sensor controller, a touch controller, a finger-print sensor controller, a display drive integrated circuit (DDI), an audio CODEC chip, a universal serial bus (USB) controller, a camera controller, an image processing IC, a microprocessor unit (MPU), a system on chip (SoC), an integrated circuitry (IC), or other circuit similar thereto.

According to an example embodiment, the memory 220 may include a hardware component for storing data and/or instructions input to and/or output from the processor 210. The memory 220 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, or pseudo-SRAM (PSRAM). The non-volatile memory may include, for example, at least one of programmable ROM (PROM), erasable PROM (EPROM), electrically erasable PROM (EEPROM), flash memory, a hard disk, a compact disk, or an embedded multimedia card (eMMC). In an embodiment, the memory 220 may refer to storage.

According to an example embodiment, the display 250 may output visual information to a user of the electronic device 101. When the user wears the electronic device 101, the display 250 may be arranged in front of the user's eyes. For example, the display 250 may be controlled by the processor 210 including circuitry such as a graphic processing unit (GPU) to output visualized information to the user. The display 250 may include a flexible display, a flat panel display (FPD), and/or electronic paper. The display 250 may include a liquid crystal display (LCD), a plasma display panel (PDP), and/or one or more light emitting diodes (LEDs). The LED may include an organic LED (OLED). Embodiments are not limited thereto, and for example, in a case where the electronic device 101 includes a lens for transmitting external light or ambient light, the display 250 may include a projector (or projection assembly) for projecting the light onto the lens. The display 250 may also refer to a display panel and/or a display module. When the user wears the electronic device 101, pixels included in the display 250 may be arranged toward either one of the user's two eyes. For example, the display 250 may include display areas (or active areas) corresponding to each of the user's two eyes.

According to an example embodiment, the camera 230 may include one or more optical sensors (e.g., a charged coupled device (CCD) sensor, a complementary metal oxide semiconductor (CMOS) sensor) that generate an electrical signal representing the color and/or brightness of light. The camera 230 may also refer to an image sensor. A plurality of optical sensors included in the camera 230 may be arranged in a form of a 2-dimensional array. The camera 230 may acquire electrical signals of each of the plurality of optical sensors substantially simultaneously to generate 2-dimensional frame data corresponding to light reaching the optical sensors of the 2-dimensional array. For example, photo data captured using the camera 230 may mean a set of 2-dimensional frame data acquired from the camera 230. For example, video data captured using the camera 230 may mean a sequence of a plurality of 2-dimensional frame data acquired from the camera 230 according to a frame rate. The camera 230 may be disposed toward a direction in which the camera 230 receives light, and may further include a flashlight for outputting light toward the direction.

For example, the camera 230 may be disposed toward an external environment of the user wearing the electronic device 101. The camera 230 may be disposed toward the external environment in the electronic device 101 to capture the external environment. The processor 210 may identify one or more objects using an image and/or video acquired from the camera 230. For example, the processor 210 may be configured to identify one or more objects located in the external environment based on the image and/or video acquired from the camera 230.

According to an example embodiment, the electronic device 101 may include a plurality of cameras disposed toward different directions. For example, the electronic device 101 may include a gaze tracking camera. The gaze tracking camera may be disposed toward at least one of the two eyes of a user wearing the electronic device 101. The processor 210 may identify a direction of the user's gaze using an image and/or video acquired from the gaze tracking camera. The gaze tracking camera 230 may include an infrared (IR) sensor. The gaze tracking camera 230 may also refer to an eye sensor, a gaze tracker, and/or an eye tracker.

According to an example embodiment, the sensor 240 may generate electrical information that can be processed and/or stored by the processor 210 from non-electronic information related to the electronic device 101 and/or the user of the electronic device 101. The sensor 240 may include a global positioning system (GPS) sensor for detecting a geographic location of the electronic device 101, an audio sensor (e.g., a microphone and/or a microphone array including a plurality of microphones), an illuminance sensor, an inertial measurement unit (IMU) (e.g., an acceleration sensor, a gyro sensor, and/or a geomagnetic sensor), and/or a time-of-flight (ToF) sensor (or ToF camera).

According to an example embodiment, the communication circuit 260 may include a circuit for supporting transmission and/or reception of electrical signals between the electronic device 101 and an external electronic device. The communication circuit 260 may include, for example, at least one of a modem (MODEM), an antenna, or an optic/electronic (O/E) converter. The communication circuit 260 may support transmission and/or reception of electrical signals based on various types of protocols such as Ethernet, local area network (LAN), wide area network (WAN), wireless fidelity (WiFi), Bluetooth, Bluetooth low energy (BLE), ZigBee, long term evolution (LTE), 5G new radio (NR), 6G, and/or above-6G. In an embodiment, the communication circuit 260 may refer to a communication processor and/or a communication module.

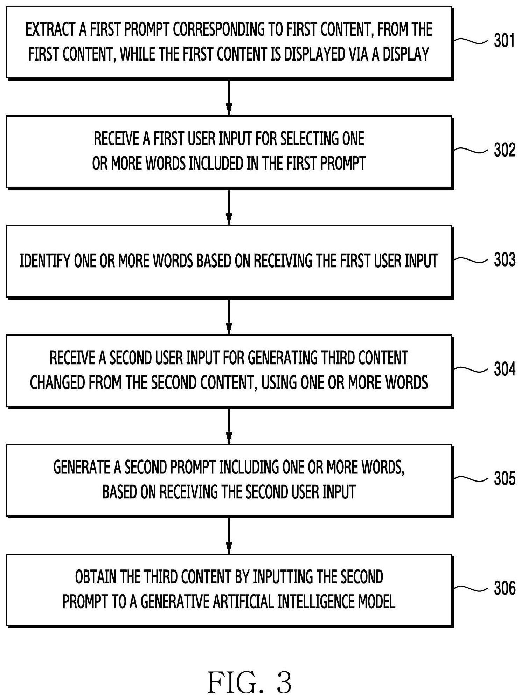

According to an example embodiment, data to be processed by the processor 210 and instructions representing calculations and/or operations to be performed by the processor 210 may be stored in the memory 220. A set of instructions may refer to a program, firmware, an operating system, a process, a routine, a sub-routine, and/or a software application (hereinafter, an application). For example, the electronic device 101 and/or the processor 210 may perform at least one of operations of FIG. 3, 5, 7, and/or 15B, when a set of a plurality of instructions distributed in the form of an operating system, firmware, a driver, a program, and/or an application is executed. The fact that an application is installed in the electronic device 101 may mean that instructions provided in the form of the application are stored in the memory 220, whereby the application is in an executable format (e.g., a file having an extension designated by the operating system of the electronic device 101). For example, the application may include a program and/or a library related to a service provided to a user.

Referring to FIG. 2, programs installed in the electronic device 101 may be included in any one of different layers including a framework layer 220a and an application layer 220b based on a target. The layers illustrated in FIG. 2 are logically divided (or divided for convenience of description) and may not mean that the address space of the memory 220 is divided by the layers.

According to an example embodiment, programs (e.g., a first application 221 and/or a second application 222) designed to target at least one of hardware (e.g., the camera 230, the sensor 240, the memory 220, the processor 210, the display 250, and/or the communication circuit 260) of the electronic device 101 and/or the application layer 220b may be included in the framework layer 220a. The programs included in the framework layer 220a may provide an application programming interface (API) that is executable (or capable of being invoked or called) based on another program.

The electronic device 101 according to an example embodiment may be configured to provide a prompt (e.g., a first prompt) for generating another content (e.g., fourth content) corresponding to content (e.g., first content). The first prompt, when input to a generative artificial intelligence model, may refer to a prompt capable of generating the first content. Since the generative artificial intelligence model has a black-box structure in which it is difficult to understand internal operations, it may be difficult to estimate the first prompt for obtaining the fourth content that is substantially identical to the first content. The electronic device 101 may be configured to provide the first prompt corresponding to the first content by executing instructions stored in the memory 220. The instructions may be included in the first application 221 and the second application 222.

According to an example embodiment, the first application 221 may be used to estimate original content of the content (e.g., the first content) and generate a description of the original content. For example, the first application 221 may include a style detector 221a, an original estimator 221b, a component detector 221c, and/or a scene interpreter 221d. The style detector 221a, the original estimator 221b, the component detector 221c, and/or the scene interpreter 221d, which are a set of instructions or codes, may be instructions/codes at least temporarily resided in the processor 210 or a storage space storing the instructions/codes, or may be a part of circuitry included in the processor 210.

According to an example embodiment, the style detector 221a may be instructions or code for analyzing a style of the first content. For example, the style detector 221a may be used to identify whether the first content is real-world content (e.g., a landscape photograph) or non-real-world content (e.g., an illustration).

According to an example embodiment, the original estimator 221b may be used to estimate the original content of the first content from which the style detected through the style detector 221a is removed. For example, with respect to the first content postprocessed after capturing an image, the original content may be estimated by removing the style resulting from the post-processing.

According to an example embodiment, the component detector 221c may be used to analyze the original content. For example, when executed by the processor 210, the component detector 221c may analyze the original content by interpreting objects and/or scenes included within the original content. For example, when executed by the processor 210, the component detector 221c may analyze the original content using an analysis tool such as semantic segmentation. As a result of the analysis of the original content, attribute information may be extracted.

According to an example embodiment, the scene interpreter 221d may be used to generate a description corresponding to a comprehensive commentary on the first content, based on the first content, the original content, and the result of analysis (e.g., the attribute information) of the original content. The description may be used as a seed prompt to be input to a large language model (LLM) via the second application 222.

According to an example embodiment, the second application 222 may be used to extract a prompt (e.g., the first prompt) from the original content and to generate fourth content corresponding to the first content. The fourth content may refer to content that is substantially identical to the first content or content having a similarity equal to or greater than a threshold value. For example, the second application 222 may include a prompt extractor 222a, a content generator 222b, a prompt updater 222c, and/or a prompt mapper 222d. The prompt extractor 222a, the content generator 222b, the prompt updater 222c, and/or the prompt mapper 222d may be stored in the memory 220 as a set of instructions or code.

According to an example embodiment, the prompt extractor 222a may be used to extract the first prompt based on the description generated by the first application 221. For example, the first prompt may be acquired by inputting a prompt based on the description into a large language model.

According to an example embodiment, the content generator 222b may be used to acquire the fourth content. For example, when executed by the processor 210, the content generator 222b may generate the fourth content by inputting the first prompt and/or the original content into a generative artificial intelligence model.

According to an example embodiment, the prompt updater 222c may be used to update the first prompt based on a result of comparing the first content with the fourth content. For example, when executed by the processor 210, the prompt updater 222c may modify the first prompt so that the similarity between the first content and the fourth content is increased.

According to an example embodiment, the prompt mapper 222d may be used to manage and tune up the first prompt. For example, when executed by the processor 210, the prompt mapper 222d may tune up the first prompt so that substantially identical results may be output even if the first prompt is input to various generative artificial intelligence models.

For example, a program designed to target a user of the electronic device 101 may be included in the application layer 220b. Programs (e.g., a third application 223) included in the application layer 220b may call an application programming interface (API) to cause execution of functions supported by programs classified into the framework layer 220a. For example, the third application 223 may include a screen controller 223a, a user input unit 223b, a content generation controller 223c, a content player 223d, and/or a prompt manager 223e. The screen controller 223a, the gesture recognizer 223b, the content generation controller 223c, the content player 223d, and/or the prompt manager 223e, which are a set of instructions or codes, may be instructions/codes at least temporarily residing in the processor 210 or a storage space storing the instructions/codes, or may be a part of circuitry included in the processor 210.

According to an example embodiment, the screen controller 223a may be used to control a user interface (UI) for extracting a prompt and to control operations of the first application 221 and the second application 222. The gesture recognizer 223b may be used to identify a user input by identifying and analyzing a detectable user gesture, such as a user's hand movement or head movement. The content generation controller 223c may be used to provide a UI for extracting the first prompt from the first content. The content player 223d may be used to display the content (e.g., an image and/or photo) via the display 250. The prompt manager 223e may be used to record a history of a list of the first prompts and to manage tuned-up prompts.

The aforementioned components in the first application 221, the second application 222, and/or the third application 223 are merely an example and the disclosure is not limited thereto. Each of the aforementioned components may cause operations of the electronic device 101 to be described later. In the disclosure, visual objects may be described as examples of the UI. The visual object may refer to a deployable object that may be placed within a screen for transmission and/or interaction of information, such as text, an image, an icon, a video, a button, a checkbox, a text box, a slider, and/or a table. The visual object may refer to a visual guide, a virtual object, a visual element, a UI element, a view object, and/or a view element. The wearable device may provide a user with functions available within a virtual space, based on the execution of an XR system UI.

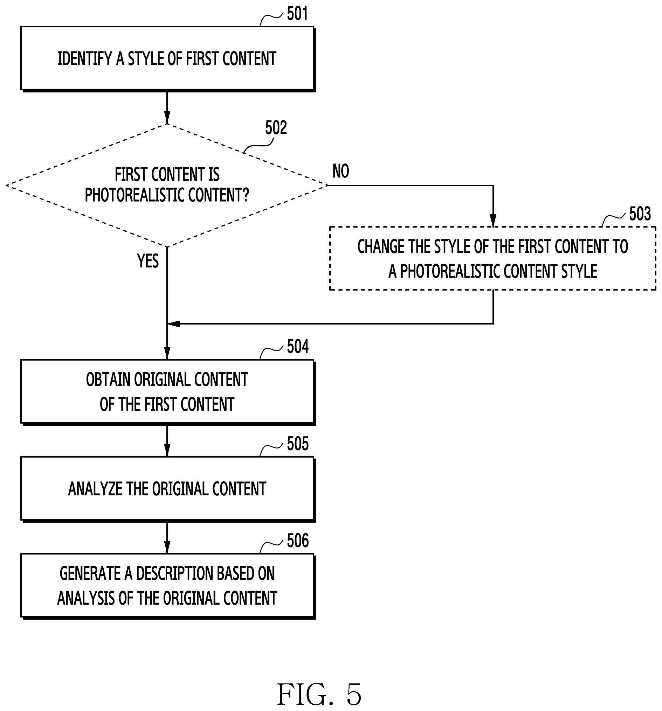

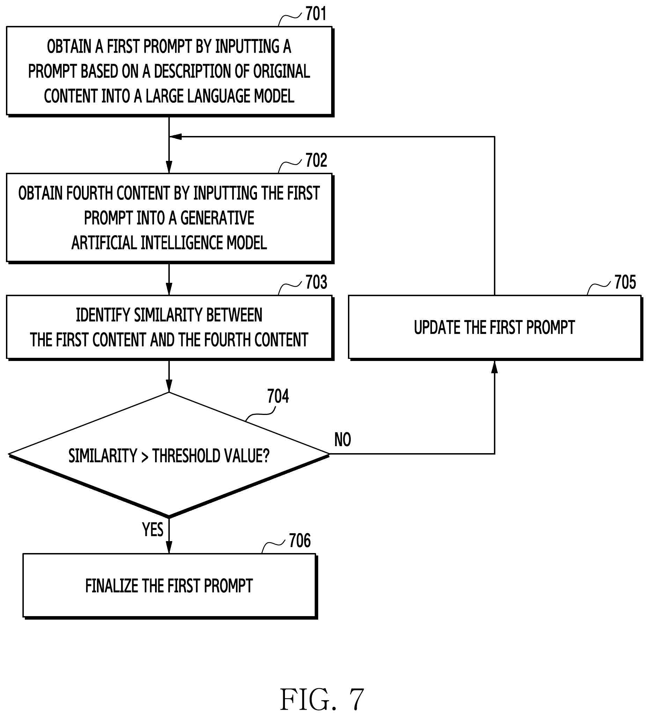

An electronic device according to an example embodiment may provide a function capable of extracting a first prompt from first content and modifying second content based on at least a portion of the extracted first prompt. The modified second content may refer to third content. The first prompt is a prompt capable of generating the second content corresponding to the first content by a generative artificial intelligence model, and may be extracted by operations described in FIGS. 5 and 7. By applying the first prompt to the second content, third content to which the style of the first content is reflected may be provided. Hereinafter, operations of an electronic device according to an example embodiment will be described.

FIG. 3 is a flowchart illustrating an operation of generating third content by an example electronic device.

The processor 210 of FIG. 2 may perform operations of the electronic device (e.g., the electronic device 101 of FIG. 2) described with reference to FIG. 3. When instructions stored in a memory (e.g., the memory 220 of FIG. 2) are executed by the processor 210, the instructions may cause the electronic device 101 to perform the operations of the electronic device 101 described with reference to FIG. 3.

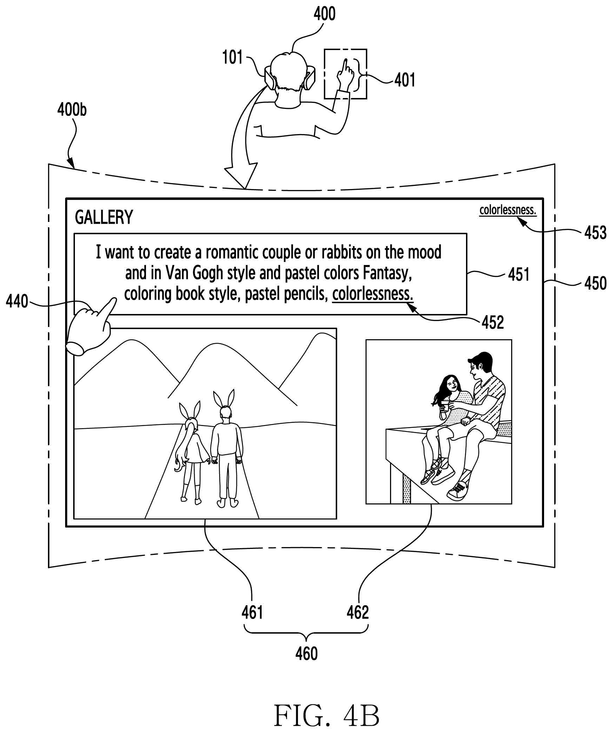

Referring to FIG. 3, in operation 301, the processor 210 may be configured to extract a first prompt (e.g., a first prompt 451 of FIG. 4B) corresponding to the first content from the first content, while the first content (e.g., the first content 461 of FIG. 4B) is displayed via a display (e.g., the display 250 of FIG. 2).

According to an example embodiment, the electronic device 101 may refer to a wearable device. The electronic device 101 may display the first content via the display 250. For example, the processor 210 may display the first content based on a user input for requesting execution of a software application (e.g., gallery application) for displaying one or more content. The first content may include, but is not limited to, an image and/or video. The processor 210 may be configured to extract a first prompt corresponding to the first content, while the first content is displayed. The first content may refer to source content for extracting the first prompt. In a case where the electronic device 101 is a device such as a smartphone rather than a wearable device, the first content may refer to content stored in the memory 220 of the electronic device 101. For example, the first content may include an image and/or video captured by a user using the electronic device 101.

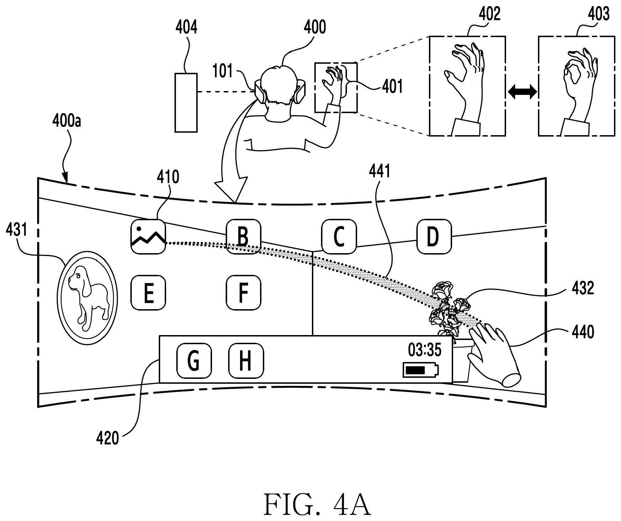

According to an example embodiment, the second content (e.g., the second content 462 of FIG. 4B) may refer to target content to which one or more attributes of the first content are to be applied. The one or more attributes of the first content may include various elements capable of causing an aesthetic impression associated with the first content, such as a style, effect, and/or style of the first content. A prompt, which is natural language or content for representing content to be output from a generative artificial intelligence model, may be used to set a goal of the generative artificial intelligence model. According to an example embodiment, the first prompt is a prompt for outputting content (e.g., the fourth content) substantially identical to the first content when input to the generative artificial intelligence model, and may refer to an input sentence including natural language or a set of feature keywords. An operation of extracting the first prompt from the first content by the electronic device 101 will be described later with reference to FIGS. 5 and 7. Screens corresponding to operation 301 may refer to a screen illustrated in FIG. 4A (e.g., a first screen 400a of FIG. 4A). A detailed example of operation 301 will be described later with reference to FIG. 4A.

In operation 302, the processor 210 may be configured to receive a first user input for selecting one or more words included in the first prompt.

According to an example embodiment, the processor 210 may be configured to display the extracted first prompt via the display 250 in order to receive a first user input for selecting one or more words included in the first prompt. For example, the first prompt corresponding to the first content may include one or more words as natural language. Alternatively, the first prompt may be a set of feature keywords. The one or more words may be displayed via the display 250. The one or more words may correspond to attributes of the first content. A user may check the first prompt displayed via the display 250 and provide a first user input to select one or more words included in the first prompt. The processor 210 may receive the first user input.

In operation 303, the processor 210 may be configured to identify one or more words based on receiving the first user input.

According to an example embodiment, the processor 210 may receive a first user input for a first prompt including one or more words, which is displayed via the display 250, and identify the one or more words based on the reception of the first user input. For example, the user may provide the first user input to select, from among the one or more words included in the first prompt, one or more words corresponding to an attribute to be applied to the second content, which is target content. The processor 210 may identify one or more words corresponding to the first user input by identifying the first user input for the one or more words. According to an example embodiment, the processor 210 may control the display 250 to provide a visual effect representing the one or more words corresponding to the first user input, in order to indicate that the first user input for the one or more words selected by the first user input has been identified.

For example, assuming that the first content is a beach landscape with a sunrise background and is photorealistic content characterized by contrast between clouds around the sun and the sky, the first prompt may be natural language such as "Generate a real photograph including a beach with a sunrise background, and emphasize the contrast of clouds around the rising sun against the sky." Words such as "sunrising," "seashore," "sky," "clouds," and "contrast" may be included in the first prompt. Alternatively, the first prompt may be a set of feature keywords of the first content. The first prompt may be a set including keywords such as realistic, dynamic contrast, sun rising, sea shore, or sun oriented. The processor 210 may display the first prompt via the display 250 while the first content is being displayed via the display 250. When the first user input is provided for at least one of the words included in the first prompt, the processor 210 may identify the words to which the first user input is provided. For example, when the user provides the first user input to the word "contrast," the processor 210 may identify the "contrast" based on reception of the first user input for "contrast." The processor 210 may control the display 250 to provide a visual effect distinguishing the word "contrast" from other words, in order to indicate that the first user input for the word "contrast" has been identified. For example, the visual effect may include a color change for the word "contrast," addition of an underline, and/or a visual object displaying the word "contrast." A screen corresponding to the operation 302 and the operation 303 may refer to a screen illustrated in FIG. 4B (e.g., the second screen 400b of FIG. 4B). A detailed example of the operation 302 and the operation 303 will be described later with reference to FIG. 4B.

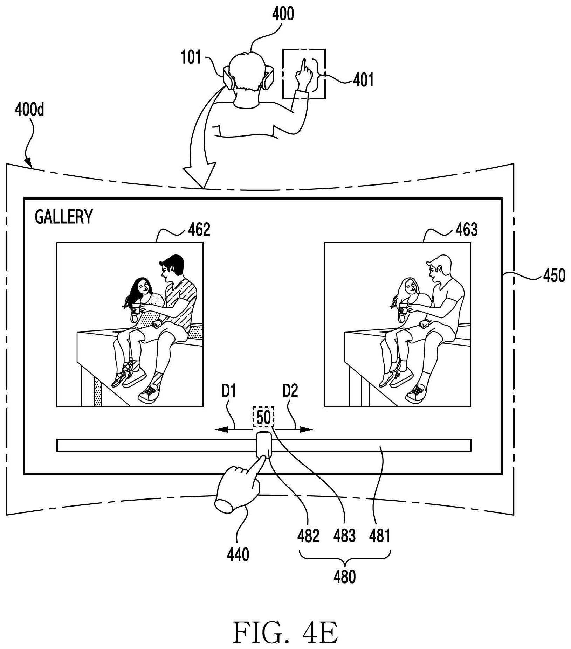

In operation 304, the processor 210 may be configured to receive a second user input for generating third content (e.g., third content 463 of FIG. 4E) changed from the second content, using one or more words.

According to an example embodiment, the processor 210 may receive a second user input for generating third content to which an effect represented by the selected one or more words is applied, using the one or more words selected by the first user input. In the disclosure, the third content may refer to content in which the second content is modified by applying the effect represented by the selected one or more words to the second content. For example, the user may provide the second user input to apply the one or more words selected through the first user input to the second content.

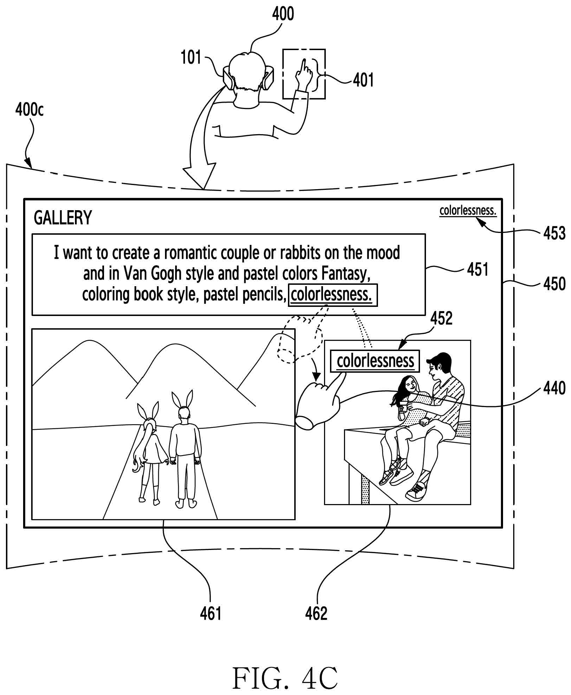

According to an example embodiment, the processor 210 may be configured to detect a hand gesture performed by a user's hand using a camera (e.g., the camera 230 of FIG. 2). When the user performs a hand gesture corresponding to the second user input, the processor 210 may receive the second user input in response to identifying the hand gesture. For example, the second user input may refer to a swipe input or a scroll input for moving the one or more words selected through the first user input to an area of the display 250 where the second content is located, but the disclosure is not limited thereto. Referring to the aforementioned example, the user may provide the second user input by moving the word "contrast" to the second content. A screen corresponding to the operation 304 may refer to a screen illustrated in FIG. 4C (e.g., a third screen 400c of FIG. 4C). A detailed example of the operation 304 will be described later with reference to FIG. 4C. Alternatively, one or more words may be selected by a controller 404 held by a user 400. For example, the controller 404 may be a device for manipulating a virtual object 440 displayed in a screen provided to the user 400. The user 400 may provide the second user input using the controller 404.

In operation 305, the processor 210 may be configured to generate a second prompt including one or more words based on receiving the second user input.

According to an example embodiment, the processor 210 may generate the second prompt including the one or more words selected through the first user input, based on the reception of the second user input. In the disclosure, the second prompt may refer to a prompt input to a generative artificial intelligence model in order to generate the third content by modifying the second content. Since the third content is generated by application of an effect represented by the one or more words selected through the first user input, the processor 210 may generate the second prompt including the selected one or more words. Referring to the aforementioned example, the processor 210 may generate, through the generative artificial intelligence model, the second prompt capable of generating third content in which a "contrast" effect is applied to the second content. For example, the second prompt may refer to a prompt such as "Generate an image by applying a contrast effect to the object with respect to the background environment," but the aforementioned prompt is merely an example for convenience of description, and the disclosure is not limited thereto.

In operation 306, the processor 210 may be configured to obtain the third content by inputting the second prompt to a generative artificial intelligence model.

According to an example embodiment, the processor 210 may input the second prompt into the generative artificial intelligence model to obtain the third content. The generative artificial intelligence model may generate new content based on a user input, using an unstructured deep learning model. When a prompt is input to the generative artificial intelligence model, the prompt is converted into tokens through a text encoder, and new content may be generated by performing denoising on randomly generated noise based on the tokens. As the second prompt is input to the generative artificial intelligence model, the third content may be output. The processor 210 may also input the second content into the generative artificial intelligence model along with the second prompt. The processor 210 may display the third content via the display 250 so that the user can check the third content. The user may identify the third content in which the second content is modified. A screen corresponding to the operation 306 may refer to a screen illustrated in FIG. 4E (e.g., a fourth screen 400e of FIG. 4E). A detailed example of the operation 306 will be described later with reference to FIG. 4E.

An electronic device 101 according to an example embodiment may be configured to provide third content by applying at least a portion of attributes of the first content to the second content. In order to apply the at least a portion of the attributes of the first content to the second content, the electronic device 101 may extract the first prompt capable of generating content substantially identical to the first content (e.g., fourth content). By displaying the extracted first prompt via the display 250, the electronic device 101 allows the user to intuitively recognize the attributes of the first content to be applied. The electronic device 101 may provide the third content by generating the second prompt based on the second user input for generating the third content, and inputting the second prompt into the generative artificial intelligence model. The example electronic device 101 may provide an enhanced user experience by delivering contents that are modified in various manners.

Hereinafter, examples of screens of the display 250 provided to a user when the electronic device 101 performs the operations described in FIG. 3 will be described. The screens described below are merely an example, and the embodiments of the disclosure are not limited thereto.

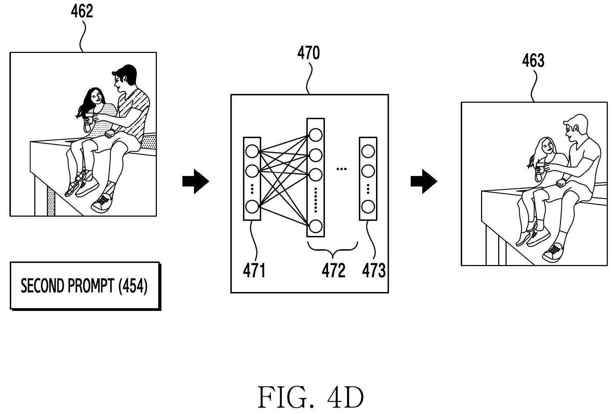

FIG. 4A illustrates an example screen representing a user input for displaying content via a display. FIG. 4B illustrates an example screen representing a first user input. FIG. 4C illustrates an example screen representing a second user input. FIG. 4D schematically illustrates a process in which third content is generated. FIG. 4E illustrates an example screen for adjusting a degree of modification.

A processor of FIG. 2 (e.g., the processor 210 of FIG. 2) may perform operations of the electronic device 101 described with reference to FIGS. 4A to 4E. When instructions stored in the memory (e.g., the memory 220 of FIG. 2) are executed by the processor 210, it may cause the electronic device 101 to perform the operations of the electronic device 101 as illustrated in FIGS. 4A to 4E.

Referring to FIG. 4A, the electronic device 101 may display a first screen 400a via a display (e.g., the display 250 of FIG. 2). The first screen 400a may be a screen provided in a see-through mode or a pass-through mode. For example, the see-through mode or the pass-through mode is a mode for providing a composite image of an external environment, in which the electronic device 101 may display the composite image of the external environment on the display 250. For example, in order to represent an external environment existing beyond the display 250, a processor (e.g., the processor 210 of FIG. 2) may synthesize a virtual image with a real-world image obtained through a camera (e.g., the camera 230 of FIG. 2) and display the synthesized composite image on the display 250. According to an example embodiment, the first screen 400a may be a screen provided in a virtual reality (VR) mode distinguished from the see-through mode or the pass-through mode. For example, the first screen 400a provided in the VR mode may include only a virtual image and may not include a real-world image.

According to an example embodiment, the electronic device 101 may display, in the first screen 400a, icons (e.g., icon B, icon C, icon D, icon E, and/or icon F) corresponding to each of a plurality of software applications installed in the electronic device 101. The first screen 400a, which is a screen for providing a list of a plurality of software applications installed in the electronic device 101, may refer to a home screen and/or a launcher screen. In the first screen 400a, the electronic device 101 may display a panel 420 for providing a list of frequently executed software applications. For example, the panel 420 may refer to a dock. In the panel 420, the electronic device 101 may display icons (e.g., icon G and/or icon H) representing frequently executed software applications. The electronic device 101 may display information related to the current time and/or the battery of the electronic device 101 in the panel 420. However, the disclosure is not limited thereto. According to an example embodiment, one or more icons may be displayed in the first screen 400a. For example, the one or more icons may overlap with a composite image including visual objects corresponding to objects included in the external environment (e.g., a visual object 431 corresponding to a drawing of a dog and a visual object 432 corresponding to a flowerpot).

According to an example embodiment, the electronic device 101 may display, in the first screen 400a of FIG. 4A, an icon 410 corresponding to a software application (e.g., Gallery application) for displaying a list of contents (e.g., images and/or videos) stored in the memory 220 along with the icons. Although the embodiment in which the electronic device 101 displays the icon 410 representing the software application is described, embodiments are not limited thereto, and the electronic device 101 may display text, an image, and/or a video representing the software application.

According to an example embodiment, the electronic device 101 may receive a user input for executing the Gallery application. The user input may refer to an input for selecting the icon 410 representing the Gallery application in the first screen 400a. The user input may include a hand gesture performed by the user's hand 401. For example, the electronic device 101 may obtain an image and/or a video of a body part including the hand 401 of the user 400 using a camera (e.g., the camera 230 of FIG. 2). Based on detecting the hand 401 included in the image and/or video, the electronic device 101 may display a virtual object 440 corresponding to the hand 401 within the first screen 400a. The virtual object 440 may include a three-dimensional graphical object representing the posture of the hand 401. For example, the posture and/or orientation of the virtual object 440 may correspond to the posture and/or orientation of the hand 401 detected by the electronic device 101.

According to an example embodiment, while displaying the virtual object 440, the electronic device 101 may display a virtual object 441 having a shape of a line extending from the virtual object 440. The virtual object 441 may refer to a ray, a ray object, a cursor, a pointer, and/or a pointer object. The virtual object 441 may have a shape of a line extending from a part of the hand 401 (e.g., a palm and/or a designated finger such as an index finger). Although the virtual object 441 having a curved shape is illustrated in FIG. 4A, the embodiment is not limited thereto. The user 400 may move the hand 401 to change the position and/or direction of the virtual object 440 and/or the virtual object 441 within the first screen 400a.

According to an example embodiment, while the virtual object 441 in the shape of a line extending toward the icon 410 is displayed within the example first screen 400a, the electronic device 101 may detect or identify a pinch gesture of the hand 401. For example, after obtaining an image 402 of the hand 401 in which fingertips of all the fingers included in the hand 401 are spaced apart from each other, the electronic device 101 may obtain an image 403 of the hand 401 including at least two fingers having a shape of a ring, as at least two fingertips (e.g., a fingertip of the thumb and a fingertip of the index finger) contact each other. The electronic device 101 having obtained the image 403 may detect the pinch gesture represented by the at least two fingers in the shape of a ring. A duration of the pinch gesture may refer to a period during which the fingertips of at least two fingers of the hand 401 are in contact with each other, as in the image 403. The pinch gesture may correspond to or be mapped to a click and/or tap gesture.

According to an example embodiment, in response to the pinch gesture detected while displaying the first screen 400a, the electronic device 101 may execute the Gallery application corresponding to the icon 410. Although an example operation of executing the Gallery application using a hand gesture such as a pinch gesture is described, the embodiment is not limited thereto. For example, the electronic device 101 may also execute the Gallery application in response to an utterance of the user 400 (e.g., "Execute Gallery"), a gaze of the user 400 (e.g., gaze tracking of the user), and/or a pressing of a physical input button.

Referring to FIG. 4B, in response to a user input for executing the Gallery application, the processor 210 may display a list of contents 460 in a partial area 450 in a second screen 400b.

According to an example embodiment, first content 461 and second content 462 may be simultaneously displayed in the partial area 450. The processor 210 may control a display (e.g., the display 250 of FIG. 2) such that a first prompt 451 corresponding to the first content 461, which is source content, is displayed within the second screen 400b. For example, in response to a user input for displaying the first prompt 451, the processor 210 may extract the first prompt 451 and display the extracted first prompt 451. An operation in which the processor 210 extracts the first prompt 451 from the first content 461 will be described later with reference to FIGS. 5 and 7.

According to an example embodiment, the processor 210 may receive a first user input for receiving a user input for one or more words 452 included in the first prompt 451. For example, the user 400 may provide the first user input for one or more words 452 included in the first prompt 451, through a gesture (e.g., a pinch gesture) of the hand 401, in order to select an attribute to be applied to the second content 462. The processor 210 may receive the first user input for the one or more words 452. For example, in a state where a virtual object 440 corresponding to the hand 401 is moved to at least partially overlap the one or more words 452, the processor 210 may identify the first user input for the one or more words 452 based on identifying the gesture of the hand 401.

For example, the first prompt 451 corresponding to the first content 461 may be natural language such as "I want to create a romantic couple or rabbits on the mood and in Van Gogh style and pastel colors Fantasy, coloring book style, pastel pencils, colorlessness." The processor 210 may control the display 250 such that the first prompt 451 is displayed in the second screen 400b. Based on receiving the first user input for the one or more words 452 included in the first prompt 451, the processor 210 may control the display 250 to provide a visual effect representing the one or more words 452 corresponding to the first user input. For example, in a case where a first user input for "colorlessness" is received in the first prompt 451, the processor 210 may change the color of "colorlessness," generate an underline, and/or provide a separate visual object 453 displaying "colorlessness" so that the word "colorlessness" can be distinguished from other words. However, the disclosure is not limited thereto. The user 400 may distinguish the one or more words 452 selected in the first prompt 451 through the visual effect.

Referring to FIG. 4C, the processor 210 may receive a second user input for applying one or more words 452 in the first prompt 451 to the second content 462. For example, the user 400 may provide the second user input to reflect one or more words 452 corresponding to each of one or more attributes of the first content 461 to the second content 462, for application to the second content (e.g., the second content 462 of FIG. 4B).

Referring to FIGS. 4C and 4D, the processor 210 may generate a second prompt 454 based on receiving the second user input, and obtain third content 463 by inputting the second prompt 454 into a generative artificial intelligence model 470. The processor 210 may display the third content 463 in a screen (e.g., a fourth screen 400d of FIG. 4E) displayed via a display (e.g., the display 250 of FIG. 2). The user 400 may check the third content 463 displayed in the screen. For example, in order to obtain the third content 463, the processor 210 may input the second content 462 into a generative artificial intelligence model 470 along with the second prompt 454. The generative artificial intelligence model 470 may include an input layer 471, one or more hidden layers 472 (or intermediate layers), and an output layer 473. The layers (e.g., the input layer 471, the one or more hidden layers 472, and the output layer 473) may include a plurality of nodes. The number of the one or more hidden layers 472 may vary depending on embodiments, and the generative artificial intelligence model 470 may refer to a deep neural network including a plurality of hidden layers. The generative artificial intelligence model 470 may include, or include a combination of, a generative adversarial networks (GAN), an auto encoder (AE), a variational autoencoder (VAE), a diffusion model (DM), a latent diffusion model (LDM), and a layout diffusion model, but the disclosure is not limited thereto. The generative artificial intelligence model 470 may be included within the electronic device 101 or in an external electronic device (e.g., a server).

For example, in the first prompt 451, the user 400 may provide a drag gesture to drag "colorlessness" toward the second content 462 in order to apply "colorlessness" to the second content 462. For example, the second user input for applying "colorlessness" to the second content 462 may be carried out in a manner in which the virtual object 440 corresponding to the hand 401 moves toward the second content 462 along with the word "colorlessness." The processor 210 may obtain third content 463 by generating a second prompt 454 including "colorlessness" and inputting the second prompt 454 into the generative artificial intelligence model 470. In order to obtain the third content 463, the processor 210 may also input the second content 462 into the generative artificial intelligence model 470 along with the second prompt 454. As illustrated in FIG. 4E, the third content 463 output based on the second prompt 454 including "colorlessness" may be content in which the attribute of "colorlessness" is reflected in the second content 462. For example, comparing the second content 462 illustrated in FIG. 4B with the third content 463 illustrated in FIG. 4E, the effect of removing the colors may be confirmed. In addition thereto, various embodiments may be possible. According to an example embodiment, the user 400 may intuitively recognize the attribute for the third content 463 and reflect one or more words 452 within the first prompt 451 to the second content 462 through a simple user input (e.g., the first user input and the second user input).

Referring to FIG. 4E, the example electronic device 101 may be configured to provide a function for adjusting a degree of the attribute reflected in the third content 463. According to an example embodiment, the fourth screen 400d may refer to a screen in which a virtual object 480 for providing a degree of modification is provided.

According to an example embodiment, the processor 210 may control the display (e.g., the display 250 of FIG. 2) to display the virtual object 480 for adjusting the degree of the attribute reflected in the second content 462, based on the user input. As the degree of the attribute to be reflected to the second content 462 is adjusted, the degree of modification may be adjusted. For example, the display 250 may display the virtual object 480 for receiving a user input within a partial area 450 of the fourth screen 400d. The virtual object 480 may include, but is not limited to, a slider 481, an indicator 482, and/or a modification value 483.

For example, when a user input for moving the indicator 482 in a first direction D1 is received, the processor 210 may decrease the degree of the attribute reflected in the second content 462. Due to the decrease, the degree of modification of the third content 463 may decrease. For example, when a user input for moving the indicator 482 in a second direction D2 opposite to the first direction D1 is received, the processor 210 may increase the degree of the attribute reflected in the second content 462. Due to the increase, the degree of modification of the third content 463 may be increased. For example, the modification value 483 may be displayed as a numeral from 0 to 100, but the disclosure is not limited thereto. An operation of increasing or decreasing the degree of the attribute may be performed by reflecting the degree of the attribute identified according to the user input in the second prompt. The user input may be provided by the drag gesture in which the virtual object 440 corresponding to the hand 401 of the user 400 drags the indicator 482.

As described with reference to FIGS. 4A to 4E, the example electronic device 101 may modify the second content 462 into the third content 463, based on the first prompt capable of generating the first content 461 by a generative artificial intelligence model. The electronic device 101 may provide the first prompt 451 corresponding to the first content 461 in order to reflect one or more attributes included in the first content 461 to the second content 462. In order for the one or more attributes included in the first content 461 to be accurately reflected in the second content 462, it may be required that the first prompt 451 extracted from the first content 461 be a prompt capable of generating content substantially identical to the first content 461. In the above-described embodiment, a wearable device has been described as an example of the electronic device 101, but the electronic device 101 is not limited to such a wearable device. For example, the screens illustrated in FIGS. 4A, 4B, 4C, and 4E may be screens provided by a device such as a smartphone, a tablet, or a computer. The above-described user input may be replaced with a touch input on a screen. Hereinafter, operations of the electronic device 101 for extracting the first prompt 451 from the first content 461 will be described.

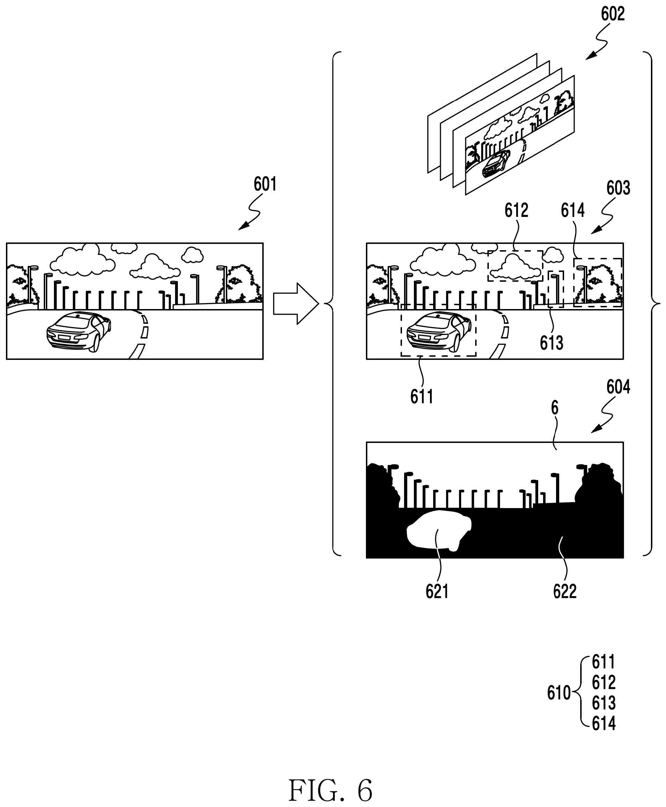

FIG. 5 is a flowchart illustrating operations of an example electronic device for generating a description for first content. FIG. 6 illustrates example operations for analyzing original content of the first content.

The processor of FIG. 2 (e.g., the processor 210 of FIG. 2) may perform the operations of the electronic device 101 described with reference to FIG. 5. When instructions stored in the memory (e.g., the memory 220 of FIG. 2) are executed by the processor 210, it may cause the electronic device 101 to perform the operations of the electronic device 101 described in FIG. 5. For example, the operations described in FIG. 5 may refer to operations caused by the execution of a first application (e.g., the first application 221 of FIG. 2).

According to an example embodiment, an analysis of the original content of the first content may be required to extract the first prompt. When the first prompt extracted based on the original content of the first content is input to a generative artificial intelligence model, content substantially identical to the first content may be output. For example, in a case where the first content is an image modified through a post-processing process, an accurate extraction of prompt may be possible by restoring the original image before modification, and extracting the first prompt based on the original image. For example, in a case where the first content is content in which a landscape photo taken at a specific place is modified into a Van Gogh style, the first prompt may be extracted after restoring the landscape photo, which is the original content, by removing the effect of Van Gogh style in order to provide an accurate first prompt.

Referring to FIG. 5, in operation 501, the processor 210 may be configured to identify the style of the first content.

According to an example embodiment, analysis of the style of the first content for extracting the first prompt may be required. The analysis of the style may refer to analyzing whether the first content is photorealistic content. For example, the processor 210 may identify whether the first content is photorealistic content (e.g., a landscape photo) or content in which a specific style is reflected rather than the photorealistic content. For example, in the case of first content in an illustrative style, it may be identified as not being photorealistic content.

In operation 502, the processor may be configured to identify whether the first content is photorealistic content.

According to an example embodiment, in a case where the first content is photorealistic content, the first content may be analyzed immediately. In contrast, in a case where the first content is not photorealistic content, analysis of the first content may be difficult. For example, in a case where the first content is in an illustrative style, objective analysis of the first content may be difficult because a unique illustrative style is reflected in the first content. In a case where the first content is not photorealistic content, operation 504 may be performed after operation 503 is performed. In a case where the first content is photorealistic content, the operation 504 may be performed.

In operation 503, the processor 210 may be configured to change the style of the first content to a photorealistic content style.

According to an example embodiment, the processor 210 may change the style of the first content to the photorealistic content style based on identifying that the first content is not photorealistic content. For example, in a case where the first content is in an illustrative style, the processor 210 may change the style of the first content to the photorealistic content style by removing the illustrative style. To change the style of the first content to the photorealistic content style, the processor 210 may use an artificial intelligence model trained to transfer the illustrative style. As the style of the first content, which is an illustration, is changed to photorealistic content, the first content may be changed to content having realism. For example, in a case where an animal image is included in the illustration, the first content may be changed to content including an actual animal similar to the animal image.

According to an example embodiment, the operation 502 and the operation 503 may be optionally performed. For example, in a case where the original content of the first content is a creative work, the operation of changing the first content to the photorealistic content style may be omitted. In a case of the creative work, its photorealistic content may not exist, and therefore, the operation 504 of obtaining the original content of the photorealistic content may be performed without changing the creative work to the photorealistic content style.

In operation 504, the processor 210 may be configured to obtain the original content of the first content.

According to an example embodiment, the processor 210 may be configured to obtain the original content from the first content, which is photorealistic content, or the first content changed to have a photorealistic content style. For example, in a case where the first content is an image captured using a camera application to which a filter for representing a specific visual effect is applied, the processor 210 may be configured to obtain the original content by removing the visual effect. For example, the processor 210 may be configured to obtain the original content of the first content using an artificial intelligence model trained to remove styles. The aforementioned operations 501, 502, and 503 may refer to operations for the operation 504 of estimating original content.

In operation 505, the processor 210 may be configured to analyze the original content.

According to an example embodiment, the processor 210 may analyze the original content to generate a description corresponding to a comprehensive commentary of the original content. The analysis of the original content may be performed via processes such as analysis of objects included in the original content, scene interpretation of the original content, and/or performing semantic segmentation.

Referring to FIG. 6, operations of a processor (e.g., the processor 210 of FIG. 2) for analyzing original content 601 are schematically illustrated. Reference numeral 602 in FIG. 6 represents a feature encoding process for the original content 601. The processor 210 may extract features within the original content 601. For example, the processor 210 may be configured to extract features by quantifying pixel values (e.g., RGB values or luminance histograms) of the original content 601 or by using a Convolutional Neural Network (CNN) or a Recurrent Neural Network (RNN) trained to extract features of the original content 601. The extracted features may be used to understand the meaning of the original content 601.

Reference numeral 603 in FIG. 6 represents a process of detecting an object 610 within the original content 601. The processor 210 may obtain information such as color, texture, and shape, based on the features extracted from the original content 601. By preprocessing the original content 601, the processor 210 may remove noise, classify the class of the object 610 included in the original content 601 based on the extracted features, and generate a bounding box to indicate the boundary of the classified object 610. For example, the processor 210 may detect a vehicle 611, a cloud 612, a streetlamp 613, and/or a tree 614 included in the original content 601. For example, the processor 210 may use an object detection model or a class classification model to detect the object 610, but the disclosure is not limited thereto.

Reference numeral 604 in FIG. 6 represents a segmentation mask of the original content 601. For example, the processor 210 may obtain a segmentation mask of the original content 601 using an artificial intelligence model. The processor 210 may obtain a segmentation mask by assigning a specific label to each of the pixels included in the original content 601. For example, the processor 210 may assign a first label to first pixels 621 corresponding to a vehicle included in the original content 601 and assign a second label to second pixels 622 corresponding to a road distinguished from the vehicle. The operations for analyzing the original content 601 are not limited to the examples described above and various other alternative may be possible.

According to an example embodiment, the processor 210 may analyze the original content 601 through the aforementioned processes. The processor 210 may analyze the original content 601 through processes such as analyzing latent vectors, which are potential vector-form variables of the original content 601, a latent space formed by the latent vectors, a scene description, analysis of the position and type of the object 610 in a region of interest (ROI), a semantic segmentation for classifying pixels, and/or a style or color transition.

Referring back to FIG. 5, in operation 506, the processor 210 may be configured to generate a description representing the original content based on the analysis of the original content.

According to an example embodiment, the processor 210 may be configured to generate a description that comprehensively interprets the original content based on the analysis result of the original content. For example, the description may include natural language representing information such as the style of the original content and the objects included in the original content. The processor 210 may store the generated description in a memory (e.g., the memory 220 of FIG. 2). According to an example embodiment, in a case where the first content is a creative work, the description may include an explanation regarding the style of the creative work. For example, the description may include an explanation representing a creator's unique style so that the unique style reflected in the creative work can be reflected.

According to an example embodiment, the description of the original content generated through the operations described in FIG. 5 may be used as a seed prompt for generating a first prompt. For example, when a second application (e.g., the second application 222 of FIG. 2) is executed by the processor 210, the description may be input into a Large Language Model (LLM) and thus the first prompt may be output.

Hereinafter, operations for extracting the first prompt using the description will be described.

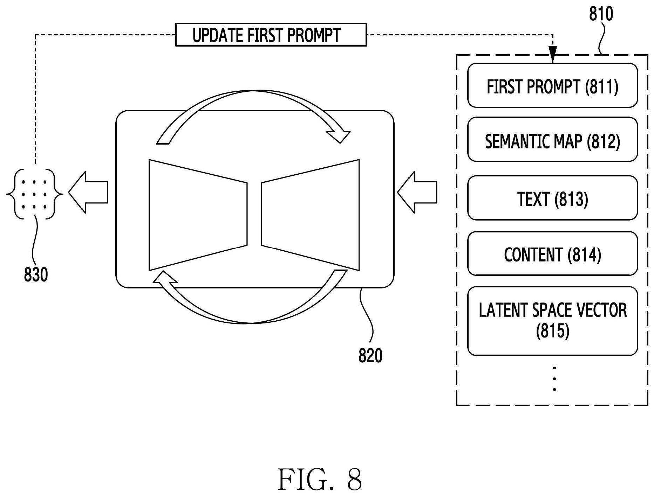

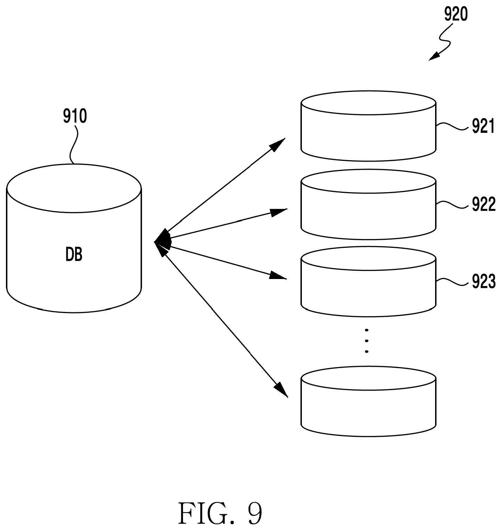

FIG. 7 is a flowchart illustrating operations of an example electronic device for extracting and updating a first prompt. FIG. 8 illustrates operations for updating the first prompt. FIG. 9 is a diagram for explaining a tuned-up first prompt.

The processor of FIG. 2 (e.g., the processor 210 of FIG. 2) may perform the operations of the electronic device 101 described with reference to FIG. 7. When instructions stored in the memory (e.g., the memory 220 of FIG. 2) are executed by the processor 210, it may cause the electronic device 101 to perform the operations of the electronic device 101 described with reference to FIG. 7. For example, the operations described with reference to FIG. 7 may refer to operations caused by the execution of a second application (e.g., the second application 222 of FIG. 2).

Referring to FIG. 7, in operation 701, the processor 210 may be configured to obtain the first prompt corresponding to the first content by inputting a prompt based on the description of the original content into a large language model.

According to an example embodiment, the processor 210 may obtain a prompt based on a description. The description may refer to a description generated by the operations described in FIG. 5. Since the description is a description obtained by analyzing the original content of the first content, when the prompt is input to a large language model, a first prompt corresponding to the first content may be output. The large language model (LLM) is an artificial intelligence model trained with text data and may be used to obtain the prompt based on the description. For example, the processor 210 may obtain the first prompt by converting a description that comprehensively interprets the original content of the first content into a format that can be input into a large language model, and then inputting the converted description into the large language model.

In operation 702, the processor 210 may be configured to obtain fourth content by inputting the first prompt into a generative artificial intelligence model.

According to an example embodiment, the fourth content may refer to content obtained by inputting the first prompt into the generative artificial intelligence model. The processor 210 may obtain the fourth content by inputting the first prompt corresponding to the first content into the generative artificial intelligence model. To obtain the fourth content, the processor 210 may also input the first content or the original content of the first content into the generative artificial intelligence model, along with the first prompt. Since the fourth content is generated by the input of the first prompt corresponding to the first content, the fourth content may be content similar to the first content.

In operation 703, the processor 210 may be configured to identify the similarity between the first content and the fourth content.

According to an example embodiment, the processor 210 may identify the similarity by comparing the first content and the fourth content. For example, the processor 210 may identify the similarity by extracting first features of the first content and second features of the second content, and then quantifying the similarity between the first and second features. For example, the similarity may be identified by quantifying pixel values of the pixels included in the first content and the fourth content and comparing those values. However, the disclosure is not limited thereto. For example, the processor 210 may identify the similarity between the first content and the fourth content using an artificial intelligence model trained to analyze the similarity of content. The similarity may be obtained as a numerical value.

In operation 704, the processor 210 may be configured to compare the similarity with a threshold value.

According to an example embodiment, a threshold value at which the fourth content is determined to be substantially identical to the first content may be preset. For example, in a case where it is set such that the fourth content is determined to be substantially identical to the first content when the similarity between the first and fourth content exceeds approximately 95%, the threshold value may be approximately 95%. Based on identifying the similarity greater than approximately 95%, the processor 210 may determine that the fourth content obtained through the generative artificial intelligence model is substantially identical to the first content. Based on identifying the similarity that is equal to or less than approximately 95%, the processor 210 may determine that the fourth content obtained through the generative artificial intelligence model is not substantially identical to the first content.

According to an example embodiment, the processor 210 may identify whether the first prompt corresponds to the first content based on the similarity between the first content and the fourth content. For example, in a case where the similarity exceeds the threshold value, the fourth content may be determined to be content substantially identical to the first content, and thus the processor 210 may determine that the first prompt used to generate the fourth content corresponds to the first content. For example, in a case where the similarity is less than or equal to the threshold value, the fourth content cannot be determined to be content substantially identical to the first content, and thus the processor 210 may determine that the first prompt used to generate the fourth content does not correspond to the first content. In a case where the similarity less than or equal to the threshold value is identified, operation 705 may be performed. In a case where the similarity greater than the threshold value is identified, operation 706 may be performed. In the disclosure, the expressions such as 'greater than (or exceeding)' or 'less than or equal to' may be used to determine whether a specific condition is satisfied or fulfilled, but it is only a description for expressing an example and does not exclude a description of 'greater than or equal to' or 'less than'. For example, a condition described as 'greater than (or exceeding)' may be replaced with 'greater than or equal to'. For example, a condition described as 'less than or equal to' may be replaced with 'less than'.

In operation 705, the processor 210 may be configured to update the first prompt so that the similarity increases.

According to an example embodiment, based on identifying the similarity less than or equal to the threshold value, the processor 210 may update the first prompt so that the similarity between the first content and the fourth content increases.

Referring to FIG. 8, input data 810 input to a generative artificial intelligence model 820 may include, but is not limited to, a first prompt 811, a semantic map 812 for the first content and/or the original content, text 813 for explaining the first content and/or the original content, the first content and/or the original content 814, and a latent space vector 815 of the first content and/or the original content. As the input data 810 is input to the generative artificial intelligence model 820, the fourth content may be output. According to a comparison between the first content and the fourth content, the similarity may be analyzed. For example, the processor (e.g., the processor 210 of FIG. 2) may analyze the similarity by calculating an error between the first content and the fourth content using an artificial intelligence model 830, and update the first prompt 811 based on the analysis result. The first prompt 811 may be replaced with the updated first prompt, input back into the generative artificial intelligence model 820, and new fourth content may be generated again based on the updated first prompt.

Referring back to FIG. 7, the processor 210 may update the first prompt 811 by repeating the operations 702, 703, 704, and 705, until the similarity exceeds the threshold value. As the first prompt updated through the operation 705 is input to the generative artificial intelligence model, the new fourth content is obtained (operation 702), the similarity between the first content and the new fourth content is identified (operation 703), and the identified similarity may be compared with the threshold value (operation 704).

In operation 706, the processor 210 may be configured to finalize the first prompt.

According to an example embodiment, the processor 210 may finalize the first prompt based on identifying the similarity exceeding the threshold value. For example, when the similarity between the first content and the fourth content exceeds about 95%, the processor 210 may finalize the first prompt used for generating the fourth content. Since the finalized first prompt may be used to generate the fourth content having the similarity exceeding the threshold value, it may be determined as a prompt corresponding to the first content.

The example electronic device 101 may provide a tuned-up first prompt. Referring to FIG. 9, the electronic device (e.g., the electronic device 101 of FIG. 2) may include a database 910 for storing tune-up information of the first prompt. The tune-up information may refer to information for enabling generation of content substantially identical to the first content, even if the first prompt is input to various generative artificial intelligence models.

For example, in a case where the first prompt is input to various artificial intelligence models 920 different from the generative artificial intelligence model used to extract the first prompt, the content substantially identical to the first content may not be output due to different internal algorithms of each of the other generative artificial intelligence models 920. The electronic device 101 may store, in the database 910, the tune-up information mapped to each of the various artificial intelligence models 920, so that substantially identical results can be obtained when the first prompt is input to the other generative artificial intelligence models 920.

For example, a result output when a specific word (e.g., A) is input to a first artificial intelligence model 921 and results output when the specific word A is input to a second artificial intelligence model 922 or a third artificial intelligence model 923 may not be substantially identical. The electronic device 101 may obtain tune-up information on another word (e.g., A') to be replaced according to characteristics of the second artificial intelligence model 922 or characteristics of the third artificial intelligence model 923, in order to obtain substantially identical results through the second artificial intelligence model 922 or the third artificial intelligence model 923. The electronic device 101 may input the specific word A when using the first artificial intelligence model 921, and replace the specific word A with another word A' for input when using the second artificial intelligence model 922 or the third artificial intelligence model 923. The example electronic device 101 may provide a prompt mapped to an artificial intelligence model to be used, based on the tune-up information stored in the database 910.

The example electronic device may extract the first prompt from the first content by performing the operations described in FIG. 5 and FIG. 7. Since the extracted first prompt is a prompt used to generate content substantially identical to the first content, clear identification of a prompt that is difficult to identify due to a black-box structure of a generative artificial intelligence model may be made. Referring to the second screen 400b shown in FIG. 4B, the electronic device 101 displays the first prompt 451 extracted from first content 461, and thus the user 400 may select one or more words 452 in the first prompt 451. Since one or more words 452 to be applied to second content 462 may be provided, third content (e.g., the third content 463 of FIG. 4C) in which the one or more words 452 are applied to the second content 462 may be generated. In the examples described above, the first prompt 451 was described as obtaining the original data with the style of the first content removed and as being extracted through a description of the original data, but the disclosure is not limited thereto. For example, the first prompt 451 may be extracted from meta information (e.g., exchangeable image file format (EXIF)) of the first content that can be read by a computer. For example, the meta information of the first content may include information such as camera manufacturer, camera model, creation date, brightness, contrast, light source chroma, white balance, exposure time, an exposure program, focal length, F-number, and/or shutter speed, and whether to use a flash. The processor 210 may extract the first prompt 451 capable of generating content substantially identical to the first content based on the meta information of the first content.

In the above description, it was explained that the fourth content is obtained by acquiring the first prompt to be input to a large language model and inputting the first prompt into a generative artificial intelligence model, but the disclosure is not limited thereto. For example, the processor 210 may obtain the fourth content by inputting the description generated by the operation 506 of FIG. 5 to the generative artificial intelligence model. According to an example embodiment, the processor 210 may change a description generated based on an analysis of the original content into a description optimized for an artificial intelligence model for generating the fourth content, and input the changed description to the generative artificial intelligence model. As the changed description is input to the generative artificial intelligence model, the fourth content may be generated. In such a case, the operation 701 may be omitted, and the operation 702 may be replaced with an operation in which fourth content is obtained by inputting the changed description into the generative artificial intelligence model.

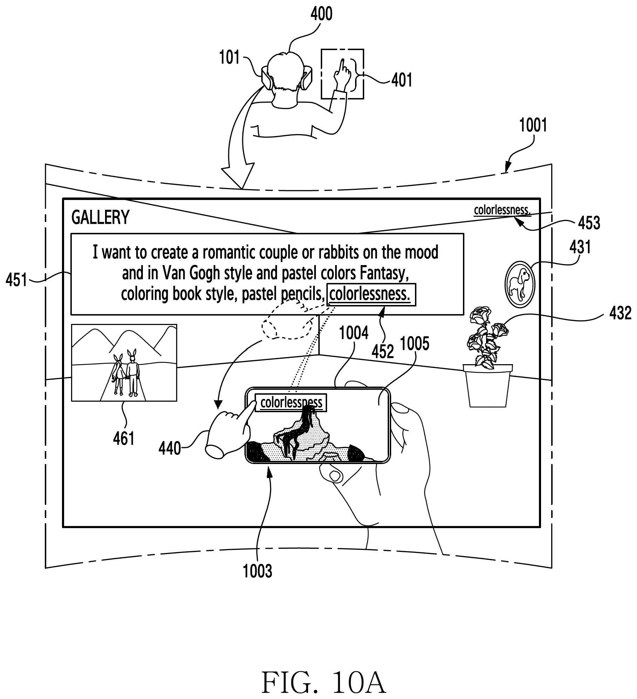

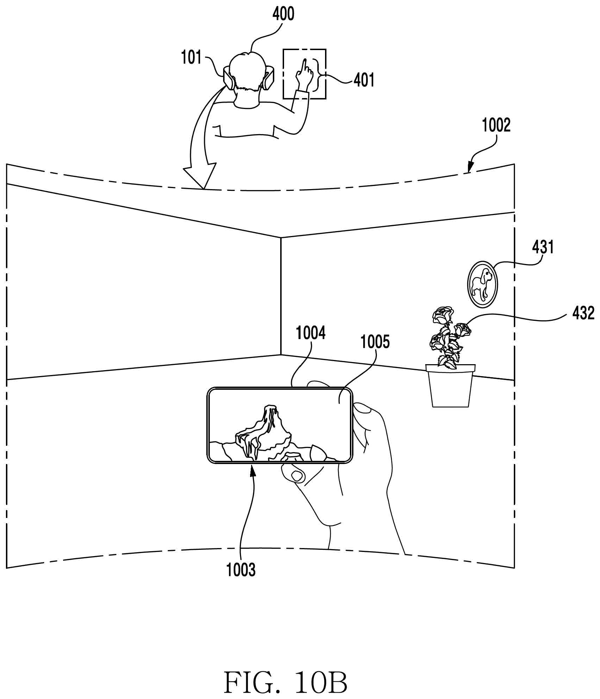

FIG. 10A illustrates an example screen for applying a first prompt to content displayed via another electronic device located in an external environment. FIG. 10B illustrates an example screen in which content displayed via another electronic device is changed.

The aforementioned operations were described as applying at least a portion of a first prompt to content stored in the memory (e.g., the memory 220 of FIG. 2), but are not limited thereto. Referring to FIG. 10A, target content to which at least a portion of the first prompt is applied may be content 1005 displayed via a display 1004 of another electronic device 1003.

Referring to FIG. 10A, the electronic device 101 may operate in a see-through mode that displays an external environment via a display (e.g., the display 250 of FIG. 2). A camera (e.g., the camera 230 of FIG. 2) may provide an image obtained by capturing the external environment to a processor (e.g., the processor 210 of FIG. 2). The processor 210 may provide a composite image including the external environment by synthesizing the image of the external environment on a screen displayed via the display 250. For example, referring to a screen 1001 of FIG. 10A, objects (e.g., a dog picture 431 and a flowerpot 432) included in the external environment may be included in the screen 1001.

For example, in a case where another electronic device 1003 is included in an image captured via the camera 230, the other electronic device 1003 may be displayed in the screen 1001. In a case where the other electronic device 1003 includes the display 1004 displaying content 1005, the display 1004 displaying the content 1005 may be displayed in the screen 1001.

According to an example embodiment, the electronic device 101 may display a first prompt 451 corresponding to the first content 461 on the screen 1001. The user 400 may provide a first user input for one or more words 452 included in the first prompt 451. For example, the processor 210 may receive a first user input for "colorlessness" among one or more words 452 included in the first prompt 451. The processor 210 may control the display 250 to display a visual effect on the one or more words 452 or to display a visual object 453 including the one or more words 452, based on receiving the first user input for the one or more words 452.

According to an example embodiment, the processor 210 may receive a second user input for applying one or more words 452 to the content 1005 displayed on the display 1004 of the other electronic device 1003. For example, the user 400 may provide the second user input through a drag gesture of moving the one or more words 452 toward the content 1005. For example, when the second user input for "colorlessness" is provided, a virtual object 440 corresponding to a hand 401 may move toward the content 1005 along with the word "colorlessness." The processor 210 may control the display 250 so that the content 1005 displayed on the display 1004 of the other electronic device 1003 is modified based on the one or more words 452 by the second user input.

Referring to FIG. 10B, the content 1005 displayed in a screen 1002 may be displayed in a modified state based on the one or more words 452. For example, in a case where "colorlessness" included in the first prompt (e.g., the first prompt 451 of FIG. 10A) is applied to the content 1005, the content 1005 may be displayed with colors removed, within the screen 1002 displayed via a display (e.g., the display 250 of FIG. 2). In a see-through mode, even though the display 1004 of the other electronic device 1003 located in an external environment displays the content 1005 having the colors, the screen 1002 provided to the user 400 may provide the content 1005 with the colors removed. In FIG. 10A and FIG. 10B, the other electronic device 1003 is illustrated as a smartphone, but is not limited thereto. As described above, the electronic device 101 may modify not only content stored in the memory (e.g., the memory 220 of FIG. 2) but also content 1005 displayed on the display 1004 of the other electronic device 1003, based on at least a portion of the first prompt 451 extracted from the first content 461, and display the modified content 1005.

In the aforementioned embodiment, a wearable device has been described as an example of the electronic device 101, but the electronic device 101 is not limited to such a wearable device. For example, the screens illustrated in FIG. 10A and FIG. 10B may be screens captured by a camera of an electronic device such as a smartphone, a tablet, or a computer.

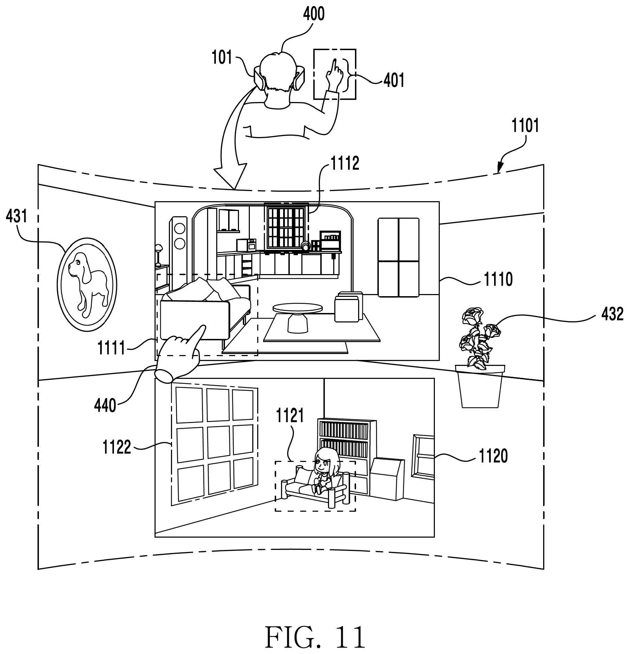

FIG. 11 illustrates an example screen for representing objects related to a first prompt.

Referring to FIG. 11, an example electronic device 101 may display a virtual object for representing an object related to a first prompt among objects included in second content 1120.

According to an example embodiment, the first prompt corresponding to first content 1110 is a prompt capable of generating the first content 1110, and thus it may be based on attributes of objects included in the first content 1110. In a case where an object related to the first prompt exists in second content 1120, it may be suitable to change the object related to the first prompt based on the first prompt. For example, when an attribute of an object included in the first content 1110 is an attribute suitable for being applied to the object, an object to which the attribute can be reflected may exist in the second content 1120. In such a case, the processor 210 may control a display (e.g., the display 250 of FIG. 2) to display a virtual object in the screen 1101 in order to represent another object in the second content 1120 corresponding to the object.

For example, the first content 1110 may include objects such as a sofa, a window, an air conditioner, a refrigerator, a table, and a carpet. A first prompt extracted from the first content 1110 may be a prompt capable of generating content including the objects. For example, the first prompt may represent features of each of the objects included in the first content 1110. As illustrated in FIG. 11, when a sofa included in the first content 1110 is a couch type, the first prompt may include a word representing features regarding the couch-type sofa. The second content 1120 may include objects such as a sofa, a window, a bookshelf, or a person. In the above example, among the objects included in the second content 1120, an object corresponding to the objects included in the first content 1110 may be suitable for application of the first prompt. For example, attributes such as color, texture, shape, and size of the sofa included in the first content 1110 are attributes suitable for being applied to the sofa included in the second content 1120, and thus a portion of the first prompt corresponding to the sofa included in the first content 1110 may be applied to the second content 1120. In a case where a portion of the first prompt corresponding to the sofa included in the first content 1110 is applied to the second content 1120, the sofa in the second content 1120 may be modified to a sofa having the attributes of the sofa in the first content 1110.

According to an example embodiment, the processor may display virtual objects 1111, 1112, 1122, and 1122 to represent objects related to the first prompt. The processor 210 may identify the objects corresponding to each other by detecting first objects included in the first content 1110 and second objects included in the second content 1120. For example, when a sofa and a window are included in the first content 1110 and a sofa and a window are included in the second content 1120, the processor 210 may identify the sofa and the window. The processor 210 may display a first virtual object 1111, a second virtual object 1112, a third virtual object 1121, and a fourth virtual object 1122 in the screen 1101 to represent that attributes applied to the sofa and the window included in the first content 1110 may be applied to the sofa and the window included in the second content 1120. For example, the first virtual object 1111 corresponding to the sofa included in the first content 1110 and the third virtual object 1121 corresponding to the sofa included in the second content 1120 may have the same shape (e.g., a dotted box). For example, the second virtual object 1112 corresponding to the window included in the first content 1110 and the fourth virtual object 1122 corresponding to the window included in the second content 1120 may have the same shape (e.g., a dot-dashed line box). The user 400 may intuitively identify an object in the second content 1120 that is suitable for the application of the first prompt, by displaying virtual objects of the same shape.

According to an embodiment, in a case where the user selects the first virtual object 1111 and drags it to the third virtual object 1121, the attribute corresponding to the first virtual object 1111 from the first prompt may be applied to the third virtual object 1121. For example, in a case where the user selects the first virtual object 1111, a word (e.g., couch-type sofa) representing an attribute related to the object (e.g., the sofa in the first content 1110) corresponding to the first virtual object 1111 may be selected or displayed in the first prompt. In a case where the user drags the word representing the attribute selected in the first prompt to the third virtual object 1121, the object corresponding to the third virtual object 1121 (e.g., the sofa in the second content 1120) may be changed to have the attribute. For example, when the user provides a user input for the first virtual object 1111, the word (e.g., couch-type sofa) representing the attribute of the object corresponding to the first virtual object 1111 included in the first content 1110 may be selected in the first prompt. In a case where the selected word is dragged to the third virtual object 1121 in the second content 1120, the object corresponding to the third virtual object 1121 in the second content 1120 may be modified to a couch-type sofa.

In the aforementioned embodiment, the wearable device has been described as an example of the electronic device 101, but the electronic device 101 is not limited to a wearable device. For example, the screen illustrated in FIG. 11 may be a screen provided by a device such as a smartphone, a tablet, or a computer.

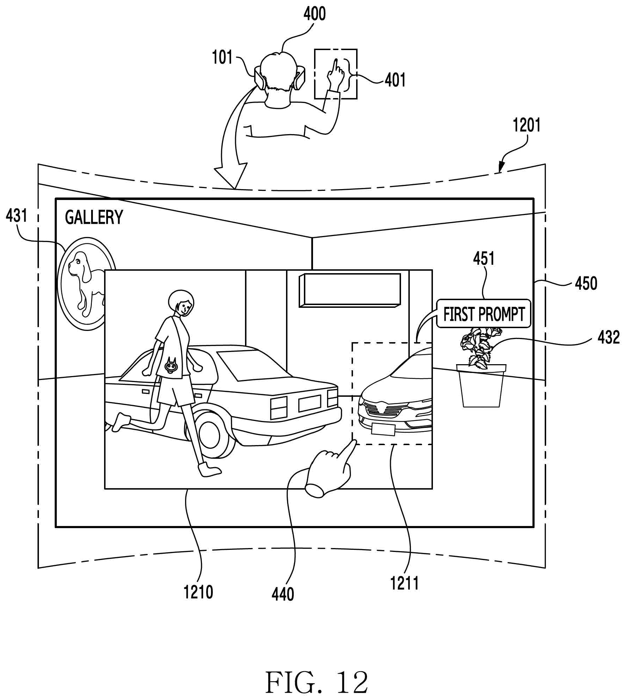

FIG. 12 illustrates an example screen for extracting a first prompt for a partial area of first content.

Referring to FIG. 12, an example electronic device 101 may extract a first prompt 451 corresponding to a partial area 1211 within first content 1210. For example, in order to extract the first prompt 451 based on attributes included in the partial area 1211 of the first content 1210 (e.g., an object included in the partial area 1211), the user 400 may provide a user input for designating the partial area 1211 through a virtual object 440 corresponding to a hand 401. For example, the user input may be a spread gesture for specifying a boundary of the partial area 1211 within the first content 1210, but the disclosure is not limited thereto.

According to an example embodiment, the processor (e.g., the processor 210 of FIG. 2) may be configured to extract the first prompt 451 corresponding to the partial area 1211 based on receiving the user input for specifying the partial area 1211. The first prompt 451 may refer to a prompt capable of generating content corresponding to the partial area 1211, when input into a generative artificial intelligence model.

Referring to a screen 1201 shown in FIG. 12, a vehicle may be located within the partial area 1211. The processor 210 may extract the first prompt 451 capable of generating content corresponding to the vehicle within the partial area 1211, based on the reception of the user input for extracting the first prompt 451 from the partial area 1211 where the vehicle is located. The processor 210 may extract the first prompt 451 by detecting an object located within the partial area 1211. For example, the first prompt 451 may refer to a prompt capable of generating content for a vehicle, which corresponds to the model, color, and structure of the vehicle located within the partial area 1211. In a case where the first prompt 451 corresponding to the partial area 1211 is applied to other content including a vehicle, the vehicle included in the other content may be changed to an image corresponding to the vehicle included in the partial area 1211.

In the aforementioned embodiment, the wearable device has been described as an example of the electronic device 101, but the electronic device 101 is not limited to such a wearable device. For example, the screen shown in FIG. 12 may be a screen provided by an electronic device such as a smartphone, a tablet, or a computer.

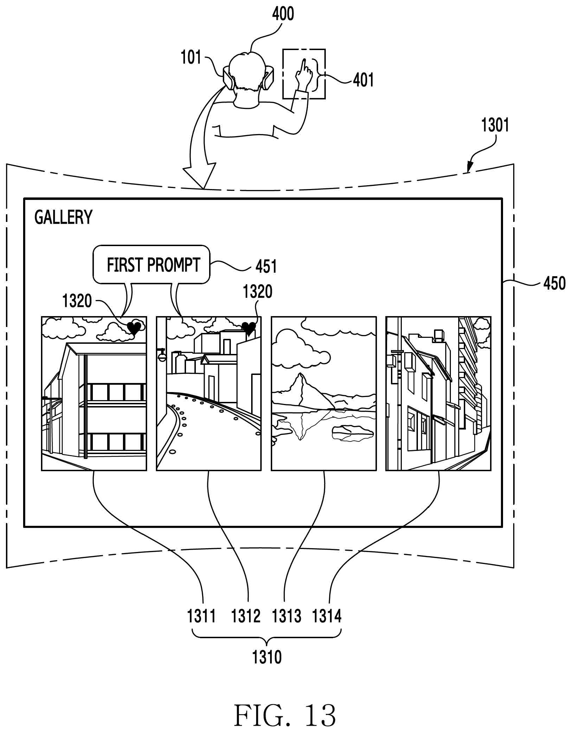

FIG. 13 illustrates an example screen for extracting a first prompt from one or more user-preferred contents.

Referring to FIG. 13, an example electronic device 101 may extract a first prompt 451 from one or more user-preferred contents. For example, the electronic device 101 may include one or more user-preferred contents stored in the memory (e.g., the memory 220 of FIG. 2). For example, the user 400 may provide a user input for distinguishing some of the contents 1310 stored in the memory as preferred content. The electronic device 101 may identify one or more user-preferred contents based on the user input for distinguishing as preferred contents. For example, the electronic device 101 may provide an indicator 1320 indicating the one or more user-preferred contents.

According to an example embodiment, the processor (e.g., the processor 210 of FIG. 2) may be configured to extract the first prompt 451 based on the one or more user-preferred contents. For example, the processor 210 may detect common attributes of one or more user-preferred contents distinguished as user-preferred contents through the user input and extract the first prompt 451 capable of generating content based on the common attributes.

Referring to a screen 1301 of FIG. 13, the contents 1310 may be stored in the memory 220. For example, the contents 1310 may include first content 1311, second content 1312, third content 1313, and fourth content 1314. In a case where the user selects the first content 1311 and the second content 1312 as preferred contents, the processor 210 may be configured to display indicators 1320 in the first content 1311 and the second content 1312. To extract the first prompt 451, the processor 210 may be configured to detect attributes commonly included in the first content 1311 and the second content 1312 and extract the first prompt 451 based on the attributes. The processor 210 may display the first prompt 451 in the screen 1301 based on execution of a software application for providing a list of the contents 1310. The user 400 may modify the third content 1313 and/or the fourth content 1314 by providing a user input for reflecting at least a portion of the first prompt 451 into the third content 1313 and/or the fourth content 1314, which are not user-preferred contents.

According to an example embodiment, as the first prompt 451 to be applied to target content is extracted based on one or more user-preferred contents, the electronic device 101 may provide attributes preferred by the user 400 for modifying the target content. The user 400 may use the first prompt 451 extracted based on the one or more user-preferred contents to modify the target content. As the first prompt 451 reflecting the user's preference is provided, the target content may be modified according to the personal preference of the user 400.

According to an example embodiment, the preferred contents may be displayed based on a user's history among the contents 1310 stored in the memory 220. For example, the electronic device 101 may identify the preferred contents based on information related to contents uploaded to an external electronic device (e.g., a social network service server or a messenger server). The contents transmitted to an external electronic device by the user at a designated number of times or more via the electronic device 101 may be identified as preferred contents. The electronic device 101 may identify the preferred contents based on the history and provide the first prompt 451 based on the preferred contents.

In the aforementioned embodiment, the wearable device has been described as an example of the electronic device 101, but the electronic device 101 is not limited to such a wearable device. For example, the screens shown in FIG. 13 may be screens provided by an electronic device such as a smartphone, a tablet, or a computer.

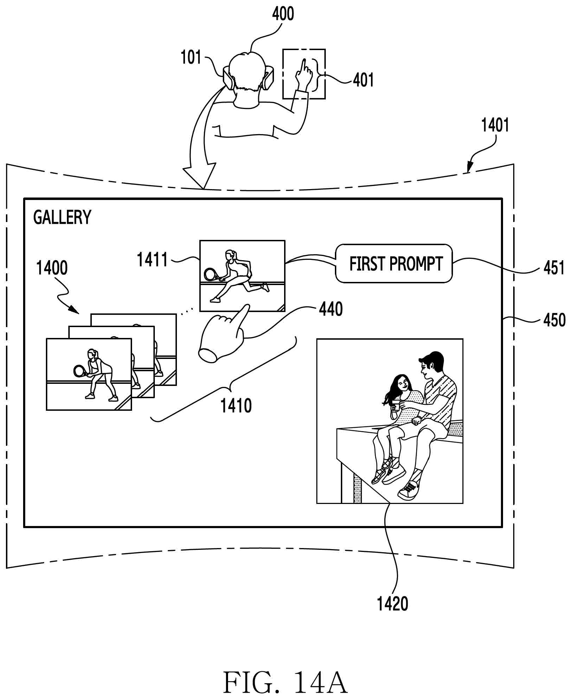

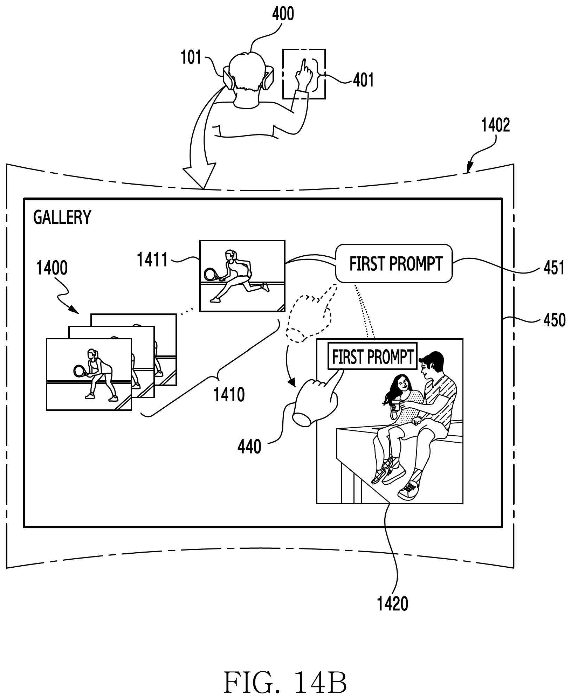

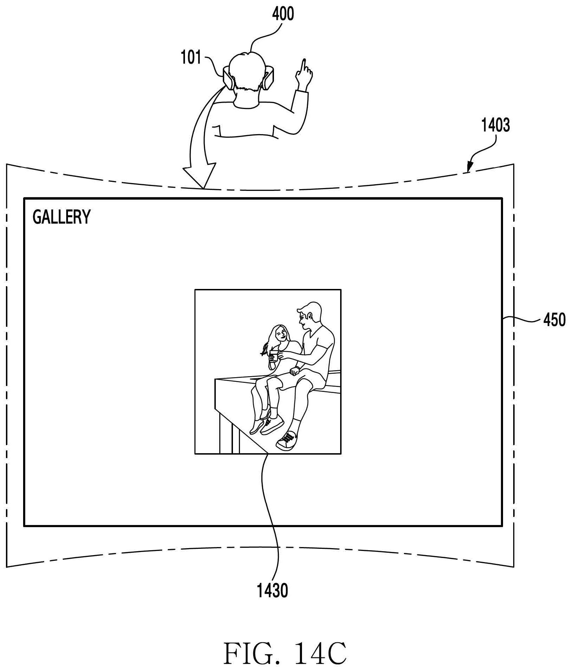

FIG. 14A illustrates an example screen for extracting a first prompt for one of frames included in video content. FIG. 14B illustrates an example screen in which the first prompt for one of the frames included in video content is applied to second content. FIG. 14C illustrates an example screen in which the second content is displayed.

Referring to FIG. 14A, first content 1400 may be a video. For example, a video may refer to content in which a plurality of frames 1410, which are still images, are continuously provided. An example electronic device 101 may extract a first prompt 451 from one frame 1411 among the plurality of frames 1410 included in the video and modify second content 1420 based on the extracted first prompt 451.

According to an example embodiment, the user 400 may provide a user input for extracting the first prompt 451 corresponding to one frame 1411 among the plurality of frames 1410 included in the video. Referring to a screen 1401 of FIG. 14A, for example, when a video is played, the user 400 may stop the playback of the video at a timing when the frame 1411 is displayed. At the timing, the frame 1411 may be displayed within the screen 1401. A first user input for the frame 1411 may be provided. For example, the first user input may be performed through a virtual object 440 corresponding to a hand 401 of the user 400. The processor (e.g., the processor 210 of FIG. 2) may extract the first prompt 451 corresponding to the frame 1411 based on receiving the first user input for the frame 1411.

Referring to FIG. 14B, the user 400 may provide a drag gesture for dragging at least a portion of the first prompt 451 to the second content 1420 in order to apply at least a portion of the first prompt 451 to the second content (e.g., the second content 1420 of FIG. 14A). Referring to a screen 1402 of FIG. 14B, for example, the second user input may be performed in a manner in which the virtual object 440 corresponding to the hand 401 moves to the second content 1420 together with at least a portion of the first prompt 451. The processor 210 may obtain third content (e.g., the third content 1430 of FIG. 14C) by generating a second prompt including at least a portion of the first prompt 451 and inputting the second prompt into a generative artificial intelligence model. To obtain the third content 1430, the processor 210 may also input the video into the generative artificial intelligence model along with the second prompt. For example, in a case where a portion of the first prompt 451 selected by the first user input is a word corresponding to an effect of removing color from the content, the third content 1430 may be generated by removing the color from the second content 1420. Referring to FIG. 14C, the third content 1430 may be displayed in a screen 1403. For example, in a case where a portion of the first prompt (e.g., the first prompt 451 of FIG. 14B) selected by the first user input is a word corresponding to an effect of removing the color from the content, the third content 1430 may be content from which the color of the second content 1420 is removed.

For example, in a case where the second content 1420 is a video, the third content 1430 may be content changed by applying the first prompt 451 to one frame among a plurality of frames included in the second content 1420. The user 400 may confirm the change to the frame and provide a user input for accepting the change to the second content 1420 based on the first prompt 451. The processor 210 may generate the third content 1430 by changing all of the plurality of frames included in the second content 1420 based on the first prompt 451, based on the reception of the user input.

According to an example embodiment, by extracting the first prompt 451 corresponding to one frame 1411 from among the plurality of frames 1410 included in the video, modification of the content according to an intention of the user 400 may be provided. Because the user 400 may select the frame 1411 used for modifying the second content 1420 from among the plurality of frames 1410, the electronic device 101 may provide an enhanced user experience.

In the aforementioned embodiment, the wearable device has been described as an example of the electronic device 101, but the electronic device 101 is not limited to such a wearable device. For example, the screens shown in FIG. 14A, FIG. 14B, and FIG. 14C may be screens provided by an electronic device such as a smartphone, a tablet, or a computer.

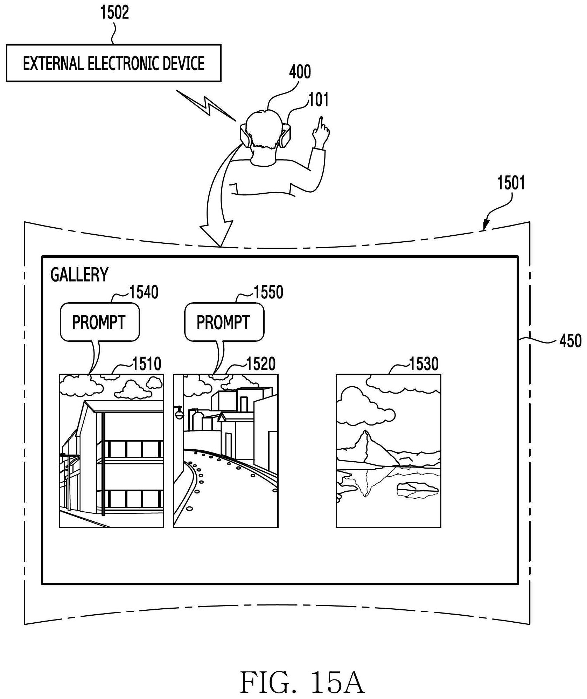

FIG. 15A illustrates an example screen providing a first prompt based on a user history.

Referring to FIG. 15A, first content 1510 may be displayed in a partial area 450 of a screen 1501. As described above, a prompt 1540 corresponding to the first content 1510 may be displayed in the screen 1501. According to an embodiment, the electronic device 101 may provide a prompt based on the user history along with the prompt 1540 corresponding to the first content 1510.

According to an embodiment, a prompt 1550 based on user history may be a prompt corresponding to other content 1520 that the user 400 has previously used. For example, in a case where the user 400 previously used the prompt 1550 corresponding to the other content 1520 to change the second content 1530, the electronic device 101 may provide the prompt 1550 together with the prompt 1540 corresponding to the first content 1510. The user 400 may reflect the previously used prompt 1550 into the second content 1530 along with the prompt 1540 corresponding to the first content 1510 to change the second content 1530.

According to an embodiment, the prompt based on the user history may be provided by updating the prompt 1540 corresponding to the first content 1510. For example, the electronic device 101 may obtain latest information on the first content 1510 from an external electronic device 1502 to update the prompt 1540 based on the latest information. For example, in a case where the first content 1510 is a creation of a certain author, the electronic device 101 may search for the author's latest creation from an external electronic device 1502 (e.g., a web server), and when the latest creation is found, provide a prompt 1540 reflecting information about the latest creation.

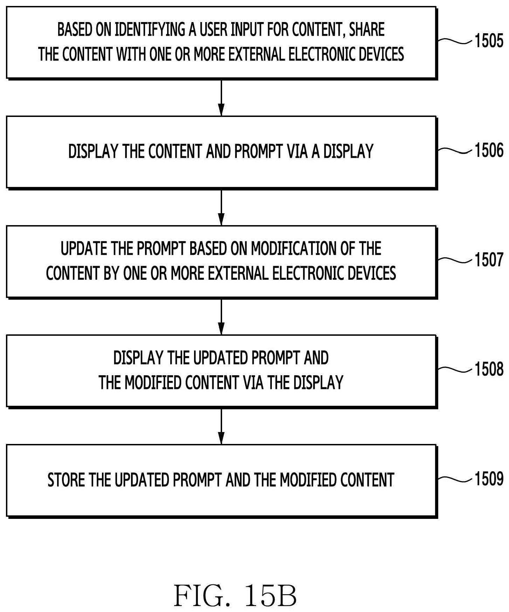

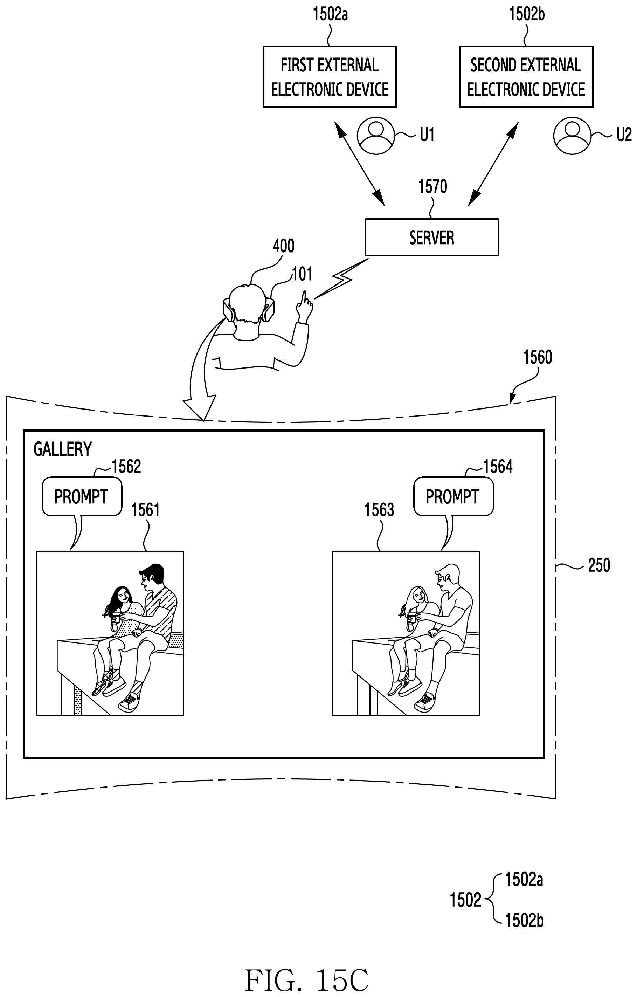

According to an embodiment, the electronic device 101 may be configured to share a prompt used for changing the second content 1530. For example, the user 400 may transmit prompt information used for changing the second content 1530 to an external electronic device 1502 (e.g., another user's electronic device). According to an embodiment, the electronic device 101 may share a prompt related to the features of the specific content. Hereinafter, the operation will be described with reference to FIGS. 15B and 15C.

FIG. 15B is a flowchart illustrating an operation of providing a prompt based on content modified by a plurality of external electronic devices. FIG. 15C illustrates an example screen for providing a prompt based on content modified by a plurality of external electronic devices.

Referring to FIG. 15B, in operation 1505, the processor 210, based on identifying a user input for content (e.g., the content 1561 of FIG. 15C), may be configured to share the content 1561 with one or more external electronic devices (e.g., one or more external electronic devices 1502 of FIG. 15C).

Referring to FIG. 15C, the electronic device 101 may communicate with one or more external electronic devices 1502. The one or more external electronic devices 1502 may include a first external electronic device 1502a owned by a first user U1 and a second external electronic device 1502b owned by a second user U2, both of whom are different from the user of the electronic device 101. For example, the first external electronic device 1502a and/or the second external electronic device 1502b may be wearable devices, but are not limited thereto, and may include devices such as smartphones, tablets, and computers.

According to an embodiment, the electronic device 101 may share content 1561 with one or more external electronic devices 1502 and update a prompt 1562 corresponding to the content 1561 together with other users (the first user U1 and the second user U2).

According to an embodiment, the electronic device 101 may identify a user input for sharing the content 1561 received from the user 400. The user input may refer to a user input for selecting the content 1561 to be shared. The processor 210 may share the content 1561 with one or more external electronic devices 1502 based on identifying the user input. For example, the electronic device 101 may share the content 1561 and the prompt 1562 corresponding to the content 1561 with the one or more external electronic devices 1502, via a server 1570.

In operation 1506, the processor 210 may be configured to display the content 1561 and the prompt 1562 via a display (e.g., the display 250 of FIG. 15C).

Referring to a screen 1560 shown in FIG. 15C, the processor 210 may be configured to display the selected content 1561 and the prompt 1562 corresponding to the content 1561, via the display 250. The screen 1560 may correspond to a screen provided by the first external electronic device 1502a to the first user U1 and a screen provided by the second external electronic device 1502b to the second user U2. For example, the first external electronic device 1502a may provide the screen on which the content 1561 is displayed to the first user U1, and the second external electronic device 1502b may provide the screen on which the content 1561 is displayed to the second user U2.

In operation 1507, the processor 210 may be configured to update the prompt 1562 based on a modification of the content 1561 by the one or more external electronic devices 1502.

According to an embodiment, not only the user 400 of the electronic device 101 but also the users U1 and U2 of the one or more external electronic devices 1502 may modify the content 1561. For example, the one or more external electronic devices 1502 may provide a user input for modifying the content 1561 as described above. Based on the user input, the content 1561 may be modified into other content 1563. For example, based on a user input for removing colors included in the content 1561, the content 1561 may be modified into other content 1563 from which the colors are removed. For example, in a case where the content 1561 is modified into other content 1563 by the first user U1, the modified other content 1563 may be transmitted to the server 1570. The server 1570 may provide the modified other content 1563 to the electronic device 101 and the second external electronic device 1502b. The electronic device 101 and the second external electronic device 1502b may display the modified content 1563. The server 1570 may be omitted. For example, the electronic devices 101, 1502a, and 1502b may share content through short-range communication (e.g., Bluetooth communication). In a case where the content 1561 is modified into other content 1563 by the first user U1 or the second user U2, the modified other content 1563 may be provided to the electronic device 101 through the short-range communication without passing through the server 1570.

According to an embodiment, the electronic device 101 may update the prompt 1562 based on the modification of the content 1561 by the one or more external electronic devices 1502. The processor 210 may update the prompt 1562 corresponding to the content 1561 before modification to another prompt 1564 corresponding to the modified content 1563, based on the modified content 1563. As in the example described above, in a case where the content 1561 is modified into the other content 1563 from which the colors are removed, the other prompt 1564 may include a prompt such as "colorlessness."

In operation 1508, the processor 210 may be configured to display the updated prompt 1564 and the modified content 1563 via the display.

According to an embodiment, the processor 210 may provide a screen 1560 displaying the other content 1563 and the other prompt 1564. The first external electronic device 1502a may provide a screen corresponding to the screen 1560 to the first user U1, and the second external electronic device 1502b may provide a screen corresponding to the screen 1560 to the second user U2. The user 400 may identify the other content 1563 and the other prompt 1564, into which the modifications reflected, through the other content 1563 and the other prompt 1564 displayed within the screen 1560.

In operation 1509, the processor 210 may be configured to store the updated prompt 1564 and the modified content 1563.

According to an embodiment, the processor 210 may be configured to store the other content 1563 and the other prompt 1564 based on a user input. The user 400 may provide the user input for storing the other content 1563 and the other prompt 1564 so that the other content 1563 and the other prompt 1564, modified by another user, can be used. According to an embodiment, the content 1561 may be modified by a plurality of users, and the other prompt 1564 may be provided together with the other content 1563 generated by the modification of the content 1561.

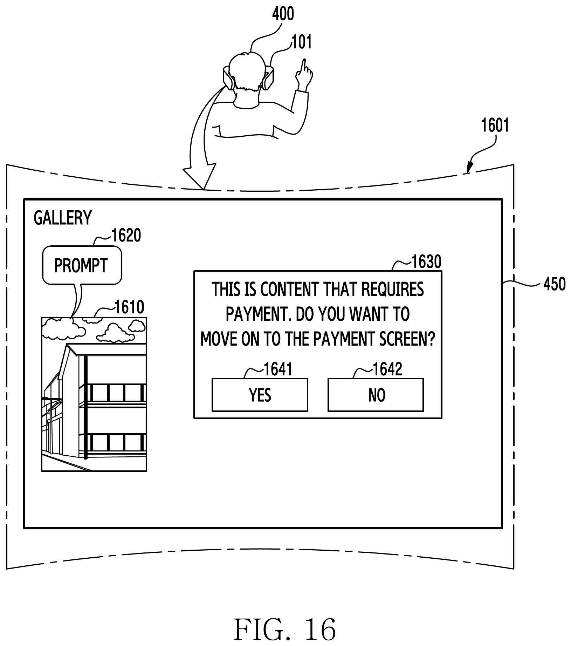

FIG. 16 illustrates an example screen provided when use of first content is restricted.

Referring to FIG. 16, there may be a situation where a specific permission is required to use a prompt 1620 corresponding to content 1610. For example, in a case where the content 1610 is a copyrighted work, any restrictions may exist on the use of the prompt 1620 corresponding to the content 1610. For example, when the content 1610 is a work created by a specific person, unauthorized use of the prompt 1620 containing features such as a unique style reflected in the content 1610 may cause copyright issues. According to an embodiment, when the use of the content 1610 is restricted, the electronic device 101 may provide a screen 1601 for obtaining a usage right before providing the prompt 1620. Referring to the screen 1601 of FIG. 16, the electronic device 101 may provide a visual object 1630 for the use of the content 1610. When it is necessary to purchase the work in order to use the content 1610, the visual object 1630 may include text such as "This is content that requires payment. Do you want to move on to the payment screen?" The electronic device 101 may display, within the screen 1601, a visual object 1641 capable of receiving a user input for moving to the payment screen and a visual object 1642 capable of receiving a user input for declining the payment. When the user input for the visual object 1641 is received, the electronic device 101 may provide a screen for the payment (e.g., a screen of a payment site) and display the prompt 1620 after the payment is completed.

Hereinafter, with reference to FIGS. 17A, 17B, 18A, and/or 18B, an exemplary external appearance of a wearable device is illustrated as an example of the aforementioned electronic device 101. The wearable device 1700 of FIGS. 17A and 17B and/or the wearable device 1800 of FIGS. 18A and 18B may be an example of the aforementioned electronic device 101.

FIG. 17A illustrates an example of a perspective view of a wearable device according to an example embodiment. FIG. 17B illustrates one or more hardware components disposed within a wearable device according to an example embodiment.

A wearable device 1700 according to an example embodiment may have the form of glasses that may be wearable on a user's body part (e.g., head). The wearable device 1700 may include a head-mounted display (HMD). For example, a housing of the wearable device 1700 may include a flexible material such as rubber and/or silicone having a form that closely fits a part of the user's head (e.g., a part of the face surrounding both eyes). For example, the housing of the wearable device 1700 may include one or more straps configured to be wound (twined) around the user's head, and/or one or more temples configured to be attachable to/detachable from the ears of the head.

Referring to FIG. 17A, a wearable device 1700 according to an example embodiment may include at least one display 1750 and a frame supporting the at least one display 1750.

A wearable device 1700 according to an example embodiment may be worn on a part of the user's body. The wearable device 1700 may provide augmented reality (AR), virtual reality (VR), or mixed reality (MR), which is a mixture of augmented reality and virtual reality, to a user wearing the wearable device 1700. For example, the wearable device 1700 may display a virtual reality image provided by at least one optical device (1782, 1784) of FIG. 17B on at least one display 1750, in response to a designated gesture of the user obtained through motion recognition cameras (1760-2, 1760-3) of FIG. 17B.

According to an example embodiment, at least one display 1750 may provide visual information to the user. For example, the at least one display 1750 may include a transparent or semi-transparent lens. The at least one display 1750 may include a first display 1750-1 and/or a second display 1750-2 spaced apart from the first display 1750-1. For example, the first display 1750-1 and the second display 1750-2 may be disposed at positions corresponding to the user's left eye and right eye, respectively.

Referring to FIG. 17B, the at least one display 1750 may provide, through a lens included in the at least one display 1750, visual information transmitted to a user through external light and other visual information distinguished from the visual information. The lens may be formed based on at least one of a Fresnel lens, a pancake lens, or a multi-channel lens. For example, the at least one display 1750 may include a first surface 1731 and a second surface 1732 opposite to the first surface 1731. A display area may be formed on the second surface 1732 of the at least one display 1750. In a case where the user wears the wearable device 1700, external light may be incident on the first surface 1731 and transmitted through the second surface 1732, thereby being delivered to the user. As another example, the at least one display 1750 may display an augmented reality image, in which a virtual reality image provided by the at least one optical device (1782, 1784) is combined with a real-world screen transmitted through the external light, on the display area formed on the second surface 1732.

In an example embodiment, the at least one display 1750 may include at least one waveguide (1733, 1734) configured to diffract light emitted from the at least one optical device (1782, 1784) and deliver the light to the user. The at least one waveguide (1733, 1734) may be formed based on at least one of glass, plastic, or a polymer. A nano-pattern may be formed on at least a portion of the outside or inside of the at least one waveguide (1733, 1734). The nano-pattern may be formed based on a polygonal and/or curved grating structure. Light incident onto one end of the at least one waveguide (1733, 1734) may be propagated to the other end of the at least one waveguide (1733, 1734) by the nano-pattern. The at least one waveguide (1733, 1734) may include at least one of at least one diffractive element (e.g., diffractive optical element (DOE), holographic optical element (HOE)), or a reflective element (e.g., a reflective mirror). For example, the at least one waveguide (1733, 1734) may be disposed within the wearable device 1700 to guide a screen displayed by the at least one display 1750 to the user's eyes. For example, the screen may be transmitted to the user's eyes based on total internal reflection (TIR) generated within the at least one waveguide (1733, 1734).

The wearable device 1700 may analyze objects included in a real-world image collected through a capturing camera 1760-4, and combine a virtual object corresponding to an object targeted for providing augmented reality among the analyzed objects, thereby displaying the combined image on the at least one display 1750. The virtual object may include at least one of text or image regarding various information related to the objects included in the real-world image. The wearable device 1700 may analyze the objects based on a multi-camera such as a stereo camera. For analysis of the objects, the wearable device 1700 may execute spatial recognition (e.g., simultaneous localization and mapping (SLAM)) using the multi-camera and/or time-of-flight (ToF). The user wearing the wearable device 1700 may watch images displayed on the at least one display 1750.

According to an example embodiment, the frame may have a physical structure in which the wearable device 1700 may be worn on the user's body. According to an example embodiment, the frame may be configured such that when the user wears the wearable device 1700, the first display 1750-1 and the second display 1750-2 are positioned to correspond to the left eye and right eye of the user, respectively. The frame may support the at least one display 1750. For example, the frame may support the first display 1750-1 and the second display 1750-2 to be positioned at locations corresponding to the user's left eye and right eye, respectively.

Referring to FIG. 17A, the frame may include an area 1720 where at least a portion thereof comes into contact with a part of the user's body when the user wears the wearable device 1700. For example, the area 1720 of the frame contacting a part of the user's body may include areas that come into contact with a part of the user's nose, a part of the user's ear, and a side part of the user's face, with which the wearable device 1700 comes into contact. According to an example embodiment, the frame may include nose pads 1710 that come into contact with a part of the user's body. When the wearable device 1700 is worn by the user, the nose pads 1710 may contact a part of the user's nose. The frame may include a first temple 1704 and a second temple 1705 that come into contact with another part of the user's body distinguished from the part of the user's body.

For example, the frame may include a first rim 1701 surrounding at least a portion of the first display 1750-1, a second rim 1702 surrounding at least a portion of the second display 1750-2, a bridge 1703 disposed between the first rim 1701 and the second rim 1702, a first pad 1711 disposed along a portion of the edge of the first rim 1701 from one end of the bridge 1703, a second pad 1712 disposed along a portion of the edge of the second rim 1702 from the other end of the bridge 1703, a first temple 1704 extending from the first rim 1701 to be fixed to a part of the wearer's ear, and a second temple 1705 extending from the second rim 1702 to be fixed to a part of the ear on the opposite side. The first pad 1711 and the second pad 1712 may come into contact with a part of the user's nose, and the first temple 1704 and the second temple 1705 may come into contact with a part of the user's face and a part of the ear. The temples 1704 and 1705 may be rotatably connected to the rims through hinge units 1706 and 1707 of FIG. 17B. The first temple 1704 may be rotatably connected to the first rim 1701 through the first hinge unit 1706 disposed between the first rim 1701 and the first temple 1704. The second temple 1705 may be rotatably connected to the second rim 1702 through the second hinge unit 1707 disposed between the second rim 1702 and the second temple 1705. According to an example embodiment, the wearable device 1700 may identify an external object (e.g., the user's fingertip) touching the frame and/or a gesture performed by the external object, using a touch sensor, a grip sensor, and/or a proximity sensor formed on at least a portion of the surface of the frame.

According to an example embodiment, the wearable device 1700 may include hardware components (e.g., the hardware components described above based on the block diagram of FIG. 2) performing various functions. For example, the hardware components may include a battery module 1770, an antenna module 1775, at least one optical device (1782, 1784), speakers (e.g., speakers 1755-1, 1755-2), microphones (e.g., microphones 1765-1, 1765-2, 1765-3), a light-emitting module, and/or a printed circuit board (PCB) 1790. Various hardware components may be disposed within the frame.

According to an example embodiment, the microphones (e.g., microphones 1765-1, 1765-2, 1765-3) of the wearable device 1700 may be disposed in at least a portion of the frame to obtain sound signals. Although a first microphone 1765-1 disposed on the bridge 1703, a second microphone 1765-2 disposed on the second rim 1702, and a third microphone 1765-3 disposed on the first rim 1701 are illustrated in FIG. 17B, the number and arrangement of the microphones 1765 are not limited to those of the example embodiment of FIG. 17B. In a case where the number of microphones 1765 included in the wearable device 1700 is two or more, the wearable device 1700 may identify the direction of sound signals using a plurality of microphones disposed on different parts of the frame.

According to an example embodiment, the at least one optical device (1782, 1784) may project a virtual object onto at least one display 1750 to provide various image information to the user. For example, the at least one optical device (1782, 1784) may be a projector. The at least one optical device (1782, 1784) may be disposed adjacent to the at least one display 1750 or may be included within the at least one display 1750 as a part of the at least one display 1750. According to an example embodiment, the wearable device 1700 may include a first optical device 1782 corresponding to a first display 1750-1 and a second optical device 1784 corresponding to a second display 1750-2. For example, the at least one optical device (1782, 1784) may include the first optical device 1782 disposed at an edge of the first display 1750-1 and the second optical device 1784 disposed at an edge of the second display 1750-2. The first optical device 1782 may emit light to a first waveguide 1733 disposed on the first display 1750-1, and the second optical device 1784 may emit light to a second waveguide 1734 disposed on the second display 1750-2.

In an example embodiment, the camera 1760 may include a capturing camera 1760-4, an eye tracking camera (ET CAM) 1760-1, and/or motion recognition cameras (1760-2, 1760-3). The capturing camera 1760-4, the eye tracking camera 1760-1, and the motion recognition cameras (1760-2, 1760-3) may be disposed at different positions on the frame and may perform different functions. The eye tracking camera 1760-1 may output data representing a position of an eye or a gaze of a user wearing the wearable device 1700. For example, the wearable device 1700 may detect the gaze from the image containing the user's pupil obtained through the eye tracking camera 1760-1.

The wearable device 1700 may identify an object (e.g., a real object and/or a virtual object) focused by the user, using the user's gaze obtained through the eye tracking camera 1760-1. Having identified the focused object, the wearable device 1700 may execute a function for interaction between the user and the focused object (e.g., gaze interaction). The wearable device 1700 may represent a part corresponding to the eyes of an avatar representing the user in a virtual space, using the user's gaze obtained through the eye tracking camera 1760-1. The wearable device 1700 may render an image (or screen) displayed on at least one display 1750 based on the position of the user's eye.

For example, the visual quality (e.g., resolution, brightness, chroma, grayscale, pixels per inch (PPI)) of a first region related to the gaze within an image may be different from the visual quality of a second region distinguished from the first region. The wearable device 1700 may obtain an image having the visual quality of the first region matching the user's gaze and the visual quality of the second region, using foveated rendering. For example, in a case where the wearable device 1700 supports an iris recognition function, it may perform user authentication based on iris information obtained using the eye tracking camera 1760-1. Although an example in which the eye tracking camera 1760-1 is disposed toward the user's right eye is illustrated in FIG. 17B, the embodiment is not limited thereto, and the eye tracking camera 1760-1 may be disposed toward the user's left eye alone or toward both eyes.

In an example embodiment, the capturing camera 1760-4 may capture an actual image or a background image to be matched with a virtual image to implement augmented reality or mixed reality content. The capturing camera 1760-4 may be used to obtain an image having high resolution based on high resolution (HR) or photo video (PV). The capturing camera 1760-4 may capture an image of a specific object existing at a location the user is looking at and provide the image to the at least one display 1750. The at least one display 1750 may display a single image in which information regarding an actual image or background including the image of the specific object obtained using the capturing camera 1760-4 and a virtual image provided through the at least one optical device (1782, 1784) overlap. The wearable device 1700 may compensate for depth information (e.g., a distance between the wearable device 1700 and an external object obtained through a depth sensor) using the image obtained through the capturing camera 1760-4. The wearable device 1700 may perform object recognition through the image obtained using the capturing camera 1760-4. The wearable device 1700 may perform a function of focusing on an object (or subject) in an image (e.g., auto focusing) and/or an optical image stabilization (OIS) function (e.g., anti-shake function), using the capturing camera 1760-4. While displaying a screen representing a virtual space on the at least one display 1750, the wearable device 1700 may perform a pass-through function for overlappingly displaying an image obtained through the capturing camera 1760-4 on at least a portion of the screen. In an example embodiment, the capturing camera 1760-4 may be disposed on the bridge 1703 disposed between the first rim 1701 and the second rim 1702.

The eye tracking camera 1760-1 may implement more realistic augmented reality by tracking the gaze of the user wearing the wearable device 1700 to align the user's gaze with the visual information provided on the at least one display 1750. For example, when the user looks forward, the wearable device 1700 may naturally display environmental information related to the front of the user at the place where the user is located, on the at least one display 1750. The eye tracking camera 1760-1 may be configured to capture an image of the user's pupil in order to determine the user's gaze. For example, the eye tracking camera 1760-1 may receive gaze detection light reflected from the user's pupil and track the user's gaze based on the position and movement of the received gaze detection light. In an example embodiment, the eye tracking camera 1760-1 may be disposed at positions corresponding to the user's left and right eyes. For example, the eye tracking camera 1760-1 may be disposed within the first rim 1701 and/or the second rim 1702 to face the direction in which the user wearing the wearable device 1700 is located.

The motion recognition cameras 1760-2 and 1760-3 may provide a specific event to the screen provided on the at least one display 1750 by recognizing movement of all or part of the user's body, such as the user's torso, hands, or face. The motion recognition cameras 1760-2 and 1760-3 may perform gesture recognition of the user's motion to obtain a signal corresponding to the motion, and may provide displaying corresponding to the signal to the at least one display 1750. The processor may identify the signal corresponding to the motion and perform a designated function based on the identification. The motion recognition cameras 1760-2 and 1760-3 may be used to perform SLAM for a 6 Degrees of Freedom (6 DoF) pose and/or a spatial recognition function using a depth map. The processor may perform a gesture recognition function and/or an object tracking function, using the motion recognition cameras 1760-2 and 1760-3. In an example embodiment, the motion recognition cameras 1760-2 and 1760-3 may be disposed on the first rim 1701 and/or the second rim 1702.

The camera 1760 included in the wearable device 1700 is not limited to the eye tracking camera 1760-1 and the motion recognition cameras 1760-2 and 1760-3 as described above. For example, the wearable device 1700 may use a camera disposed toward the user's Field of View (FoV) to identify an external object included within the FoV. Identification of an external object by the wearable device 1700 may be performed based on a sensor for identifying the distance between the wearable device 1700 and the external object, such as a depth sensor and/or a Time of Flight (ToF) sensor. The camera 1760 disposed toward the FoV may support an autofocus function and/or an optical image stabilization (OIS) function. For example, the wearable device 1700 may include a camera 1760 (e.g., a face tracking (FT) camera) disposed toward the user's face in order to obtain an image including the face of the user wearing the wearable device 1700.

Although not shown herein, the wearable device 1700 according to an example embodiment may further include a light source (e.g., LED) that radiates light toward a subject (e.g., the user's eyes, face, and/or an external object within FoV) captured using the camera 1760. The light source may include an LED of an infrared wavelength. The light source may be disposed in at least one of the frame and the hinge units 1706 and 1707.

According to an example embodiment, the battery module 1770 may supply power to the electronic components of the wearable device 1700. In an example embodiment, the battery module 1770 may be disposed within the first temple 1704 and/or the second temple 1705. For example, the battery module 1770 may be a plurality of battery modules 1770. The plurality of battery modules 1770 may be disposed in each of the first temple 1704 and the second temple 1705, respectively. In an example embodiment, the battery module 1770 may be disposed at the ends of the first temple 1704 and/or the second temple 1705.

The antenna module 1775 may transmit a signal or power to the outside of the wearable device 1700 or receive a signal or power from the outside. In an example embodiment, the antenna module 1775 may be disposed within the first temple 1704 and/or the second temple 1705. For example, the antenna module 1775 may be disposed close to one surface of the first temple 1704 and/or the second temple 1705.

The speaker 1755 may output an acoustic signal to the outside of the wearable device 1700. The acoustic output module may refer to a speaker. In an example embodiment, the speaker 1755 may be disposed within the first temple 1704 and/or the second temple 1705 in order to be disposed adjacent to the ear of the user wearing the wearable device 1700. For example, the speaker 1755 may include a second speaker 1755-2 disposed within the first temple 1704 to be located adjacent to the user's left ear, and a first speaker 1755-1 disposed within the second temple 1705 to be located adjacent to the user's right ear.

A light-emitting module (not shown) may include at least one light-emitting element. The light-emitting module may emit light in a color corresponding to a specific state or emit light in a manner corresponding to a specific state, in order to visually provide the user with information regarding that specific state of the wearable device 1700. For example, when the wearable device 1700 requires charging, it may emit red light at a certain cycle. In an example embodiment, the light-emitting module may be disposed on the first rim 1701 and/or the second rim 1702.

Referring to FIG. 17B, the wearable device 1700 according to an example embodiment may include a printed circuit board (PCB) 1790. The PCB 1790 may be included in at least one of the first temple 1704 or the second temple 1705. The PCB 1790 may include an interposer disposed between at least two sub-PCBs. On the PCB 1790, one or more hardware components included in the wearable device 1700 (e.g., hardware components illustrated by different blocks in FIG. 2) may be disposed. The wearable device 1700 may include a flexible PCB (FPCB) for interconnecting the hardware components.

According to an example embodiment, the wearable device 1700 may include at least one of a gyro sensor, a gravity sensor, or an acceleration sensor for detecting the posture of the wearable device 1700 and/or the posture of a body part (e.g., head) of the user wearing the wearable device 1700. Each of the gravity sensor and the acceleration sensor may measure gravitational acceleration and/or acceleration based on designated 3D axes (e.g., x-axis, y-axis, and z-axis) perpendicular to each other. The gyro sensor may measure the angular velocity of each of the designated 3D axes (e.g., x-axis, y-axis, and z-axis). At least one of the gravity sensor, the acceleration sensor, and the gyro sensor may refer to an inertial measurement unit (IMU). According to an example embodiment, the wearable device 1700 may identify a user's motion and/or gesture performed to execute or pause a specific function of the wearable device 1700 based on the IMU.

FIG. 18A and FIG. 18B illustrate the external appearance of a wearable device according to an example embodiment.

The wearable device 1800 of FIGS. 18A to 18B may include at least a portion of the hardware of the wearable device 1700 described with reference to FIGS. 17A and/or 17B. An example of an external appearance of a first surface 1810 of a housing of the wearable device 1800 according to an example embodiment is shown in FIG. 18A, and an example of an external appearance of a second surface 1820 opposite to the first surface 1810 is shown in FIG. 18B.

Referring to FIG. 18A, the first surface 1810 of the wearable device 1800 according to an example embodiment may have a form attachable onto a body part of the user (e.g., the user's face). Although not shown herein, the wearable device 1800 may further include a strap for fixing the device onto the user's body part and/or one or more temples (e.g., the first temple 1704 and/or the second temple 1705 of FIGS. 17A and 17B). A first display 1750-1 for outputting an image to the left eye of the user's both eyes and a second display 1750-2 for outputting an image to the right eye of the user's both eyes may be disposed on the first surface 1810. The wearable device 1800 may further include rubber or silicone packing formed on the first surface 1810 to prevent interference caused by light (e.g., ambient light) distinct from light emitted from the first display 1750-1 and the second display 1750-2.

The wearable device 1800 according to an example embodiment may include cameras 1760-1 for capturing and/or tracking both eyes of the user adjacent to the first display 1750-1 and the second display 1750-2, respectively. The cameras 1760-1 may refer to the eye tracking camera 1760-1 of FIG. 17B. The wearable device 1800 according to an example embodiment may also include cameras 1760-5 and 1760-6 for capturing and/or recognizing the user's face. The cameras 1760-5 and 1760-6 may refer to face tracking (FT) cameras. The wearable device 1800 may control an avatar representing the user in a virtual space based on the motion of the user's face identified using the cameras 1760-5 and 1760-6. For example, the wearable device 1800 may change a texture and/or a shape of a portion of the avatar (e.g., a portion of an avatar representing a human face), using information that is obtained by cameras 1760-5 and 1760-6 (e.g., the FT cameras) and represents a facial expression of the user wearing the wearable device 1800.

Referring to FIG. 18B, on the second surface 1820 opposite to the first surface 1810 of FIG. 18a, cameras (e.g., cameras 1760-7, 1760-8, 1760-9, 1760-10, 1760-11, 1760-12) and/or a sensor (e.g., a depth sensor 1830) for obtaining information related to an external environment of the wearable device 1800 may be disposed. For example, the cameras (1760-7, 1760-8, 1760-9, 1760-10) may be disposed on the second surface 1820 to recognize external objects. The cameras (1760-7, 1760-8, 1760-9, 1760-10) of FIG. 18B may correspond to the motion recognition cameras (1760-2, 1760-3) of FIG. 17B.

For example, using the cameras 1760-11 and 1760-12, the wearable device 1800 may obtain images and/or videos to be transmitted to each of the user's eyes. The camera 1760-11 may be disposed on the second surface 1820 of the wearable device 1800 to obtain an image to be displayed via the second display 1750-2 corresponding to the right eye among the both eyes. The camera 1760-12 may be disposed on the second surface 1820 of the wearable device 1800 to obtain an image to be displayed via the first display 1750-1 corresponding to the left eye among the both eyes. The cameras (1760-11, 1760-12) correspond to the capturing camera 1760-4 of FIG. 17B.

According to an exemplary embodiment, a wearable device 1800 may include a depth sensor 1830 disposed on a second surface 1820 to identify a distance between the wearable device 1800 and an external object. By using the depth sensor 1830, the wearable device 1800 may obtain spatial information (e.g., a depth map) for at least a portion of the FoV of the user wearing the wearable device 1800. Although not shown herein, a microphone for obtaining sound output from an external object may be disposed on the second surface 1820 of the wearable device 1800. The number of microphones may be one or more depending on embodiments.

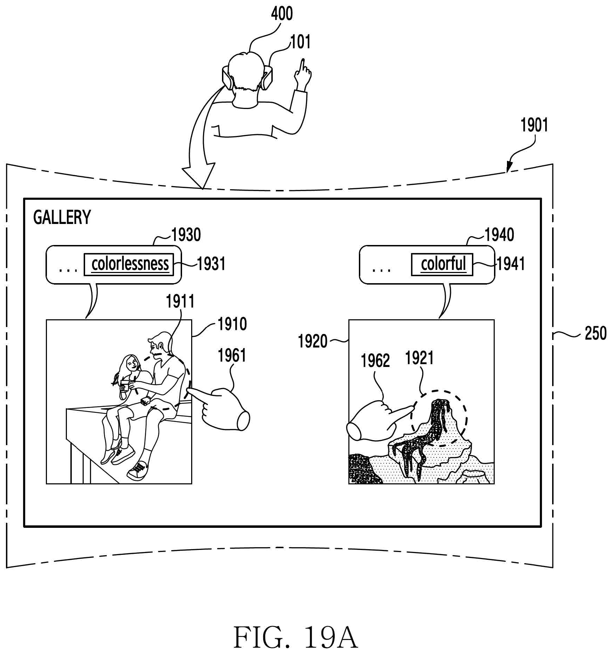

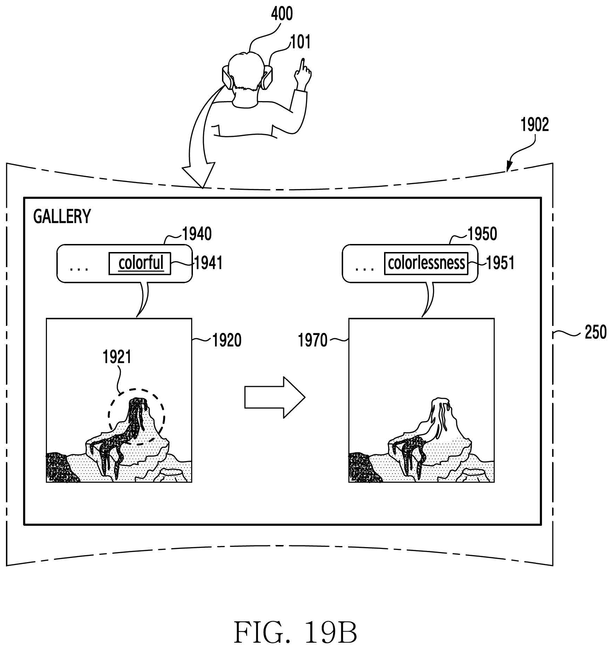

FIGS. 19A and 19B illustrate a process in which an electronic device according to an embodiment changes second content.

Referring to FIG. 19A, according to an embodiment, an electronic device 101 (e.g., HMD, smartphone, or computer) may be configured to display a first image 1910 and a second image 1920 stored in a storage (e.g., memory) of the electronic device 101 or an external storage connected to the electronic device 101. For example, the second image 1920 may refer to content to be changed using the first image 1910.

Referring to a screen 1901 of FIG. 19A, the electronic device 101 according to an embodiment may be configured to identify selection of a first region 1911 within the first image 1910 based on a first interaction of the user 400 and obtain a third prompt 1931 related to the first region 1911 selected from a first prompt 1930 related to the first image 1910. The first prompt 1930 is a prompt corresponding to the first image 1910, and when the first prompt 1930 is input to an artificial intelligence model, the first image 1910 may be output. The first interaction may refer to a user input selecting the first region 1911 using a virtual object 1961. For example, in a case where the first region 1911 includes a feature having no color, the third prompt 1931 may refer to text such as "colorlessness."

According to an embodiment, the electronic device 101 may be configured to identify a selection of a second region 1921 within the second image 1920, based on a second interaction of the user 400. The electronic device 101 may be configured to obtain, in a second prompt 1940 related to the second image 1921, a fourth prompt 1941 related to the second region 1921, based on identification of the selection of the second region 1921. The second interaction may refer to a user input for selecting the second region 1921, using a virtual object 1962. For example, in a case where the second region 1921 includes a feature having a color, the fourth prompt 1941 may refer to text such as "colorful." The fourth prompt 1941 may be obtained using an artificial intelligence algorithm.

Referring to FIG. 19B, the electronic device 101 may change the fourth prompt 1941 obtained using an artificial intelligence model, based on the third prompt 1931. Referring to a screen 1902 of FIG. 19B, the electronic device 101 according to an embodiment may be configured to generate a fifth prompt 1950 including a sixth prompt 1951 for the second region 1921 of the second image 1920, by modifying the fourth prompt 1941 within the second prompt 1940 based on the third prompt 1931. For example, the sixth prompt 1951 may refer to text such as "colorlessness." The electronic device 101 may be configured to generate the fifth prompt 1950 including the sixth prompt 1951 by replacing the fourth prompt 1941 in the second prompt 1940 with the sixth prompt 1951.

According to an embodiment, the electronic device 101 may replace the second image (e.g., the second image 1920 of FIG. 19B) by generating a third image 1970 using the generated fifth prompt 1950. The electronic device 101 may be configured to display the third image 1970 as the second image 1920 is changed.

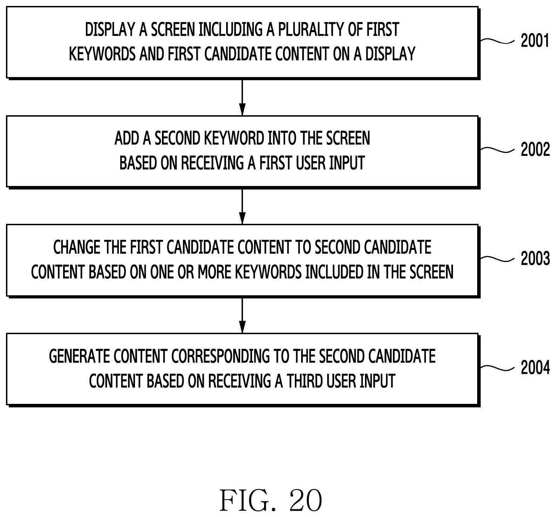

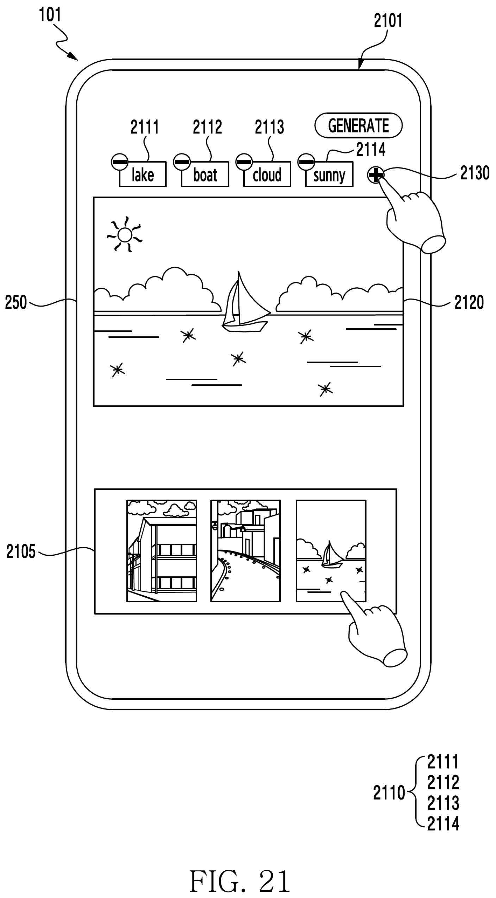

FIG. 20 is a flowchart illustrating an operation of providing candidate content by an electronic device according to an example embodiment. FIGS. 21, 22, 23, and 24 illustrate processes of modifying first candidate content to second candidate content according to a first user input.

As described above, a prompt may refer to an input sentence including natural language or a set of feature keywords. The term "keyword" used in the disclosure may refer to a word included within a prompt. The processor 210 of FIG. 2 may be configured to perform the operations of the electronic device (e.g., electronic device 101 of FIG. 1) described with reference to FIG. 20. Instructions stored in the memory (e.g., memory 220 of FIG. 2), when executed individually or collectively by the processor, may cause the electronic device 101 to perform the operations of the electronic device 101 described in FIG. 20. The electronic device 101 described below may include a wearable device (e.g., the wearable device 1700 of FIG. 17A or the wearable device 1800 of FIG. 18A) including a display (e.g., the display 250 of FIG. 2).

In operation 2001 of FIG. 20, the instructions, when executed individually or collectively by the processor, may cause the electronic device 101 to display a screen 2101 including a plurality of first keywords 2110 and first candidate content 2120 based on the plurality of first keywords 2110 on a display (e.g., the display 250 of FIG. 2).

Referring to FIG. 21, the screen 2101 including a plurality of first keywords 2110 and first candidate content 2120 may be displayed on the display 250. The plurality of first keywords 2110 and the first candidate content 2120 may be displayed through execution of an application for generating content. However, the disclosure is not limited thereto. For example, the plurality of first keywords 2110 and the first candidate content 2120 may be displayed through execution of a messenger application or execution of a virtual keyboard application. For instance, one or more contents 2105 may be displayed within the screen 2101. The one or more contents 2105 may be one or more contents stored in the memory of the electronic device 101, but are not limited thereto. The processor may be configured to identify the first candidate content 2120 based on receiving a user input for any one of the one or more contents 2105 included in the screen 2101. The processor may be configured to display the screen 2101 including the identified first candidate content 2120 on the display 250. The processor may be configured to identify the plurality of first keywords 2110 based on the first candidate content 2120, and display the screen 2101 including the plurality of first keywords 2110 on the display 250.

According to an example embodiment, the plurality of first keywords 2110 may refer to feature keywords included in a prompt input to an artificial intelligence model to generate the first candidate content 2120. The first candidate content 2120 may be content generated by inputting a prompt including the plurality of first keywords 2110 into the artificial intelligence model. For example, the first candidate content 2120 may be one of the contents that may be generated when a prompt including the plurality of first keywords 2110 is input into the artificial intelligence model. The plurality of first keywords 2110 may be located around the first candidate content 2120 within the screen 2101.

For example, as shown in FIG. 21, in a case where the plurality of first keywords 2110 includes lake 2111, boat 2112, cloud 2113, and/or sunny 2114, the processor may display the screen 2101 including the first candidate content 2120 based on the plurality of first keywords 2110, on the display 250. The first candidate content 2120 based on the plurality of first keywords 2110 may be an image that an artificial intelligence model may generate using the prompt including the plurality of first keywords 2110, but the disclosure is not limited thereto. For example, the first candidate content 2120 may be an image representing a lake, a boat floating on the lake, clouds in the sky, and sunny weather. The user may preview content that may be generated by the plurality of first keywords 2110 through the first candidate content 2120 included within the screen 2101.

In operation 2002 of FIG. 20, the instructions, when executed individually or collectively by the processor, may cause the electronic device 101 to add a second keyword 2210 into the screen 2101 based on receiving a first user input.

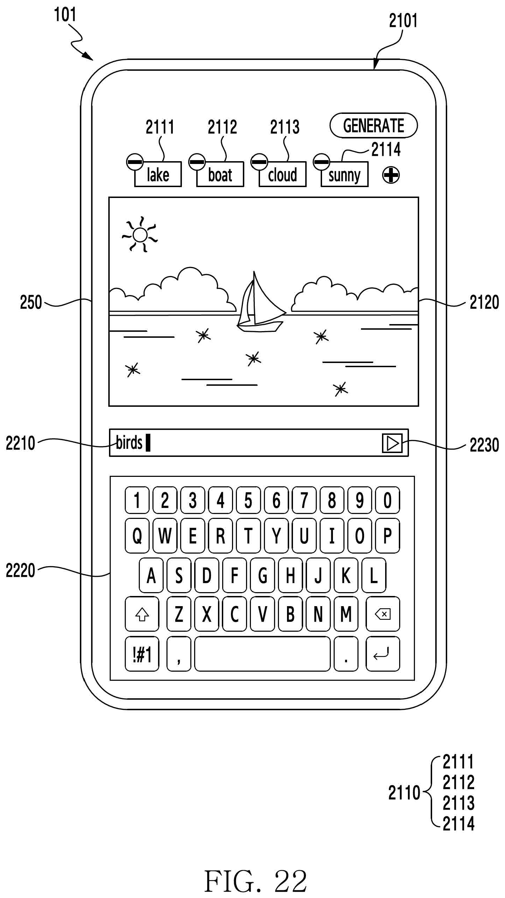

According to an example embodiment, the first user input may refer to a user input for adding a second keyword 2210 that is different from the plurality of first keywords 2110. For example, the user may additionally input the second keyword 2210 different from the plurality of first keywords 2110 to modify the first candidate content 2120 based on the plurality of first keywords 2110. Referring to FIG. 21, the processor may be configured to display a first visual object 2130 for the first user input. When a user input is provided through the first visual object 2130, the processor may be configured to display a virtual keyboard (e.g., a virtual keyboard 2220 of FIG. 22) on the display 250.

Referring to FIG. 22, the processor may be configured to display the virtual keyboard 2220 for the first user input on the display 250 based on receiving the user input for the first visual object 2130. Via the virtual keyboard 2220 displayed on the display 250, the user may provide a first user input to add a second keyword 2210 that is different from the plurality of first keywords 2110. The second keyword 2210 may be input via the virtual keyboard 2220.

For example, when the second keyword 2210 is "birds," the word "birds" may be input via the virtual keyboard 2220. After "birds" is entered, when a user input for adding the second keyword 2210 (e.g., the user input for the visual object 2230) is provided, the processor may be configured to identify a request to add the second keyword 2210 to the prompt used to generate content. In the above example, the first user input may include the input for the first visual object 2130 of FIG. 21, the input for the virtual keyboard 2220, and the input for the visual object 2230.

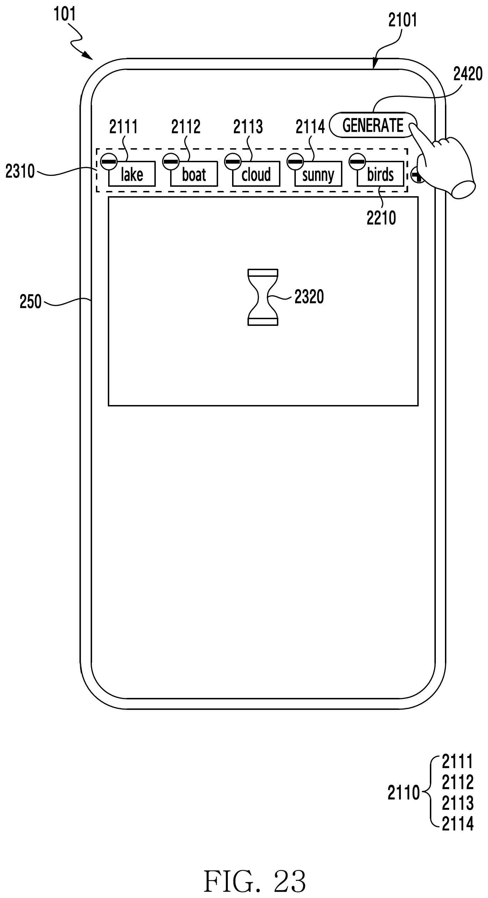

Referring to FIG. 23, the instructions, when executed individually or collectively by the processor, may cause the electronic device 101 to add the second keyword 2210 into the screen 2101 based on receiving the first user input. The second keyword 2210 may be displayed along with the plurality of first keywords 2110 (e.g., lake 2111, boat 2112, cloud 2113, and/or sunny 2114) included in the screen 2101. The user may confirm, through the second keyword 2210 added into the screen 2101, the second keyword 2210 added through the first user input. For example, in a case where the second keyword 2210 added through the first user input is 'birds', the processor may be configured to add and display 'birds' into the screen 2101.

According to an example embodiment, the processor may be configured to change the first candidate content (e.g., the first candidate content 2120 of FIG. 21) to represent content based on the one or more keywords 2310 included in the screen 2101.

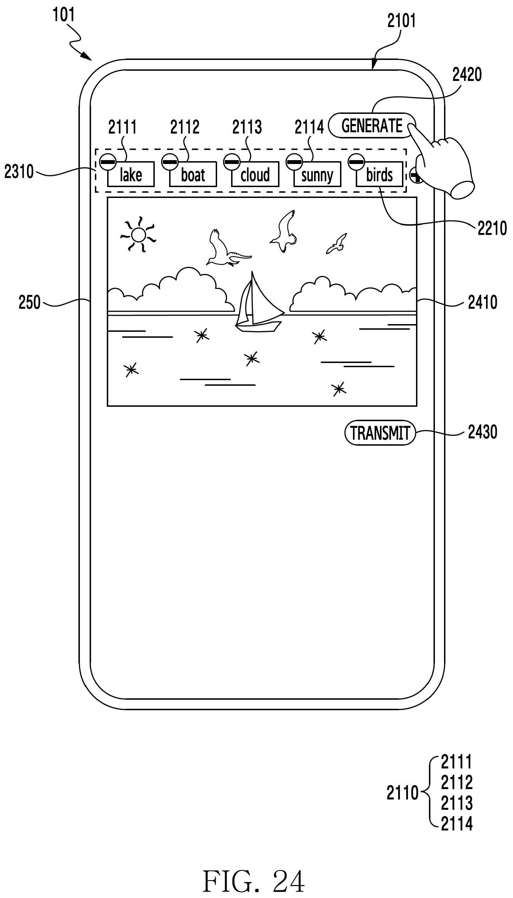

For example, since the second keyword 2210 was added to the plurality of first keywords 2110, one or more keywords 2310 included in the screen 2101 may refer to the plurality of first keywords 2110 and the second keyword 2210. The processor may be configured to receive a third user input through a visual object 2420 for receiving a user input requesting generation of new content based on the one or more keywords 2310. The processor may be configured to, based on the third user input, change the first candidate content 2120 to new content (e.g., second candidate content 2410 of FIG. 24) generated by inputting a prompt including the plurality of first keywords 2110 and the second keyword 2210 into an artificial intelligence model. While generating the new content to be displayed instead of the first candidate content 2120, the processor may be configured to display a visual object 2320 for indicating that the new content is being generated. For example, the visual object 2320 may include an icon, an image, an illustration, or a video for indicating that the new content is being generated, but the disclosure is not limited thereto.

In operation 2003 of FIG. 20, the instructions, when executed individually or collectively by the processor, may cause the electronic device 101 to change the first candidate content 2120 to the second candidate content 2410 based on the one or more keywords 2310 included in the screen 2101.

Referring to FIG. 24, the processor may be configured to change to and display the second candidate content 2410 generated by inputting the prompt including the one or more keywords 2310 included in the screen 2101 into an artificial intelligence model. In the above-described example, since the second keyword 2210 was added through the first user input, the prompt may include the plurality of first keywords 2110 and the second keyword 2210. According to the first user input, the second keyword 2210 may be further added to the plurality of first keywords 2110, and the processor may be configured to display, on the display 250, the second candidate content 2410 generated by using both the plurality of first keywords 2110 and the added second keyword 2210.

For example, in a case where the second keyword 2210 is 'birds', the second candidate content 2410 may be one of contents that may be generated when a prompt including lake 2111, boat 2112, cloud 2113, sunny 2114, and bird is input into the artificial intelligence model. The second candidate content 2410 based on the plurality of first keywords 2110 and the second keyword 2210 described above may be an image in which birds are added to the sky in first candidate content 2120. The user may pre-check, through the second candidate content 2410 included in the screen 2101, content that may be newly generated by the added second keyword 2210.

In operation 2004 of FIG. 20, the instructions, when executed individually or collectively by the processor, may cause the electronic device 101 to generate content corresponding to the second candidate content 2410 based on receiving the third user input.

Referring to FIG. 24, the processor may be configured to display, on the display 250, a visual object 2420 for the third user input for generating the content corresponding to the second candidate content 2410 based on the one or more keywords 2310 included in the screen 2101. For example, the visual object 2420 may include text such as 'create', but is not limited thereto. For example, the visual object 2420 may be an icon requesting generation of content. When the third user input for the visual object 2420 is provided, the processor may be configured to receive the third user input. The processor may be configured to, based on receiving the third user input, generate new content corresponding to the second candidate content 2410, by inputting the prompt including the one or more keywords 2310 included in the screen 2101 into the artificial intelligence model. The generated content may be stored in the memory.

According to an example embodiment, when the second keyword 2210 is added by the first user input, the one or more keywords 2310 included in the screen 2101 may include the plurality of first keywords 2110 and the second keyword 2210. The processor may be configured to, based on receiving the third user input for the visual object 2420, generate content corresponding to the second candidate content 2410, while the second candidate content 2410 based on the plurality of first keywords 2110 and the second keyword 2210 is displayed.

For example, in a case where the plurality of first keywords 2110 include lake 2111, boat 2112, cloud 2113, and sunny 2114, and the second keyword 2210 is 'birds', the processor may be configured to, based on receiving the third user input, generate new content corresponding to the second candidate content 2410 shown in FIG. 24.

According to an example embodiment, the processor may be configured to, based on receiving a seventh user input while the second candidate content 2410 is displayed on the display, transmit the second candidate content 2410 to a counterpart. For example, the processor may be configured to display, on the display 250, a visual object 2430 for the seventh user input for transmitting the second candidate content 2410 to the counterpart. When the seventh user input for the visual object 2430 is provided, the processor may be configured to receive the seventh user input. The processor may be configured to, based on receiving the seventh user input for the visual object 2430, transmit the second candidate content 2410 to the counterpart (e.g., an external electronic device).

By providing the first candidate content 2120 based on the plurality of first keywords 2110, the electronic device 101 according to an example embodiment may allow the user to check the content (e.g., the first candidate content 2120 of FIG. 21) that may be generated through the plurality of first keywords 2110. The user may directly add a new keyword (e.g., the second keyword 2210) to modify the first candidate content 2120. The electronic device 101 may provide an enhanced user experience by identifying the second keyword 2210 added through the first user input, and providing the second candidate content 2410 by using the plurality of first keywords 2110 and the second keyword 2210.

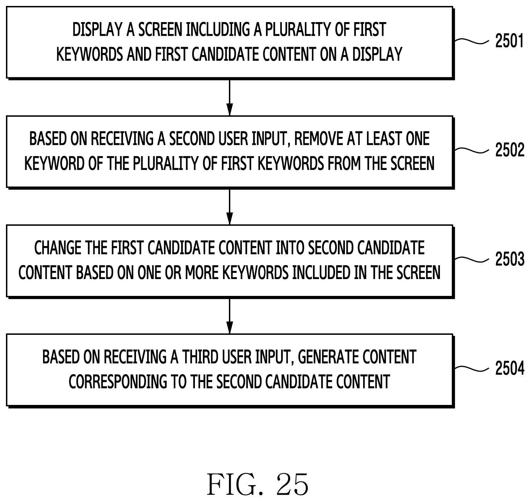

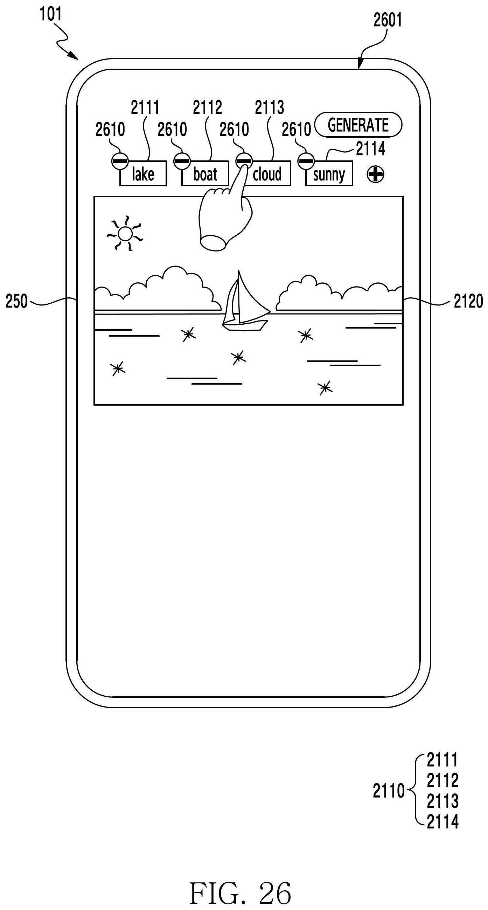

FIG. 25 is a flowchart illustrating an operation of providing candidate content by an electronic device according to an example embodiment. FIGS. 26, 27, and 28 illustrate processes of changing the first candidate content to the second candidate content according to the second user input.

The processor 210 of FIG. 2 may be configured to perform operations of the electronic device 101 described with reference to FIG. 25. Instructions stored in the memory (e.g., the memory 220 of FIG. 2), when executed individually or collectively by the processor 210, may cause the electronic device 101 to perform the operations of the electronic device 101 described in FIG. 25.

In operation 2501 of FIG. 25, the instructions, when executed individually or collectively by the processor 210, may cause the electronic device 101 to display a screen 2601 including the plurality of first keywords 2110 and the first candidate content 2120 based on the plurality of first keywords 2110, on the display 250.

The operation 2501 may substantially correspond to operation 2001 of FIG. 20. Descriptions of the operation 2001 of FIG. 20 may be applied to the operation 2501 in substantially the same manner.

In operation 2502 of FIG. 25, the instructions, when executed individually or collectively by the processor, may cause the electronic device 101 to remove at least one keyword from among a plurality of first keywords 2110 in the screen 2601 based on receiving the second user input.

According to an example embodiment, the second user input may refer to a user input for removing at least one keyword from among the plurality of first keywords 2110. For example, the user may exclude at least one keyword from among the plurality of first keywords 2110 in order to modify the first candidate content 2120 based on the plurality of first keywords 2110.

Referring to FIG. 26, the processor may be configured to display a second visual object 2610 for a second user input. The second visual object 2610 may be displayed for each of the plurality of first keywords 2110. When the second user input is provided through the second visual object 2610, the processor may be configured to remove at least one keyword corresponding to the user input from among the plurality of keywords. The processor may be configured to remove the at least one keyword corresponding to the second user input and display the remaining keyword(s) excluding the at least one keyword among the plurality of first keywords 2110, on the display 250. The second user input is not limited to an input for the second visual object 2610. For example, the second user input may be provided through a user's gesture for the plurality of first keywords 2110. For example, for any one of the plurality of first keywords 2110 included in the screen 2601, the second user input may be provided through a drag input out of the screen 2601.

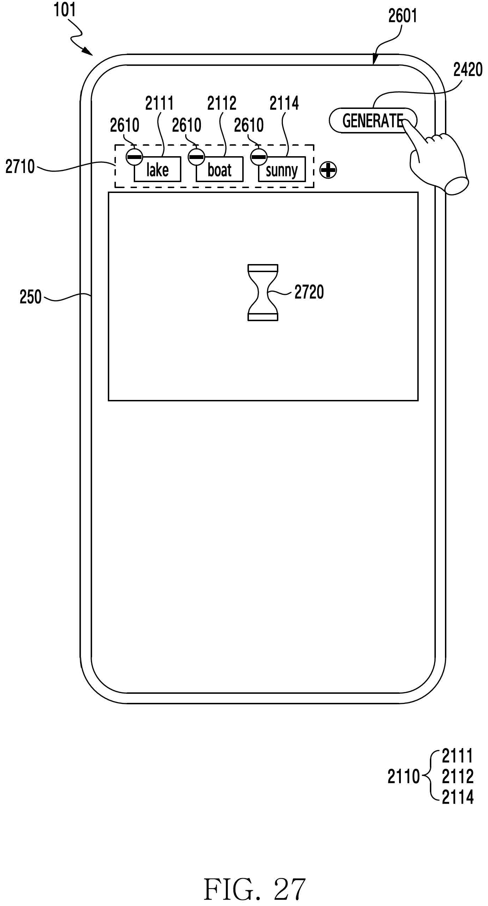

For example, as shown in FIG. 26, the second user input may be provided for the second visual object 2610 displayed on cloud 2113 among the plurality of first keywords 2110. Referring to FIG. 27, the processor may be configured to, based on receiving the second user input for removing cloud 2113, remove the cloud from among the plurality of first keywords 2110 in the screen 2601, and display the remaining keywords (e.g., lake 2111, boat 2112, sunny 2114).

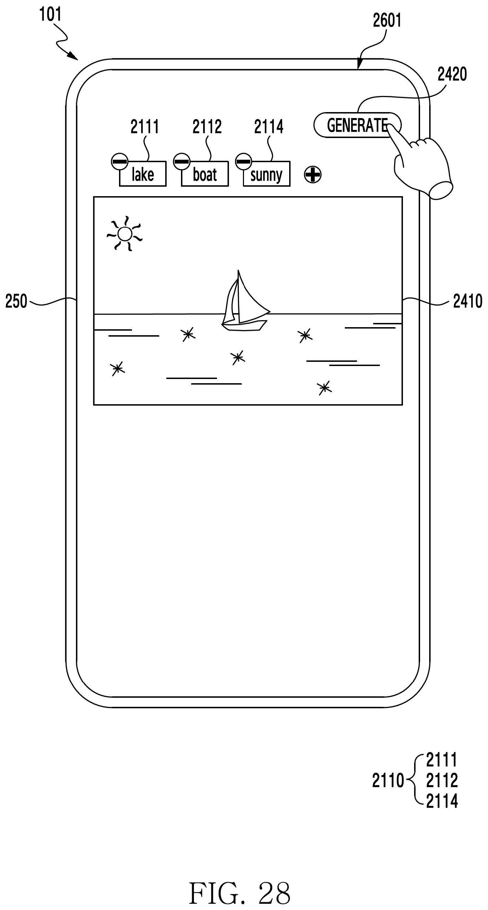

For example, since at least one keyword is removed from among the plurality of first keywords 2110, one or more keywords 2710 included in the screen 2601 may refer to remaining keyword(s) excluding the at least one keyword from among the plurality of first keywords 2110. The processor may be configured to change first candidate content (e.g., the first candidate content 2120 of FIG. 26) into new content (e.g., the second candidate content 2410 of FIG. 28) generated by inputting a prompt including only the remaining keyword(s) excluding the at least one keyword from among the plurality of first keywords 2110 into an artificial intelligence model. For example, based on a user input for the visual object 2420 for generating the second candidate content, the second candidate content 2410 shown in FIG. 28 may be displayed. While generating the new content to be displayed instead of the first candidate content 2120, the processor may be configured to display a visual object 2720 for indicating that the new content is being generated. For example, the visual object 2720 may include, but is not limited to, an icon, an image, an illustration, or a video for indicating that the new content is being generated.

In operation 2503 of FIG. 25, the instructions, when executed individually or collectively by the processor, may cause the electronic device 101 to change the first candidate content 2120 into the second candidate content 2410 based on the one or more keywords 2710 included in the screen 2601.

Referring to FIG. 28, the processor may be configured to change to and display the second candidate content 2410 generated by inputting a prompt including one or more keywords 2710 included in the screen 2601 into an artificial intelligence model. In the above-described example, since at least one keyword is removed from among the plurality of first keywords 2110 by the second user input, the prompt may include the remaining keyword(s) excluding the at least one keyword from among the plurality of first keywords 2110. According to the second user input, the at least one keyword may be excluded from among the plurality of first keywords 2110, and the processor may be configured to display the second candidate content 2410 generated by using only the remaining keyword(s) different from the at least one keyword, on the display 250.

For example, in a case where the at least one keyword removed by the second user input is the cloud, the second candidate content 2410 may be one of contents that may be generated when a prompt including lake 2111, boat 2112, and sunny 2114 is input into the artificial intelligence model. The second candidate content 2410 based on the remaining keyword(s) excluding the at least one keyword from among the plurality of first keywords 2110 may be an image in which clouds in the sky are removed from the first candidate content 2120. The user may preview, through the second candidate content 2410 included in the screen 2601, the content that may be newly generated by the remaining keyword(s) excluding the removed at least one keyword from among the plurality of first keywords 2110.

In operation 2504 of FIG. 25, the instructions, when executed individually or collectively by the processor, may cause the electronic device 101 to, based on receiving a third user input, generate content corresponding to the second candidate content 2410.

Referring to FIG. 28, the processor may be configured to display, on the display 250, the visual object 2420 for the third user input for generating the second candidate content 2410 based on the one or more keywords 2710 included in the screen 2601. When the third user input for the visual object 2420 is provided, the processor may be configured to receive the third user input. The processor may be configured to, based on receiving the third user input, generate new content corresponding to the second candidate content 2410, by inputting a prompt including one or more keywords 2710 included in the screen 2601 into an artificial intelligence model. The generated content may be stored in the memory.

According to an example embodiment, in a case where the at least one keyword is removed by the second user input, the one or more keywords 2710 included in the screen 2601 may include the remaining keyword(s) excluding the at least one keyword from among the plurality of first keywords 2110. The processor may be configured to, based on receiving the third user input for the visual object 2420, while the second candidate content 2410 based on the remaining keyword(s) is displayed, generate content corresponding to the second candidate content 2410.

For example, in a case where the plurality of first keywords 2110 include lake 2111, boat 2112, cloud 2113, and sunny 2114, and the at least one keyword removed through the second user input is cloud 2113, the processor may be configured to, based on receiving the third user input, generate new content corresponding to the second candidate content 2410 shown in FIG. 28.

By providing the first candidate content 2120 based on the plurality of first keywords 2110, the electronic device 101 according to an example embodiment may allow the user to confirm the content (e.g., the second candidate content 2410) that may be generated through the plurality of the first keywords 2110. The user may remove the at least one keyword from among the plurality of first keywords 2110 in order to modify the first candidate content 2120. The electronic device 101 may provide an enhanced user experience by identifying the at least one keyword removed through the second user input and providing the second candidate content 2410 using the remaining keyword(s) among the plurality of first keywords 2110.

According to an example embodiment, the first user input and the second user input may overlap. For example, the user may add the second keyword 2210 different from the plurality of first keywords 2110 through the first user input, and remove at least one keyword from among the plurality of first keywords 2110 through the second user input. The processor may provide new second candidate content 2410, using the second keyword 2210 identified through the first user input, and the remaining keyword(s) among the plurality of first keywords 2110 identified through the second user input. The electronic device 101 according to an example embodiment may provide an enhanced user experience by providing free modification of the content.

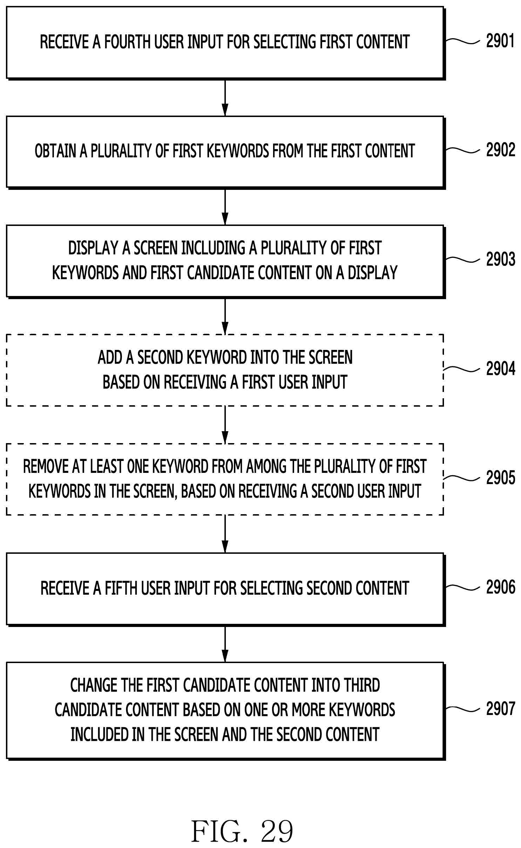

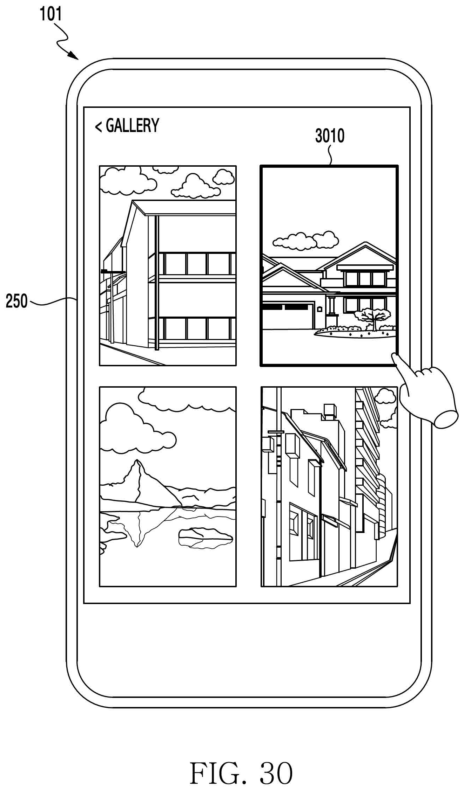

FIG. 29 is a flowchart illustrating an operation of changing second content by an electronic device according to an example embodiment using a plurality of first keywords from first content. FIGS. 30, 31, 32, and 33 illustrate processes of changing first candidate content into second candidate content according to a second user input.

The processor 210 of FIG. 2 may be configured to perform operations of the electronic device 101 described with reference to FIG. 29. Instructions stored in the memory (e.g., the memory 220 of FIG. 2), when executed individually or collectively by the processor 210, may cause the electronic device 101 to perform the operations of the electronic device 101 described in FIG. 29.

In operation 2901 of FIG. 29, the instructions, when executed individually or collectively by the processor, may cause the electronic device 101 to receive a fourth user input for selecting first content 3010.

According to an example embodiment, the operation 2901 may be an operation preceding the operation 2001 of FIG. 20 or the operation 2501 of FIG. 25. For example, a plurality of first keywords 2110 for providing the first candidate content 2120 may be obtained from the first content 3010.

According to an example embodiment, the first content 3010 may be at least one of contents stored in the memory. Referring to FIG. 30, the processor may be configured to display contents stored in the memory through a Gallery application. The first content 3010 may be at least one of contents stored in the memory. The user may provide a fourth user input for selecting the first content 3010 from among contents displayed through the Gallery application. The processor may be configured to receive the fourth user input for selecting the first content 3010. For example, a plurality of contents may be selected through the fourth user input.

In operation 2902 of FIG. 29, the instructions, when executed individually or collectively by the processor, may cause the electronic device 101 to obtain a plurality of first keywords 2110 from the first content 3010.

Operation 2902 of FIG. 29 may refer to the operation described above with reference to FIGS. 5 and 7. For example, in operation 2902, the processor may be configured to identify a style of the first content 3010 to obtain original content of the first content 3010, and generate a description based on the analysis of the original content. The processor may be configured to obtain a prompt by inputting the prompt based on the description of the original content into a large language model. The processor may be configured to obtain the plurality of first keywords 2110 from keywords included in the prompt. When a plurality of contents are selected through the fourth user input, the plurality of first keywords 2110 may be obtained from the plurality of contents.

In operation 2903 of FIG. 29, the instructions, when executed individually or collectively by the processor, may cause the electronic device 101 to display a screen 3101 including a plurality of first keywords 2110 and first candidate content 2120 on the display 250.

The operation 2903 of FIG. 29 may substantially correspond to the operation 2001 of FIG. 20. Descriptions of the operation 2001 of FIG. 20 may be applied to the operation 2903 in substantially the same manner.

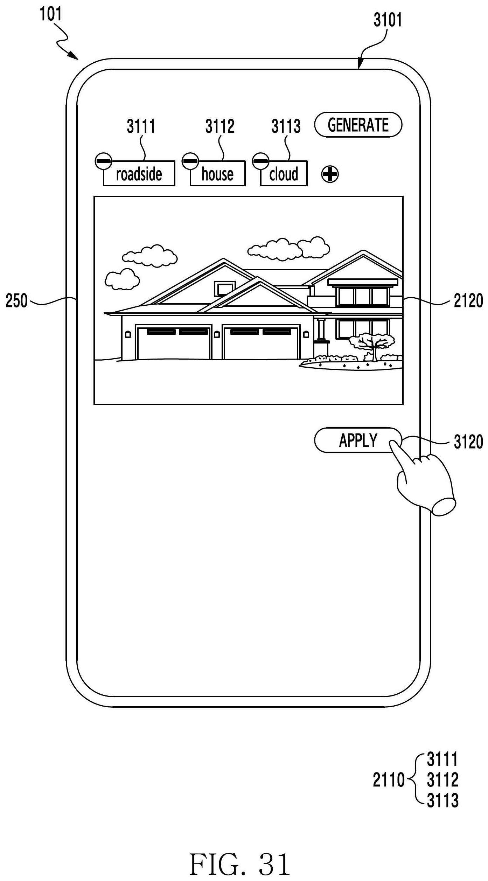

Referring to FIG. 31, the processor may be configured to display a screen 3101 including the plurality of first keywords 2110 and the first candidate content 2120, on the display 250. Since the plurality of first keywords 2110 are obtained from the first content (e.g., the first content 3010 of FIG. 30), the first candidate content 2120 may be substantially identical or similar to the first content 3010. For example, in a case where the first content 3010 is an image including a house located on a roadside and clouds, the plurality of first keywords 2110 obtained from the first content 3010 may include roadside 3111, house 3112, and cloud 3113. The first candidate content 2120, which is one of contents to be generated when a prompt including the plurality of first keywords 2110 including roadside 3111, house 3112, and cloud 3113 is input into an artificial intelligence model, may be substantially identical or similar to the first content 3010. As shown in FIG. 31, the first candidate content 2120 based on the plurality of first keywords 2110 may be substantially identical to the first content 3010 shown in FIG. 30.

In operation 2904 of FIG. 29, the instructions, when executed individually or collectively by the processor, may cause the electronic device 101 to add the second keyword 2210 into the screen based on receiving the first user input.

The operation 2904 of FIG. 29 may substantially correspond to the operation 2002 of FIG. 20. Descriptions of the operation 2002 of FIG. 20 may be applied to the operation 2904 in substantially the same manner. The operation 2904 of FIG. 29 may be omitted.

In operation 2905 of FIG. 29, the instructions, when executed individually or collectively by the processor, may cause the electronic device 101 to remove at least one keyword from among the plurality of first keywords 2110 based on receiving the second user input.

The operation 2905 of FIG. 29 may substantially correspond to the operation 2502 of FIG. 25. Descriptions of the operation 2502 of FIG. 25 may be applied to the operation 2905 in substantially the same manner. The operation 2905 of FIG. 29 may be omitted.

In operation 2906 of FIG. 29, the instructions, when executed individually or collectively by the processor, may cause the electronic device 101 to receive a fifth user input for selecting second content 3210.

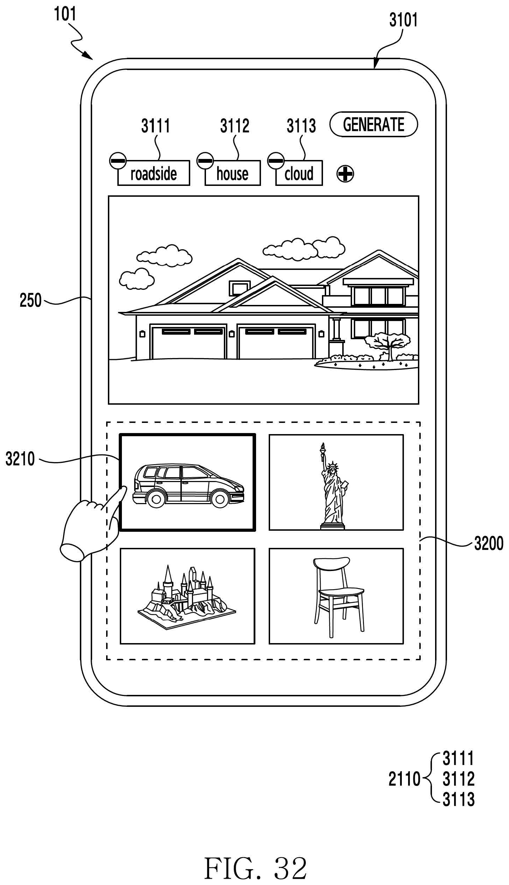

Referring to FIG. 31, the processor may be configured to display a visual object 3120 for selecting the second content 3210 to be modified by using the plurality of first keywords 2110. For example, the visual object 3120 may include text such as 'Apply' or 'Apply to other content', but is not limited thereto. The processor may be configured to display contents (e.g., contents 3200 of FIG. 32) that may be selected as the second content 3210, based on identifying a user input for the visual object 3120.

Referring to FIG. 32, the processor may be configured to display contents 3200 that may be selected as the second content 3210, via the display 250. For example, the contents 3200 may be contents stored in the memory, but are not limited thereto. The user may select the second content 3210 by providing a fifth user input for one of the contents 3200 displayed via the display 250. For example, the processor may be configured to identify content selected by the fifth user input from among the contents 3200 as the second content 3210. For example, the second content 3210 may be content including a vehicle image.

In operation 2907 of FIG. 29, the instructions, when executed individually or collectively by the processor, may cause the electronic device 101 to change the first candidate content 2120 into third candidate content 3310 based on the one or more keywords included in the screen and the second content 3210.

According to an embodiment, the processor may be configured to generate third candidate content 3310, which is one of contents that may be generated by inputting the one or more keywords included in the screen and the second content 3210 into the artificial intelligence model. The processor may be configured to change the first candidate content 2120 into the generated third candidate content 3310. In a case where the processor receives the first user input through the operation 2904, the one or more keywords included in the screen may include the plurality of first keywords 2110 and the second keyword (e.g., the second keyword 2210 of FIG. 22). In a case where the processor receives the second user input through the operation 2905, the one or more keywords included in the screen may include remaining keyword(s) excluding the at least one keyword from among the plurality of first keywords 2110.

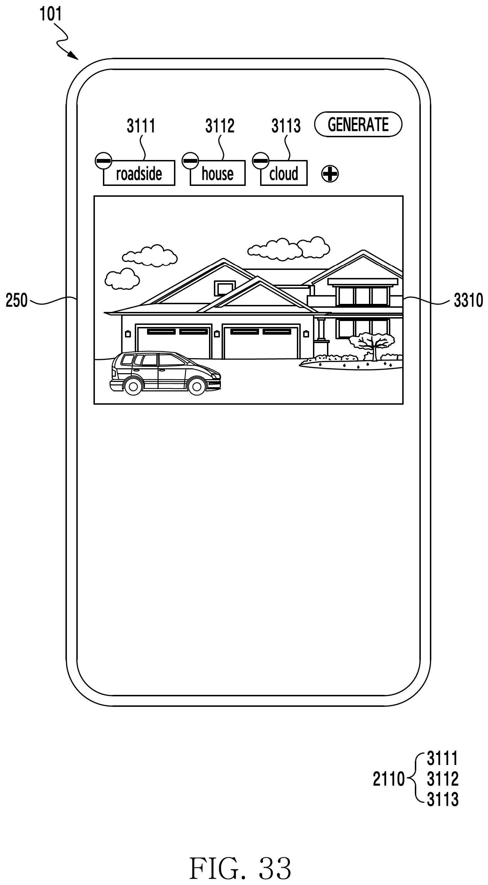

As shown in FIG. 32, in a case where the second content 3210 is content including a vehicle image, the third candidate content 3310 may be an image including a house located on a roadside, a cloud, and a car, as shown in FIG. 33. The image may be one of contents that may be generated by inputting a prompt including roadside 3111, house 3112, and cloud 3113 and the second content (e.g., the second content 3210 of FIG. 32) into the artificial intelligence model.

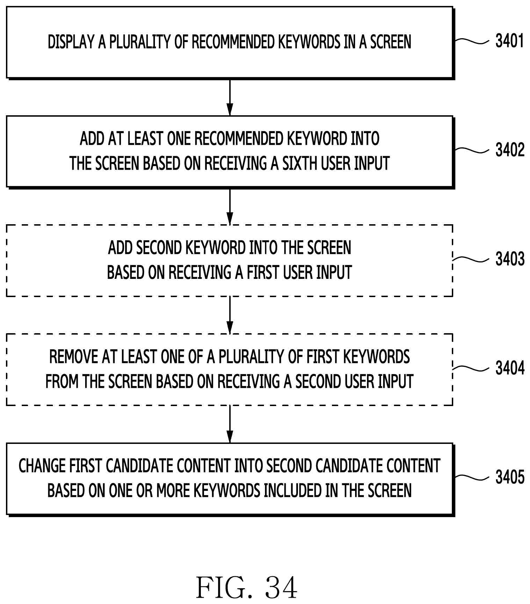

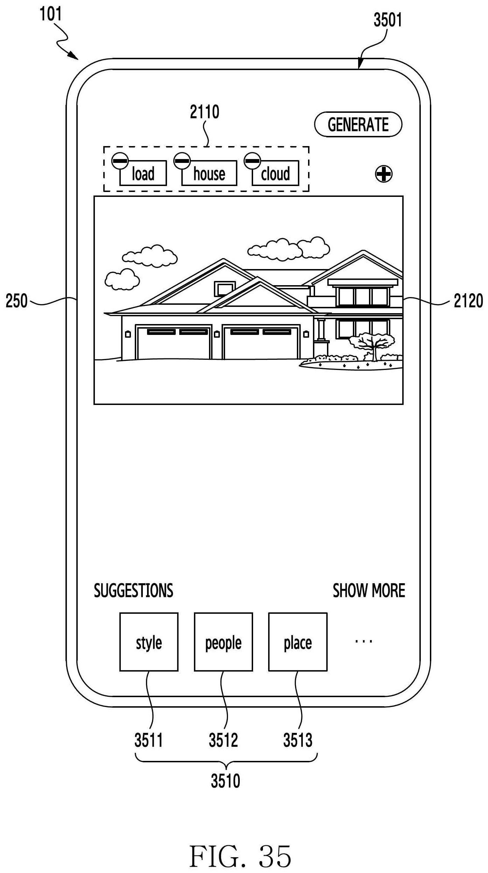

FIG. 34 is a flowchart illustrating operations in which an electronic device provides a recommended keyword according to an example embodiment. FIGS. 35, 36, and 37 illustrate processes of an electronic device according to an example embodiment changing first candidate content into second candidate content according to the recommended keyword.

The processor 210 of FIG. 2 may be configured to perform operations of the electronic device 101 described with reference to FIG. 34. Instructions stored in the memory (e.g., the memory 220 of FIG. 2), when executed individually or collectively by the processor 210, may cause the electronic device 101 to perform the operations of the electronic device 101 described in FIG. 34.

In operation 3401 of FIG. 34, the instructions, when executed individually or collectively by the processor, may cause the electronic device 101 to display a plurality of recommended keywords in a screen 3501.

According to an example embodiment, the plurality of recommended keywords may be classified by category. Referring to FIG. 35, the processor may be configured to display visual objects 3510 representing categories for a plurality of recommended keywords on the display 250 in order to suggest the plurality of recommended keywords. The visual objects 3510 may be displayed together with the plurality of first keywords 2110 and the first candidate content 2120.

For example, the visual objects 3510 may include a visual object 3511 representing recommended keywords for modifying a style of content, a visual object 3512 representing recommended keywords for adding people to content, and a visual object 3513 representing recommended keywords for modifying a place of content, but the disclosure is not limited thereto. The user may provide a sixth user input for selecting at least one recommended keyword through the visual objects 3510.

In operation 3402 of FIG. 34, the instructions, when executed individually or collectively by the processor, may cause the electronic device 101 to add at least one recommended keyword into the screen 3501 based on receiving the sixth user input.

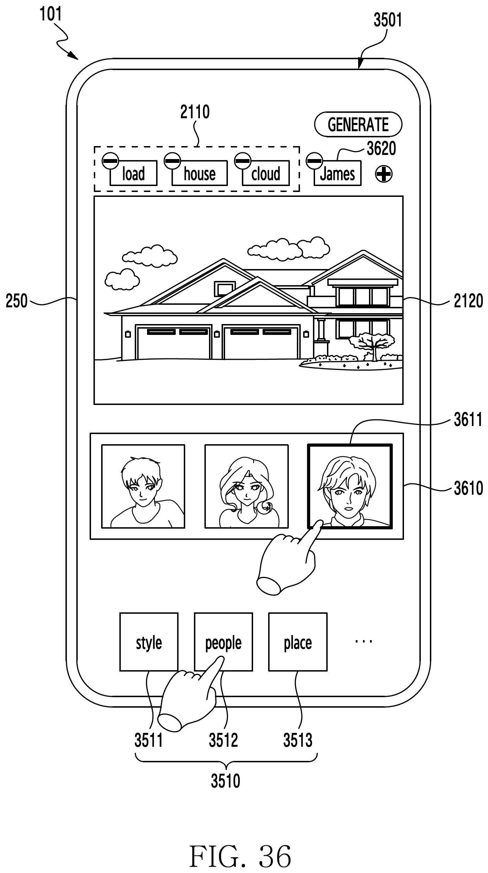

According to an example embodiment, the sixth user input may refer to a user input for selecting at least one recommended keyword from among the recommended keywords suggested by the electronic device 101. Referring to FIG. 36, the sixth user input may be provided through at least one of the visual objects 3510.

For example, the processor may be configured to, in response to a user input for the visual object 3513 representing recommended keywords for adding people to content, display visual objects 3610 representing people who may be added to the content. Information related to the people may be obtained from a frequency of appearance in contents stored in the memory, but the disclosure is not limited thereto. For example, the processor may be configured to, based on receiving the sixth user input for one visual object representing a specific person (e.g., a visual object 3611 of FIG. 36) among the visual objects 3610, add a recommended keyword 3620 related to the one visual object 3611 into the screen 3501. The recommended keyword 3620 displayed in the screen 3501 may be a name (e.g., James) or a nickname given to the specific person, or may appear as an image representing the specific person.

In operation 3403 of FIG. 34, the instructions, when executed individually or collectively by the processor, may cause the electronic device 101 to add the second keyword 2210 into the screen 3501 based on receiving the first user input.

The operation 3403 of FIG. 34 may substantially correspond to the operation 2002 of FIG. 20. Descriptions of the operation 2002 of FIG. 20 may be applied to the operation 3403 in substantially the same manner. The operation 3403 of FIG. 34 may be omitted.

In operation 3404 of FIG. 34, the instructions, when executed individually or collectively by the processor, may cause the electronic device 101 to remove at least one keyword from among the plurality of first keywords 2110 based on receiving the second user input.

The operation 3404 of FIG. 34 may substantially correspond to the operation 2502 of FIG. 25. Descriptions of the operation 2502 of FIG. 25 may be applied to the operation 3404 in substantially the same manner. The operation 3404 of FIG. 34 may be omitted.

In operation 3405 of FIG. 34, the instructions, when executed individually or collectively by the processor, may cause the electronic device 101 to change the first candidate content 2120 into the second candidate content 2410 based on one or more keywords included in the screen 3501.

According to an example embodiment, the one or more keywords included in the screen 3501 may include at least one recommended keyword added into the screen 3501 in the operation 3402. In the example described with reference to FIG. 36, in a case where the recommended keyword 3620 is added into the screen 3501 through the sixth user input for the visual object 3511, the one or more keywords included in the screen 3501 may include the plurality of first keywords 2110 and the recommended keyword 3620. The processor may be configured to change the first candidate content 2120 into the second candidate content 2410 based on the one or more keywords included in the screen 3501.

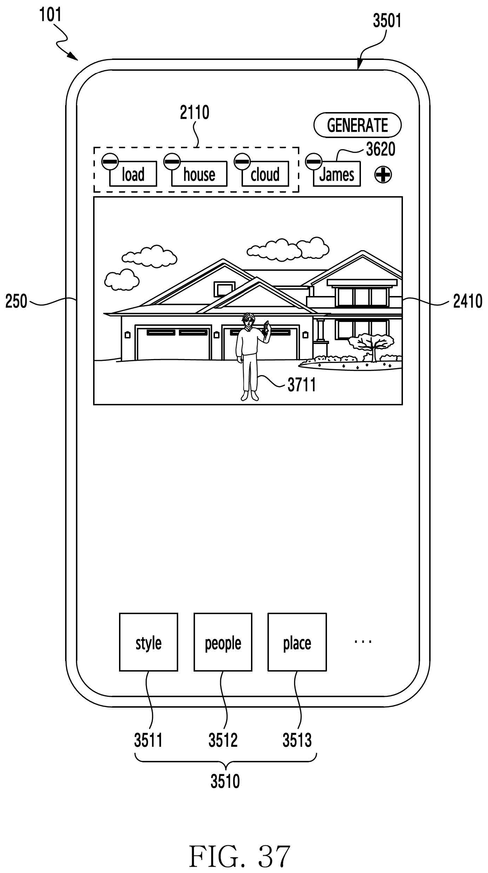

Referring to FIG. 37, the processor may be configured to change the first candidate content (e.g., the first candidate content 2120 of FIG. 35) into the second candidate content 2410. The second candidate content 2410 may be one of contents that may be generated by inputting a prompt including one or more keywords included in the screen 3501 into an artificial intelligence model. For example, in a case where the recommended keyword 3620 is added into the screen 3501 through the sixth user input for the visual object 3611, the second candidate content 2410 may include a specific person 3711 corresponding to the recommended keyword 3620.

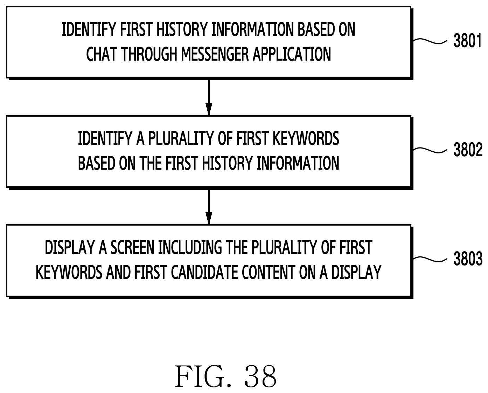

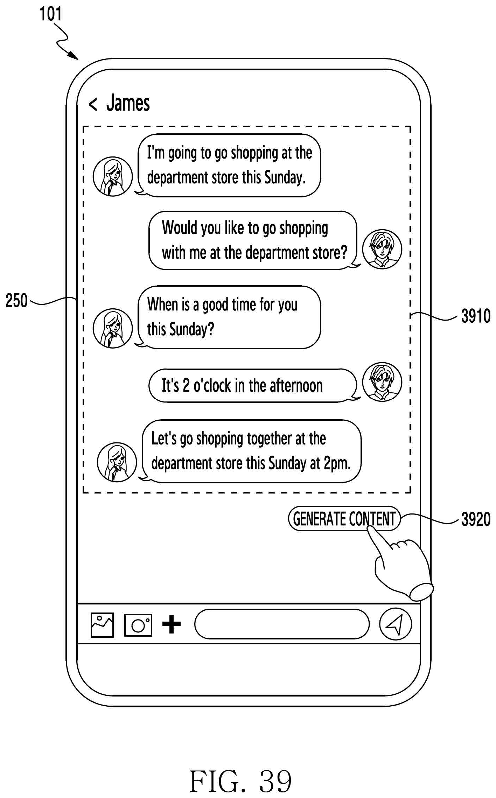

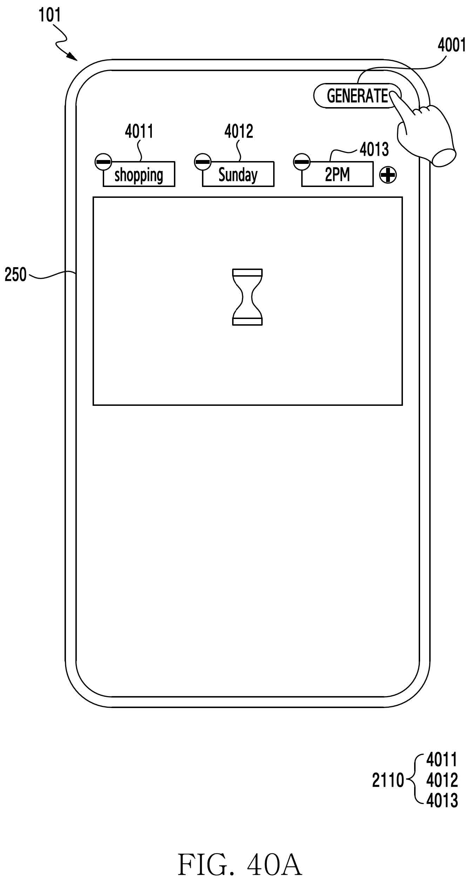

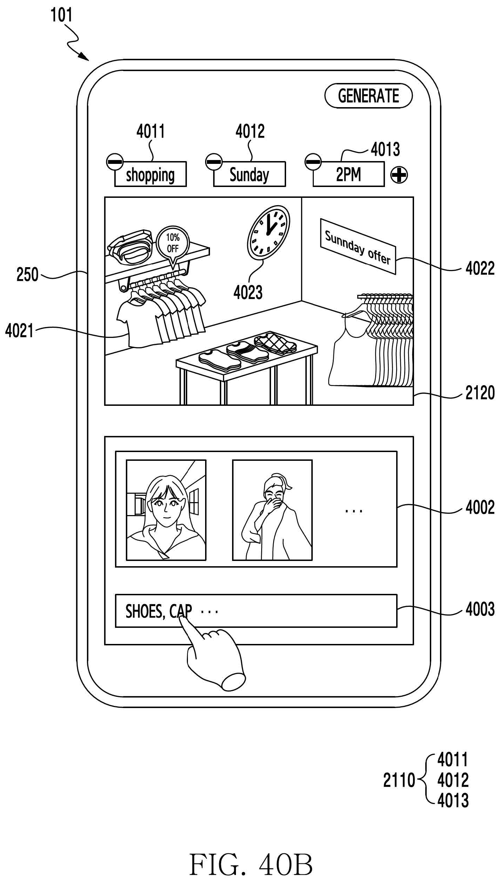

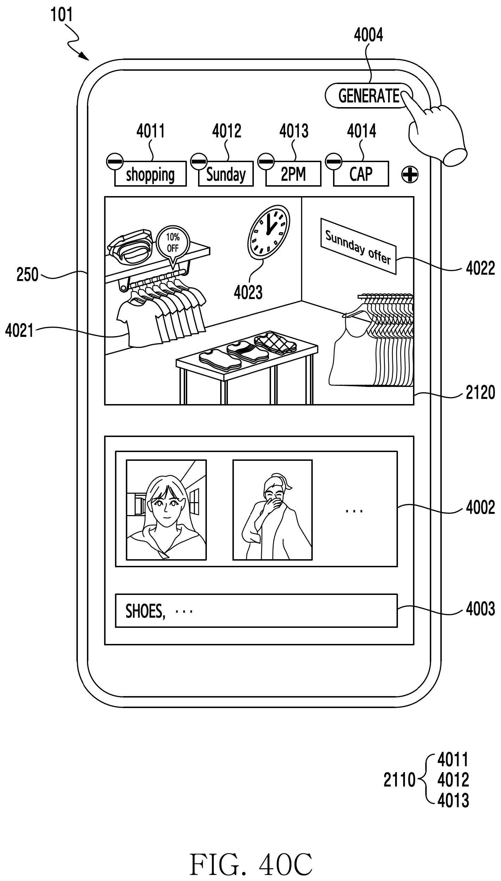

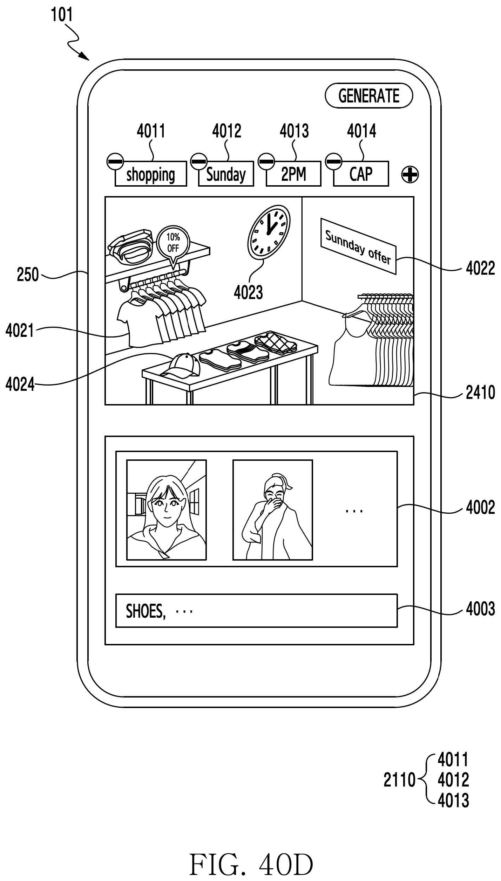

FIG. 38 is a flowchart illustrating an operation in which an electronic device according to an example embodiment provides candidate content based on a chat history of a messenger application. FIGS. 39, 40A, 40B, 40C, and 40D illustrate processes of providing a plurality of first keywords and first candidate content by an electronic device according to an example embodiment based on first history information.

The electronic device 101 according to an example embodiment may provide recommended keywords according to a usage history of the electronic device 101. The recommended keywords may refer to keywords used to modify content. For example, the electronic device 101 may provide recommended keywords based on an application execution history of the electronic device 101. As an example in which the electronic device 101 provides recommended keywords based on the execution history, an execution history of a messenger application or an execution history of a virtual keyboard application is described, but embodiments of the disclosure are not limited thereto. The electronic device 101 may provide various recommended keywords for the usage history of the electronic device 101.

The processor 210 of FIG. 2 may be configured to perform the operations of the electronic device 101 described with reference to FIG. 38. Instructions stored in the memory (e.g., the memory 220 of FIG. 2), when executed individually or collectively by the processor 210, may cause the electronic device 101 to perform the operations of the electronic device 101 described in FIG. 38.

According to an example embodiment, the plurality of first keywords 2110 may be obtained from a chat history with a user of an external electronic device through a messenger application.

In operation 3801 of FIG. 38, the instructions, when executed individually or collectively by the processor, may cause the electronic device 101 to identify first history information based on the chat through the messenger application.

Referring to FIG. 39, a user of the electronic device 101 may chat with a user of an external electronic device via a messenger application. A chat history 3910 with the user of the external electronic device via the messenger application may be stored in the memory. The processor may be configured to identify first history information based on the chat via the messenger application. The first history information may include, for example, the chat history 3910 of FIG. 39.

According to an example embodiment, a visual object 3920 for receiving a user input requesting generation of content from the chat history 3910 may be displayed on the display 250. The processor may be configured to, based on receiving a user input for the visual object 3920, display a screen shown in FIG. 40A.

In operation 3802 of FIG. 38, the instructions, when executed individually or collectively by the processor, may cause the electronic device 101 to identify a plurality of first keywords 2110 based on the first history information.

According to an example embodiment, the processor may be configured to identify a plurality of first keywords (e.g., the plurality of first keywords 2110 of FIG. 40A) based on the first history information. For example, referring to the chat history 3910 of FIG. 39, the processor may be configured to analyze keywords such as shopping 4011, Sunday 4012, and/or 2pm 4013 from the first history information, and identify the keywords analyzed from the first history information as the plurality of first keywords 2110. Referring to FIG. 40A, the processor may be configured to display, on the display 250, a screen including the plurality of first keywords 2110 identified based on the first history information and a visual object 4001 for receiving a user input for generating first candidate content 2120 based on the plurality of first keywords 2110. The processor may be configured to, based on identifying the user input through the visual object 4001, generate the first candidate content 2120 based on the plurality of first keywords 2110.

In operation 3803 of FIG. 38, the instructions, when executed individually or collectively by the processor, may cause the electronic device 101 to display a screen including the plurality of first keywords 2110 and the first candidate content 2120 on the display 250.

According to an example embodiment, the processor may be configured to display the first candidate content (e.g., the first candidate content 2120 of FIG. 40B), which may be generated by inputting a prompt including the plurality of first keywords 2110 identified based on the first history information into an artificial intelligence model, together with the plurality of first keywords 2110. For example, when the user input is provided to the visual object 4001 of FIG. 40A, the processor may be configured to display a screen including the plurality of first keywords 2110 and the first candidate content 2120 on the display 250.

Referring to FIG. 40B, the processor may be configured to display a screen 4001 including the plurality of first keywords 2110 such as shopping 4011, Sunday 4012, and/or 2pm 4013 and the first candidate content 2120 based on the plurality of first keywords 2110. The first candidate content 2120 may include images related to the plurality of first keywords 2110. For example, the first candidate content 2120 may include an image 4021 related to the keyword 'shopping' 4011, an image 4022 related to the keyword Sunday' 4012, and/or an image 4023 related to the keyword '2pm' 4013. Following the operation 3803, the operations described with reference to FIGS. 20 or the operations described with reference to FIG. 25 may be performed. For example, the processor may be configured to, based on receiving a first user input from the user, add a second keyword different from the plurality of first keywords 2110, and change the first candidate content 2120 based on the plurality of first keywords 2110 and the second keyword into second candidate content. For example, the processor may be configured to, based on receiving a second user input from the user, remove at least one keyword from among the plurality of first keywords 2110, and change the first candidate content 2120 into second candidate content based on the remaining keyword or keywords.

According to an example embodiment, the processor may be configured to provide recommended keywords and/or recommended contents based on a usage history of the electronic device 101. For example, the processor may be configured to identify the recommended keywords and/or the recommended contents from a usage history of an application, a search word history input via the electronic device 101, and/or contents stored in the memory of the electronic device 101, and display the identified recommended keywords and/or recommended contents on the display 250.

Referring to FIG. 40B, the processor may be configured to display recommended contents 4002 and recommended keywords 4003, which are based on the usage history of the electronic device 101, on the display 250. The recommended contents 4002 and the recommended keywords 4003 may be displayed together with the first candidate content 2120. In order to change the first candidate content 2120, the user may provide a user input for at least one of the recommended contents 4002 and the recommended keywords 4003 displayed on the display 250. For example, among the recommended keywords 4003, a user input for CAP may be provided.

Referring to FIG. 40C, among the recommended keywords 4003, at least one keyword for which a user input is provided may be included in the plurality of first keywords 2110. For example, in a case where the user input for CAP is provided, CAP 4014 may be added to one or more keywords included in the screen. The processor may receive a user input for a visual object 4004 for changing the first candidate content 2120 based on one or more keywords (4011, 4012, 4013, 4014) included in the screen. Since CAP 4014, which is one of the recommended keywords 4003, has been added to the one or more keywords (4011, 4012, 4013, 4014) included in the screen, the first candidate content 2120 may be changed.

Referring to FIG. 40D, the processor may change the first candidate content 2120 into the second candidate content 2410. Referring to the second candidate content 2410 shown in FIG. 40D, an image 4024 related to the added CAP 4014 may be added. The electronic device 101 according to an embodiment may enhance a user experience by providing the recommended keywords related to the usage history of the electronic device 101.

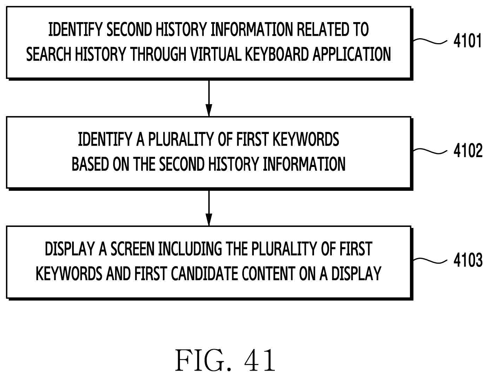

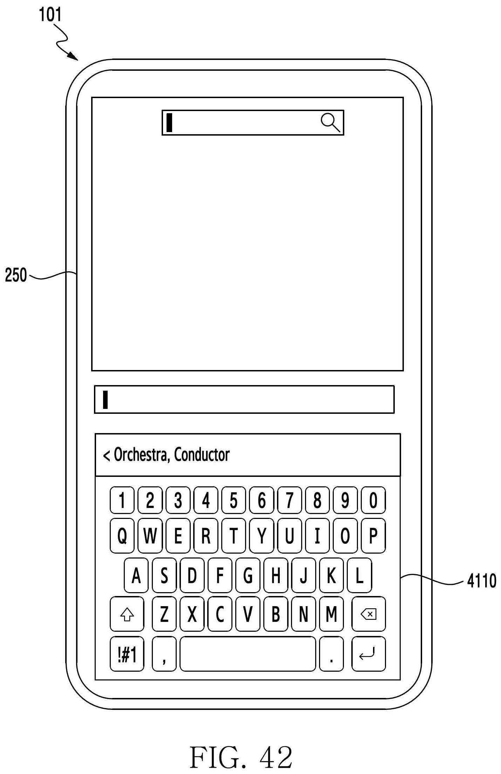

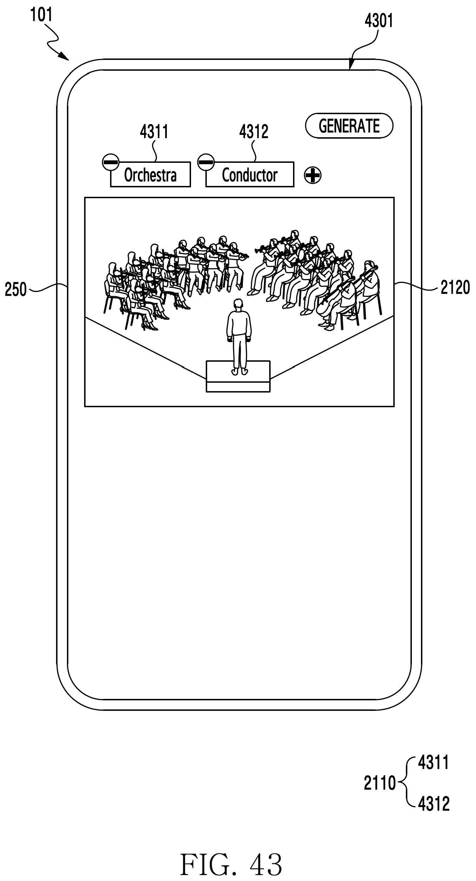

FIG. 41 is a flowchart illustrating an operation in which an electronic device according to an example embodiment provides candidate content based on a search history of a virtual keyboard application. FIG. 42 and FIG. 43 illustrate processes in which an electronic device according to an example embodiment provides a plurality of first keywords and first candidate content based on second history information.

The processor 210 of FIG. 2 may be configured to perform operations of the electronic device 101 described with reference to FIG. 41. Instructions stored in the memory (e.g., the memory 220 of FIG. 2), when executed individually or collectively by the processor 210, may cause the electronic device 101 to perform the operations of the electronic device 101 described in FIG. 41.

According to an example embodiment, the plurality of first keywords 2110 may be obtained from a search history through a virtual keyboard application.

In operation 4101 of FIG. 41, the instructions, when executed individually or collectively by the processor, may cause the electronic device 101 to, based on executing the virtual keyboard application, identify second history information related to the search history through the virtual keyboard application.

Referring to FIG. 42, the processor may be configured to display a virtual keyboard 4110 on the display 250 based on identifying execution of the virtual keyboard application. The user of the electronic device 101 may search for a specific word, using the virtual keyboard 4110 displayed based on the execution of the virtual keyboard application. The processor may be configured to identify search words input through the virtual keyboard application, and store second history information based on a search history related to the search words. For example, among the search words input through the virtual keyboard application, search words frequently input recently may be identified through the second history information.

In operation 3702 of FIG. 41, the instructions, when executed individually or collectively by the processor, may cause the electronic device 101 to identify the plurality of first keywords 2110 based on the second history information.

According to an example embodiment, the processor may be configured to identify the plurality of first keywords 2110 based on the second history information. As described above, the processor may be configured to identify the search words frequently input recently, through the second history information, and identify the search words frequently input recently as the plurality of first keywords 2110. For example, referring to FIG. 42, in a case where the search words frequently input through the virtual keyboard application are orchestra and conductor, the processor may be configured to identify orchestra and conductor as the plurality of first keywords 2110.

In operation 4103 of FIG. 41, the instructions, when executed individually or collectively by the processor, may cause the electronic device 101 to display a screen 4301 including the plurality of first keywords 2110 and the first candidate content 2120, on the display 250.

According to an example embodiment, the processor may be configured to display the first candidate content 2120, which may be generated by inputting a prompt including the plurality of first keywords 2110 identified based on the second history information into an artificial intelligence model, together with the plurality of first keywords 2110. Referring to FIG. 43, the first candidate content 2120 may include images related to the plurality of first keywords 2110. Referring to FIG. 43, the processor may be configured to display the screen 4301 including the plurality of first keywords 2110 such as orchestra 4311 and/or conductor 4312 and the first candidate content 2120 based on the plurality of first keywords 2110. The first candidate content 2120 may include images related to the plurality of first keywords 2110. For example, the first candidate content 2120 may include an image 4321 related to the keyword orchestra 4311 and/or an image 4322 related to the keyword conductor 4312. Following the operation 3703, the operations described in FIG. 20 or the operations described in FIG. 25 may be performed.

An electronic device 101 is provided. The electronic device 101 may include a processor 210 including processing circuitry. The electronic device 101 may include memory 220 storing instructions. The electronic device 101 may include a display 250. The instructions, when executed by the processor 210 individually or collectively, may cause the electronic device to obtain a first prompt 451 corresponding to first content 461 from the first content 461, while the first content 461 is displayed via the display 250. The instructions, when executed by the processor 210 individually or collectively, may cause the electronic device to display the first prompt 451 via the display 250. The instructions, when executed individually or collectively by the processor 210, may cause the electronic device 101 to receive a first user input for selecting at least a portion of the first content 461 or one or more words included in the first prompt 451. The instructions, when executed individually or collectively by the processor 210, may cause the electronic device 101 to provide a visual effect representing the at least a portion of the first content 461 or the one or more words, corresponding to the first user input.

According to an embodiment, the instructions, when executed individually or collectively by the processor 210, may cause the electronic device 101 to obtain the first prompt for generating the first content using an artificial intelligence model.

According to an embodiment, the instructions, when executed individually or collectively by the processor 210, may cause the electronic device 101 to obtain original content 601 of the first content 461 in order to obtain the first prompt 451. The instructions, when executed individually or collectively by the processor 210, may cause the electronic device 101 to generate a description representing the original content 601.

According to an embodiment, the instructions, when executed individually or collectively by the processor 210, may cause the electronic device 101 to obtain the first prompt 451 by inputting a prompt based on the description into a large language model (LLM). The instructions, when executed individually or collectively by the processor 210, may cause the electronic device 101 to obtain fourth content by inputting the first prompt 451 into an artificial intelligence model 470. The instructions, when executed individually or collectively by the processor 210, may cause the electronic device 101 to confirm or update the first prompt 451 based on a comparison between the first content 461 and the fourth content.

According to an embodiment, the instructions, when executed individually or collectively by the processor 210, may cause the electronic device 101 to identify a similarity between the first content 461 and the fourth content. The instructions, when executed individually or collectively by the processor 210, may cause the electronic device 101 to confirm the first prompt 451 based on identifying the similarity greater than a threshold value. The instructions, when executed individually or collectively by the processor 210, may cause the electronic device 101 to update the first prompt 451 so that the similarity increases, based on identifying the similarity equal to or less than the threshold value.

According to an embodiment, the description may correspond to the first prompt 451.

According to an embodiment, the instructions, when executed individually or collectively by the processor 210, may cause the electronic device 101 to store tune-up information of the first prompt 451 in the memory 220 to obtain the third content 463, using another artificial intelligence model 920 different from the artificial intelligence model 470.

According to an embodiment, the instructions, when executed individually or collectively by the processor 210, may cause the electronic device 101 to obtain the first prompt 451 from meta data of the first content 461.

According to an embodiment, the instructions, when executed individually or collectively by the processor 210, may cause the electronic device 101 to receive the first user input for selecting the one or more words included in the first prompt 451. The instructions, when executed individually or collectively by the processor 210, may cause the electronic device 101 to receive a second user input for generating third content 463 to be changed from second content 462, using the one or more words 452 identified based on receiving the first user input. The instructions, when executed individually or collectively by the processor 210, may cause the electronic device 101 to generate a second prompt 454 based on the one or more words 452. The instructions, when executed individually or collectively by the processor 210, may cause the electronic device 101 to obtain the third content 463 by inputting the second prompt 454 into the artificial intelligence model 470.

According to an embodiment, the instructions, when executed individually or collectively by the processor 210, may cause the electronic device 101 to control the display 250 to simultaneously display the first content 461 and the second content 462.

According to an embodiment, the electronic device 101 may further include a camera 230. The second content 462 may include content 1005 displayed via another electronic device 1003 included in an external environment captured through the camera 230.

According to an embodiment, the instructions, when executed individually or collectively by the processor 210, may cause the electronic device 101 to identify an object related to the first prompt 451 among one or more objects included in the second content 1120. The instructions, when executed individually or collectively by the processor 210, may cause the electronic device 101 to display a virtual object (1111; 1112; 1121; 1122) for representing the object related to the first prompt 451 within the first content 1110 and the second content 1120.

According to an embodiment, the instructions, when executed individually or collectively by the processor 210, may cause the electronic device 101 to, based on receiving a third user input for a partial region 1211 of the first content 1210, obtain the first prompt 451 corresponding to the partial region 1211.

According to an embodiment, the instructions, when executed individually or collectively by the processor 210, may cause the electronic device 101 to obtain the first prompt 451 based on one or more user-preferred contents.

According to an embodiment, the first prompt 451 may be a prompt that generates content corresponding to the first content 461, when input to the artificial intelligence model 470.

A method performed by an electronic device 101 including a display 250 is provided. The method may include obtaining a first prompt 451 corresponding to first content 461 from the first content 461, while the first content 461 is displayed via the display 250. The method may include displaying the first prompt 451 via the display 250. The method may include receiving a first user input for selecting at least a portion of the first content 461 or one or more words included in the first prompt 451. The method may include providing a visual effect corresponding to the at least a portion of the first content 461 or the one or more words, based on the first user input.

According to an embodiment, the method may further include obtaining the first prompt for generating the first content using an artificial intelligence model.

According to an embodiment, the method may further include obtaining the first prompt 451 from meta data of the first content 461.

According to an embodiment, the method may further include receiving a first user input for selecting one or more words included in the first prompt 451. The method may further include receiving a second user input for generating third content 463 to be changed from second content 462, using the one or more words 452 identified based on receiving the first user input. The method may further include generating a second prompt 454 including the one or more words 452 based on receiving the second user input. The method may further include obtaining the third content 463 by inputting the second prompt 454 into the artificial intelligence model 470.

According to an embodiment, the method may further include obtaining the first prompt 451 based on one or more user-preferred contents.

An electronic device 101 is provided. The electronic device 101 may include a processor 210 including processing circuitry. The electronic device 101 may include a memory 220 storing instructions. The electronic device 101 may include a display 250. The instructions, when executed individually or collectively by the processor 210, may cause the electronic device 101 to display, on the display 250, a screen including a plurality of first keywords 2110 and first candidate content 2120 based on the plurality of first keywords 2110. The instructions, when executed individually or collectively by the processor 210, may cause the electronic device 101 to, while displaying the screen on the display 250, add a second keyword 2210 into the screen based on receiving a first user input for adding the second keyword 2210, remove at least one keyword from among the plurality of first keywords 2110 from the screen based on receiving a second user input for removing the at least one keyword, and change the first candidate content 2120 to second candidate content 2410 based on one or more keywords included in the screen.

According to an embodiment, the instructions, when executed individually or collectively by the processor 210, may cause the electronic device 101 to generate content corresponding to the second candidate content 2410, based on receiving a third user input for generating the content corresponding to the second candidate content 2410.

According to an embodiment, the instructions, when executed individually or collectively by the processor 210, may cause the electronic device 101 to obtain the plurality of first keywords 2110 from first content 3010, based on receiving a fourth user input for selecting the first content 3010. The instructions, when executed individually or collectively by the processor 210, may cause the electronic device 101 to display, on the display 250, the screen including the plurality of first keywords 2110 and the first candidate content 2120 based on the plurality of first keywords 2110 based on obtaining the plurality of first keywords 2110 from the first content 3010.

According to an embodiment, the instructions, when executed individually or collectively by the processor 210, may cause the electronic device 101, while displaying the screen on the display 250, to change the first candidate content 2120 to third candidate content 3310 based on the one or more keywords included in the screen and second content 3210, based on receiving a fifth user input for selecting the second content 3210.

According to an embodiment, the instructions, when executed individually or collectively by the processor 210, may cause the electronic device 101 to display a plurality of recommended keywords different from the plurality of first keywords 2110 within the screen. The instructions, when executed individually or collectively by the processor 210, may cause the electronic device 101 to add at least one recommended keyword into the screen, based on receiving a sixth user input for selecting the at least one recommended keyword from among the plurality of recommended keywords.

According to an embodiment, the instructions, when executed individually or collectively by the processor 210, may cause the electronic device 101 to identify first history information based on a conversation through a messenger application. The instructions, when executed individually or collectively by the processor 210, may cause the electronic device 101 to identify the plurality of first keywords 2110 based on the first history information. The instructions, when executed individually or collectively by the processor 210, may cause the electronic device 101 to display, on the display 250, the screen including the plurality of first keywords 2110 and the first candidate content 2120 based on the plurality of first keywords 2110, based on identifying the plurality of first keywords 2110 from the first history information.

According to an embodiment, the instructions, when executed individually or collectively by the processor 210, may cause the electronic device 101 to identify second history information based on a search history through a virtual keyboard application. The instructions, when executed individually or collectively by the processor 210, may cause the electronic device 101 to identify the plurality of first keywords 2110 based on the second history information. The instructions, when executed individually or collectively by the processor 210, may cause the electronic device 101 to display, on the display 250, the screen including the plurality of first keywords 2110 and the first candidate content 2120 based on the plurality of first keywords 2110, based on identifying the plurality of first keywords 2110 from the second history information.

According to an embodiment, the instructions, when executed individually or collectively by the processor 210, may cause the electronic device 101 to transmit the second candidate content 2410 to a counterpart based on receiving a seventh user input.

According to an embodiment, the plurality of first keywords 2110 may be located around the first candidate content 2120 within the screen.

According to an embodiment, the instructions, when executed individually or collectively by the processor 210, may cause the electronic device 101 to display a visual object 2610 for the second user input on the display. The instructions, when executed individually or collectively by the processor 210, may cause the electronic device 101 to remove the at least one keyword from among the plurality of first keywords 2110 within the screen, based on receiving the second user input for the visual object 2610.

According to an embodiment, the first candidate content may correspond to content generated as a prompt including the plurality of first keywords is input into an artificial intelligence model.

According to an embodiment, the plurality of first keywords may correspond to feature keywords included in a prompt input into an artificial intelligence model to generate the first candidate content.

According to an embodiment, the electronic device may include a wearable device.

A method of an electronic device is provided. The method may include displaying a screen including a plurality of first keywords and first candidate content based on the plurality of first keywords, on a display of the electronic device. The method may include adding a second keyword into the screen based on receiving a first user input for adding the second keyword, while displaying the screen on the display. The method may include removing at least one keyword from among the plurality of first keywords from the screen, based on receiving a second user input for removing the at least one keyword. The method may include changing the first candidate content to second candidate content based on one or more keywords included in the screen.

According to an embodiment, the method may further include generating content corresponding to the second candidate content, based on receiving a third user input for generating the content corresponding to the second candidate content.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. In an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect e.g., importance or order. In a case where an element (e.g., a first element) is referred to, with or without the term "operatively" or "communicatively", as "coupled" or "connected" to/with another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, 'logic', 'logic block', 'part', or 'circuit'. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory 130 of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor comprising processing circuitry;
a memory storing instructions; and
a display,
wherein the instructions, when executed by the processor individually or collectively, cause the electronic device to:
display a screen, on the display, including a plurality of first keywords and a first candidate content based on the plurality of first keywords,
while displaying the screen on the display, add a second keyword to the screen based on receiving a first user input for adding the second keyword, or remove at least one keyword from the plurality of first keywords in the screen based on receiving a second user input for removing at least one keyword from the plurality of first keywords, and
change the first candidate content to a second candidate content based on one or more keywords included in the screen.

2. The electronic device of claim 1,
wherein the instructions, when executed by the processor individually or collectively, cause the electronic device to generate a content corresponding to the second candidate content based on receiving a third user input for generating the content corresponding to the second candidate content.

3. The electronic device of claim 1 or 2,
wherein the instructions, when executed by the processor individually or collectively, cause the electronic device to:
obtain the plurality of first keywords from a first content based on receiving a fourth user input for selecting the first content, and
display the screen, on the display, including the plurality of first keywords and the first candidate content based on the plurality of first keywords, based on obtaining the plurality of first keywords from the first content.

4. The electronic device of claim 3,
wherein the instructions, when executed by the processor individually or collectively, cause the electronic device to change the first candidate content to a third candidate content based on receiving a fifth user input for selecting a second content while displaying the screen on the display, wherein the third candidate content is based on one or more keywords included in the screen and the second content.

5. The electronic device of any one of claims 1 to 4,
wherein the instructions, when executed by the processor individually or collectively, cause the electronic device to:
display, in the screen, a plurality of recommended keywords different from the plurality of first keywords, and
add at least one recommended keyword of the plurality of recommended keywords to the screen based on receiving a sixth user input for selecting the at least one recommended keyword of the plurality of recommended keywords.

6. The electronic device of any one of claims 1 to 5,
wherein the instructions, when executed by the processor individually or collectively, cause the electronic device to:
identify first history information based on conversations through a messenger application,
identify the plurality of first keywords based on the first history information, and
display the screen, on the display, including the plurality of first keywords and the first candidate content based on the plurality of first keywords, based on identifying the plurality of first keywords from the first history information.

7. The electronic device of any one of claims 1 to 6,
wherein the instructions, when executed by the processor individually or collectively, cause the electronic device to:
identify second history information based on a search history through a virtual keyboard application,
identify the plurality of first keywords based on the second history information, and
display the screen, on the display, including the plurality of first keywords and the first candidate content based on the plurality of first keywords, based on identifying the plurality of first keywords from the second history information.

8. The electronic device of any one of claims 1 to 7,
wherein the instructions, when executed by the processor individually or collectively, cause the electronic device to transmit the second candidate content to a counterpart device based on receiving a seventh user input.

9. The electronic device of any one of claims 1 to 8,
wherein the plurality of first keywords are positioned around the first candidate content in the screen.

10. The electronic device of any one of claims 1 to 9,
wherein the instructions, when executed by the processor individually or collectively, cause the electronic device to:
display a visual object, on the display, for the second user input, and
remove the at least one keyword of the plurality of first keywords in the screen based on receiving the second user input with respect to the visual object.

11. The electronic device of any one of claims 1 to 10,
wherein the first candidate content corresponds to content generated by inputting, to an artificial intelligence model, a prompt including the plurality of first keywords.

12. The electronic device of any one of claims 1 to 11,
wherein the plurality of first keywords correspond to feature keywords included in a prompt input to an artificial intelligence model in order to generate the first candidate content.

13. The electronic device of any one of claims 1 to 12,
wherein the electronic device comprises a wearable device.

14. A method of an electronic device, the method comprising:
displaying a screen, on a display of the electronic device, including a plurality of first keywords and a first candidate content based on the plurality of first keywords;
while displaying the screen on the display, adding a second keyword to the screen based on receiving a first user input for adding the second keyword;
removing at least one keyword from the plurality of first keywords in the screen based on receiving a second user input for removing the at least one keyword from the plurality of first keywords; and
changing the first candidate content to a second candidate content based on one or more keywords included in the screen.

15. The method of claim 14, further comprising:
generating content corresponding to the second candidate content based on receiving a third user input for generating the content corresponding to the second candidate content.
